Europäisches Patentamt

European Patent Office

Office européen des brevets

(11) Veröffentlichungsnummer: **0 195 255**
**A2**

(12) **EUROPÄISCHE PATENTANMELDUNG**

(21) Anmeldenummer: **86102041.0**

(22) Anmeldetag: **18.02.86**

(51) Int. Cl.⁴: **G 05 D 23/19**
**F 24 D 19/10**

(30) Priorität: **18.02.85 DE 3505600**
**18.02.85 DE 3505601**
**18.02.85 DE 3505602**
**18.02.85 DE 3505603**

(43) Veröffentlichungstag der Anmeldung:
**24.09.86 Patentblatt 86/39**

(84) Benannte Vertragsstaaten:
**AT BE CH DE FR GB IT LI NL SE**

(71) Anmelder: **HAPPEL GmbH & Co.**
**Südstrasse**
**D-4690 Herne 2(DE)**

(72) Erfinder: **Kantner, Alexander, Dipl.-Phys. Dr. rer. nat.**
**Paul-Windgassen Strasse 99**
**D-5630 Remscheid 11(DE)**

(74) Vertreter: **Patentanwaltsbüro Cohausz & Florack**
**Postfach 14 01 47**
**D-4000 Düsseldorf 1(DE)**

(54) **Verfahren und Vorrichtung zur Regelung der Temperatur in Räumen.**

(57) Die Erfindung betrifft ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle gesteuert wird. Für den Gesamtmassenstrom ist ein Sollwert-Band angelegt, innerhalb dessen die zulässigen Werte des Gesamtmassenstroms liegen. Das gesamte Sollwert-Band ist mit der Ober- und Untergrenze entsprechend den Anforderungen verschieblich, und in den Bereichen außerhalb des Sollwert-Bandes ist der jeweilige Istwert zum Sollwert hin regelbar.

FIG. 1

COHAUSZ & FLORACK

PATENTANWALTSBÜRO

SCHUMANNSTR. 97 D-4000 DÜSSELDORF 1

Telefon: (0211) 683346            Telex: 0858 6513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER

0195255

— 1 —

45255EP
17.02.86

HAPPEL GmbH & Co.

D - 4690 Herne 2

**Verfahren und Vorrichtung zur Regelung der Temperatur in Räumen**

Die Erfindung betrifft gemäß einem ersten übergeordneten Erfindungsgedanken ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle gesteuert wird und ist gemäß einem zweiten übergeordneten Erfindungsgedanken auf eine Vorrichtung zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle gesteuert wird, mit einer Einrichtung zur Messung des Gesamtmassenstroms des Wärmeträgermediums und einer Regeleinrichtung, durch welche in Abhängigkeit von der Messung desselben die Zu- oder Abfuhr von Wärmeenergie an das bzw. von dem Wärmeträgermedium beeinflußbar ist, gerichtet, die sich vorzugsweise zur Durchführung des Verfahrens nach dem ersten übergeordneten Erfindungsgedanken eignen soll.

Hierbei umfaßt der Begriff des Regelns (im späteren meist auch temperieren genannt) sowohl das Heizen als auch das Kühlen von Räumen, welche ihrerseits Aufenthaltsräume für Menschen oder Tiere oder aber auch Lagerräume für empfindliche Güter oder Maschinen bzw. Apparaturen, wie beispielsweise Computer oder dergleichen, oder aber auch Räume sein können, in denen bestimmte Behandlungen an toter Materie oder aber auch an Lebewesen, wie beispielsweise Bakterien- oder Virenkulturen oder dergleichen, vorgenommen werden sollen, die in solchen Fällen üblicherweise als Zuchträume bezeichnet werden. Entsprechend werden solche Räume entweder durch mit einer Wärmequelle (im späteren meist auch Wärmeerzeuger genannt) verbundene Heizeinrichtung (im späteren meist auch Heizkörper genannt) oder aber durch mit einer Kältequelle (im späteren meist auch Kälteerzeuger) verbundene Kühleinrichtungen geregelt (bzw. im späteren meist auch temperieren genannt), wobei diese Heizeinrichtungen (Heizkörper) oder Kühleinrichtungen jeweils mit Thermostatventilen (im späteren meist auch automatisch wirkende Drosseleinrichtungen genannt) ausgerüstet sind.

Bei zu beheizenden Aufenthaltsräumen für Menschen wird bislang die Temperatur in diesen durch Steuerung der Temperatur des Wärmeträgermediums im Heizungsvorlauf (Vorlauftemperatur) einerseits und durch Regelung der Raumtemperatur andererseits beeinflußt. Die Anpassung der Vorlauftemperatur des Heiznetzes an den Wärmebedarf eines zu beheizenden Raumes oder eines Hauses erfolgt durch eine sogenannte außentemperatur- oder witterungsgeführte Vorlauftemperatursteuerung, bei der in Abhängigkeit von der durch einen Außentemperaturfühler erfaßten Außentemperatur mit Hilfe einer als "Heizkurve" bezeichneten Heizkennlinie die entsprechende Vorlauftemperatur gewählt wird. Hierbei ist man bemüht, die Heizkennlinie in jedem Fall so zu legen, daß sämtliche automatischen Drosseleinrichtungen der an das Heiznetz angeschlossenen Heizkörper, die bevorzugt in Form der weitverbreiteten thermostatischen Heizkörperventile ausgebildet sein können, die meistens einen Dehnstoffregler enthalten, in ihrem Regelbereich arbeiten. Daraus ergeben sich aber erhebliche Abweichungen zwischen der Sollkennlinie und der vom Heizungsinstallateur eingestellten Kennlinie. Erfahrungsgemäß pflegt nämlich der Heizungsinstallateur, da einerseits die nichtlineare Abhängigkeit der Außentemperatur von der Vorlauftemperatur nur durch eine Schar von Heizkennlinien wiederzugeben ist, wobei ihm der individuelle Zusammenhang von Außentemperatur und Vorlauftemperatur nicht bekannt ist, und andererseits auch noch weitere heizungsanlagenspezifische und/oder durch die Eigenheiten des zu beheizenden Raumes bzw. Hauses als Gesamtheit einer Vielzahl von Räumen bedingte Einflußgrößen zu berücksichtigen sind, vorsorglich eine hohe Kennlinie zu wählen, um sicherzustellen, daß die Vorlauftemperatur ausreichend hoch ist, um auch unter extremen Betriebsbedingungen, die einerseits durch extreme Schwankungen der Außentemperatur und andererseits durch extreme Anforderungen an die Raumtemperatur und nicht zuletzt durch ihm im einzelnen nicht bekannte ungünstige Eigenschaften des die zu beheizenden Räume bildenden Gebäudes und/oder der Heizungsanlage insbesondere bezüglich Wärmeverlusten durch Wärmeableitung und/oder -abstrahlung einerseits und/oder Wärmeaufnahme durch beispielsweise Sonneneinstrahlung andererseits, und zwar dies möglicherweise auch noch gleichzeitig bezüglich unterschiedlich gelegener Räume, bedingt sein können, die gewünschten Raumtemperaturen zu gewährleisten. Abgesehen davon, daß somit das Einschätzen der Art der benötigten Heizkennlinie dem Heizungsinstallateur überlassen bleibt und damit ungeachtet einer etwaigen Möglichkeit nachträglicher Korrekturnachstellung hinsichtlich seiner Güte allein von dessen individueller Erfahrung abhängt, ist erfahrungsgemäß auf diese Weise nicht einmal eine brauchbare Annäherung an eine den tatsächlichen individuellen Verhältnissen gerecht werdende Sollkennlinie erreichbar, vielmehr sind häufig sogar beträchtliche Fehler durch falsches Einschätzen der Steilheit der Kennlinienkurve und deren Nullpunktes die Folge. Ein weiterer Mangel ist die schlechte Einstellsystematik. Abgesehen davon, daß häufig eine Anpassung der Heizkennlinie an die Gegebenheiten im über die Heizungsanlage mit Wärmeenergie bedienten Verbraucherkreis gar nicht möglich ist, ist für die Einstellung der jeweiligen Heizkennlinie die Kenntnis der Verhaltensweise der gesamten Heizungsanlage in bezug auf die Abhängigkeit ihrer einzelnen Betriebsparameter von den relevanten äußeren Einflußgrößen über mindestens zwei Heizperioden, das heißt zwei bis drei Jahre, unerläßlich. Hierdurch gestaltet sich die Optimierungsanpassung der Heizkennlinie schwierig und langwierig, und die nachteiligen Folgen hiervon sind unnötig hohe Stillstands- und Abstrahlungsverluste sowohl des Wärmeerzeugers, z. B. eines Heizkessels, als auch der Rohrleitungen des Heiznetzes. Nachteilig ist ferner, daß außentemperaturunabhängige Einflußgrößen, wie beispielsweise die Lüftungsgewohnheiten der Bewohner, die Sonneneinstrahlung durch Fensterflächen oder die Abwärme elektrischer Geräte, wie z. B. von Kühlschränken, Elektroherden oder Kopiergeräten oder dergleichen, bei bekannten witterungsgeführten Vorlauftemperatursteuerungen selbst bei verhältnismäßig präzise eingestellten Heizkennlinien systembedingt nicht berücksichtigt werden können.

Es ist ersichtlich, daß es sich bei solchen bekannten Vorlauftemperatursteuerungen bezüglich der Raumtemperatur um reine Steuerungen
handelt, da eine Rückmeldung der Raumtemperatur fehlt.

Im Rahmen der individuellen Raumtemperaturregelung hat man daher zur
individuellen Beeinflussung der Raumtemperatur in den einzelnen
Räumen den Heizkörpern jeweils eine automatisch wirkende Drosseleinrichtung zugeordnet, die den in den jeweiligen Heizkörper eintretenden Massenstrom des Wärmeträgermediums in Abhängigkeit der Raum-
Ist-Temperatur von einer Raum-Soll-Temperatur regelt. Diese selbsttätig wirkenden Drosseleinrichtungen können als Kombination eines
Heizkörperventils mit auf dieses wirkendem Regelgerät mit Sollwertgeber, Temperaturfühler und Regler ausgebildet sein, es haben jedoch
hierfür zusammenfassend als Heizkörperthermostat bezeichnete thermostatische Heizkörperventile weitverbreiteten Anklang gefunden, die
meist als Dehnstoffregler oder aber als Dehnkörperregler mit einem
als gekapselter und gasgefüllter Wellrohrkörper ausgebildeten Dehnkörper ausgeführt sind. Diese automatisch wirkenden Drosseleinrichtungen regeln zwar jeweils selbsttätig die Raumtemperatur, wobei
der Massenstrom des den jeweiligen Heizkörper durchfließenden Wärmeträgermediums selbst eine Funktion der Regelabweichung, der Vorlauftemperatur, des in der gesamten Heizungsanlage herrschenden Drucks
und nicht zuletzt auch spezieller Kenngrößen des Thermostatventils
ist, sie sind jedoch proportional wirkende Regler und können die
Raumtemperatur wegen der bleibenden Regelabweichung in der Größenordnung von in ungünstigen Fällen sogar bis zu 6 K nur ungenau auf
den gewünschten Temperaturwert einregeln. Diese treten systembedingt
dann auf, wenn die empirisch gewählte Heizkurve aufgrund ungünstiger
Auslegung oder Wahl oder aufgrund von Fremdeinflüssen nicht dem tatsächlichen Angebot an Wärmeenergie entspricht. Dies führt nicht
selten zu dem Bedürfnis, lüften zu müssen, das seinerseits wieder zu
erfahrungsgemäß nicht unerheblichen Energieverlusten zu führen
pflegt.

Für den Sonderfall kontinuierlich dem Heizungsvorlauf zugeführten Wärmeträgermediums, was entweder durch einen Wärmeerzeuger in Form eines Heizkessels mit kontinuierlich arbeitendem gas- oder ölbefeuertem Brenner oder aber einer kontinuierlich arbeitenden Übergabestation bzw. eines Wärmetauschers einer Fernwärmeversorgung oder aber auch eines Heizkessels mit im Ein-Aus-Betrieb arbeitendem Öl- oder Gasbrenner und diesem Heizkessel nachgeschaltetem Mehr-Wege-Mischer zu verwirklichen ist, hat man daher bereits versucht, von der Führung über die Außentemperatur und der Auswahl einer anlagenspezifischen Heizkennlinie unabhängig zu werden. Hierfür hat man im Gegensatz zu älteren außentemperatur- bzw. witterungsgeführten Raumtemperatursteuerungen, bei denen die Vorlauftemperatur des Wärmeträgermediums gemessen und als Regelgröße dem Regler aufgeschaltet wurde, während die Führungsgröße entweder von Hand eingestellt oder in Abhängigkeit von der Außentemperatur geführt wurde die Vorlauftemperatur zur Stellgröße für den Regler gemacht, während die Regelgröße der Gesamtmassenstrom im Verbraucherkreis der Heizungsanlage ist. Dabei wirkt das Stellsignal des Durchflußreglers entweder auf das Stellglied für die Energiezufuhr zum Wärmeerzeuger oder auf einen Mehr-Wege-Mischer, der in bekannter Weise den Anteil des vom Wärmeerzeuger kommenden hocherhitzten Wärmeträgermediums in dem vom Kesselkreislauf getrennten Verbraucherkreislauf so einstellt, daß eine vorgegebene Vorlauftemperatur aufrecht erhalten wird.

Hierbei handelt es sich zwar erstmalig bereits um eine echte Regelung der Raumtemperatur, da die sich im Zuge der durch Veränderung der Vorlauftemperatur des vom Wärmeerzeuger abgegebenen Wärmeträgermediums oder der Veränderung des Anteils desselben am im Verbraucherkreislauf zirkulierenden Wärmeträgermedium erfolgenden Veränderung der Energiezufuhr zum Verbraucherkreislauf einstellende Veränderung des Gesamtmassenstroms des Wärmeträgermediums als Rückmeldegröße benutzt wird, um die Abweichung des Gesamtmassenstroms von seinem vorgegebenen Sollwert (Regeldifferenz des Gesamtmassenstroms) zu eliminieren.

Diese bekannte Art der Regelung weist jedoch eine Zahl von gravierenden Nachteilen auf:

Sie ist auf Heizungsanlagen mit kontinuierlicher Zufuhr der Wärmeleistung zum im Heizungsvorlauf der Heizanlage befindlichen Wärmeträgermedium beschränkt, deren Verbreitung jedoch beschränkt ist. Für die weit verbreiteten Heizungsanlagen mit diskontinuierlich arbeitendem Wärmeerzeuger, der dann beispielsweise als Heizkessel mit im Ein-Aus-Betrieb arbeitendem öl- bzw. gasbefeuertem Brenner oder einer entsprechend betriebenen elektrischen Heizeinrichtung oder als diskontinuierlich betriebene Wärmepumpe ausgebildet sein kann, ist diese bekannte Regelung ungeeignet, da für Ein-Aus-Betrieb stets zwei Schaltpunkte, nämlich ein Einschalt- und ein Ausschaltpunkt, gegeben sein müssen, diese bekannte Art der Regelung jedoch nur eine Führungsgröße in Form des vorgegebenen Sollwertes des Gesamtmassenstroms zur Verfügung hat.

Weiterhin ist diese bekannte Regelung nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch kann erfahrungsgemäß eine Regelung dieser bekannten Art nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei dieser bekannten Regelung zwar eine Einstellbarkeit des Sollwertes, nicht aber eine werkseitige und schon gar nicht eine durch den Benutzer vorzunehmende Umschaltung auf verschiedene Betriebszustände vorgesehen ist. Das führt dazu, daß in einem solchen Falle von Auslegung für beispielsweise normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden kann, jedoch es in einem solchen Falle nicht möglich ist, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Wird hingegen diese bekannte Regelung für solchen Komfortbetrieb ausgelegt, so ergeben sich aufgrund der verhältnismäßig hohen Vorlauftemperatur des Wärmeträgermedium verhältnismäßig hohe Verluste des gesamten Heizungssystems durch Wärmeableitung und -abstrahlung. Eine Auslegung für ein als Sparbetrieb zu bezeichnendes Betriebsverhalten ist bei dieser bekannten Regelung nicht sinnvoll, da dadurch die in den einzelnen Räumen erzielbare Raumtemperatur noch weiter begrenzt wird. Eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) ist bei dieser bekannten Regelung nicht möglich.

Nachteilig hinzu kommt weiterhin, daß ungeachtet des ausgelegten Betriebszustandes diese bekannte Art der Regelung trotz ihrer lediglich kontinuierlich möglichen Betriebsweise notwendigerweise eine verhältnismäßig große Zahl von Regeleingriffen zur Folge hat, um den Gesamtmassenstrom als Führungsgröße auf Konstanz zu regeln. Dies gilt insbesondere für aufgrund beispielsweise äußerer Einflüsse oder vom Benutzer veranlaßte schnelle Änderungen der Führungsgröße selbst und/oder der Regelabweichung von dieser. Je größer aber die Zahl von Regeleingriffen ist, desto mehr wird erfahrungsgemäß die gesamte Regelvorrichtung einschließlich besonders auch der Stellglieder derselben in Form der je nach Auslegung der Anlage mit Heizkessel oder Wärmepumpe oder Wärmetauscherstation als Wärmeerzeuger erforderlichen Brenner bzw. Kompressoren bzw. elektrischen Heizelemente bzw. Verdampferventile bzw. Überströmventile bzw. Absperr- oder Regelventile für die Zuführung des Primärenergieträgermediums verschleißmäßig belastet und dadurch die Lebensdauer dieser einzelnen Komponenten ungünstig beeinflußt, zumindest jedoch die Intervallzeit zwischen notwendigen Inspektionen bzw. Wartungen nicht unerheblich nachteilig verkürzt. Außerdem ist auch bei Regeleingriff in eine mit kontinuierlicher Einspeisung der Wärmeleistung in den Heizungsvorlauf arbeitende Heizungsanlage mit steigender Zahl solcher Regeleingriffe eine vermehrte Belastung der Umwelt mit Schadstoffimmissionen zu erwarten.

Soweit bei Kühlanlagen, die eine Vielzahl von Räumen auf unterschiedlichen Kühltemperaturen zu halten haben, wie das beispielsweise bei Kühlanlagen für Lagerhäuser oder Großmärkte oder dergleichen der Fall sein kann, der bzw. die Kompressor(en) des Kältemaschinenkreislaufs als Teil des Kälteerzeugers desselben nicht in üblicher Weise über Hochdruck- und/oder Niederdruckpressostaten betrieben werden, während die die einzelnen Kühlräume, beispielsweise einen Raum für die Frischhaltung von Obst und Gemüse, ferner einen Raum für Salate und Aufschnitt sowie ferner einen Raum für Fleisch oder Fisch und schließlich möglicherweise auch noch einen Raum für Tiefkühlkost, auf der jeweils erforderlichen Temperatur haltenden, für tiefere Raumtemperaturen meist mit einem oder mehreren Verdampfergebläse(n) ausgestatteten Kühleinrichtungen jeweils über einen eigenen Verdampfungsdruckregler auf Aufrechterhaltung konstanter vorbestimmter Raumtemperatur geregelt werden, gelten die vorstehend für eine Heizungsanlage gattungsgemäßer Art dargelegten Gesichtspunkte in noch schwerwiegenderem Maße für Kühlen. Dies hat seinen prinzipiellen Grund darin, daß Kälteerzeuger, wenn sie als mit elektrischer Energie angetriebene Kompressionskältemaschinen ausgeführt sind, eine Leistungszahl von 2 bis 3 und, wenn sie als gas- und/oder dieselmotorisch betriebene Kompressions- oder als Absorptionskältemaschinen ausgeführt sind, eine Leistungszahl bzw. ein Wärmeverhältnis von 0,4 bis 0,6 haben, während entsprechende Wärmeerzeuger eine Leistungszahl bzw. ein Wärmeverhältnis haben, die bzw. das prinzipiell um 1 größer ist. Das aber bedeutet, daß grundsätzlich eine Wärmepumpe immer einen besseren Wärmewirkungsgrad hat als eine Kältemaschine einen Kältewirkungsgrad, bei der die in Form von Kälteleistung abgegebene Leistung bezogen auf den Energieeinsatz immer kleiner ist. Entsprechend ist die Erzeugung von Kälteleistung grundsätzlich sehr viel kostspieliger als die von Wärmeleistung.

Anzustreben ist daher aus energetischer Sicht für Kühlbetrieb eine möglichst hohe Vorlauftemperatur des Wärmeträgermediums bei möglichst hohem Gesamtmassendurchsatz desselben, um die gewünschte niedrige Raumtemperatur zu erreichen oder zu erhalten. Führung der Vorlauftemperatur des in einer Kühlanlage befindlichen Wärmeträgermediums über die Außentemperatur ist somit genauso wenig optimal, wie eine Führung der Vorlauftemperatur des Wärmeträgermediums einer Heizungsanlage über die Außentemperatur, wie vorstehend erläutert. Wenn nämlich die Außentemperatur eine zu niedrige Vorlauftemperatur in der Kühlanlage vorschreibt, müßten die automatisch wirkenden Drosseleinrichtungen zu stark drosseln, so daß sich für den Kälteerzeuger ein zu hoher Betriebsenergie-Einsatz ergibt, und zwar dies ganz abgesehen davon, daß unterhalb gewisser Temperaturen des im Kühlbetrieb arbeitenden Wärmeträgermediums bei Raumkühlung eine Luftentfeuchtung zu zusätzlichem Energieaufwand und entsprechenden nicht unerheblichen Kosten führt, prinzipiell auch deshalb, weil die Leistungszahl bzw. das Wärmeverhältnis des Kälteerzeugers bei tiefen Wärmeträgermediums-Temperaturen (Kühlmitteltemperaturen) und hohen Außentemperaturen in gleicher Weise abfällt wie die Leistungszahl bzw. das Wärmeverhältnis einer Wärmepumpe einer Heizungsanlage bei tiefen Außentemperaturen und hoher Vorlauftemperatur. Es würde also ein gleiches Maß an Verschlechterung der Leistungszahl bzw. des Wärmeverhältnisses, das für eine Wärmepumpe allenfalls noch tolerierbar ist, für eine Kältemaschine zu untragbaren Verhältnissen führen. Sogar für einen mit Gas oder Öl oder elektrischer Energie betriebenen Kessel wäre ein schlechterer Wirkungsgrad aus Energie- und Kostensicht eher tolerierbar als für eine Kältemaschine.

Es ist ersichtlich, daß sich gerade aufgrund dieses prinzipiellen Unterschiedes des Kühlverfahrens gegenüber dem Beheizen von Räumen alle vorstehend für Heizen als nachteilig erläuterten Verhältnisse für Kühlen noch in jeder Hinsicht ungünstiger auswirken.

Der Erfindung liegt somit die Aufgabe zugrunde, mit einfachen und kostengünstigen Mitteln unter Vermeidung der Nachteile der für Heizen und für Kühlen bekannten Lösungen eine bedarfsweise sowohl für Heizen als auch für Kühlen unabhängig von der Art des Wärme- bzw. Kälteerzeugers mit kontinuierlichem oder diskontinuierlichem Betrieb und unabhängig davon, ob die Wärme- bzw. Kälteleistung dem im Heizungs- bzw. Kühlmittelvorlauf befindlichen Wärmeträgermedium kontinuierlich oder diskontinuierlich zugeführt wird, gleichermaßen einsetzbare Möglichkeit zu schaffen, die Raumtemperaturen einer Vielzahl von zu beheizenden bzw. zu kühlenden Räumen individuell jeweils auf einem gewünschten Wert zu halten, und zwar dies in dem Sinne optimal, daß Vorteile nicht nur hinsichtlich der Universalität der Einsetzbarkeit für Einrohr- oder Zweirohrheizungen bzw. -Kühlungen mit oder ohne kontinuierlich oder diskontinuierlich arbeitendem Mehrwege-Mischer, sondern auch ökonomischer Art einmal in bezug auf insbesondere Vereinfachung von Produktion, Lagerhaltung, Distribution, niedrigen Gestehungspreis, Vereinfachung der Montage, Erweiterung des technischen Einsatzfeldes und Nachrüstbarkeit, und schließlich auch technischer Art erzielbar sind, indem bereits bei der Ersterstellung einer Heizungs- oder Kühlanlage nach der Erfindung Planung und Einsatz der Regeleinrichtung derart möglich sein soll, daß erstmalig schon in diesem Stadium auf eine etwa beabsichtigte Erweiterung oder aus irgendwelchen Gründen vorgesehene zukünftige Umrüstungen, wie beispielsweise nachträglichen Einbau einer Wärmepumpe oder Kältemaschine zusätzlich zu einem ursprünglich vorgesehenen Wärme- bzw. Kälteerzeuger anderer Art, Rücksicht genommen werden kann, oder aber die Nachrüstung einer Klimaanlage zusätzlich zu einer vorhandenen Heizungsanlage oder umgekehrt einer Heizungsanlage zusätzlich zu einer vorhandenen Kühlanlage oder aber auch die Nutzung einer für Winterbetrieb vorhandenen Heizungsanlage als im Sommerbetrieb arbeitende Kühlanlage ermöglicht wird, wobei in allen Fällen mit erheblichen Arbeits- und schmutzmäßigen Belastungen verbundene Umrüstungsarbeiten bezüglich Kabelverlegungen etc. weitestgehend vermeidbar sein sollen. Dabei soll gleichzeitig die Möglichkeit gegeben sein, jederzeit wunschgemäß von einer Betriebsart, die die Aufrechterhaltung einer bei Heizung sehr hohen bzw. bei Kühlung sehr tiefen Temperatur in einem Raum oder mehreren oder allen an das Heizungs- bzw. Kühlungssystem angeschlossenen Räumen gewährleistet, mit oder ohne Zwischenschaltung eines Betriebszustandes oder mehrerer Betriebszustände mit bei Heizung geringerer bzw. bei Kühlung höherer erreichbarer Raumtemperatur, jedoch auch geringeren Wärmeverlusten durch Wärme- bzw. Kälteableitung und/oder -abstrahlung, auf eine Betriebsart umschalten zu können, bei der aufgrund bei Heizung sehr niedriger bzw. bei Kühlung sehr hoher benötigter Raumtemperaturen die Wärmeverluste minimal gehalten werden können, und mit kostengünstigen Umwälzpumpen mit besonders flacher Druck-Fördermengen-Kennlinie auskommen zu können, um den Gestehungspreis der gesamten Heizungs- bzw. Kühlungsanlage vergleichsweise gering halten zu können.

Dies wird durch die Erfindung in überraschend einfacher und wirtschaftlicher Weise dadurch erreicht, daß gemäß deren auf ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle gesteuert wird, gerichtetem erstem übergeordnetem Erfindungsgedanken für den Gesamtmassenstrom ein Sollwert-Band angelegt ist, innerhalb dessen die zulässigen Werte des Gesamtmassenstroms liegen, daß das gesamte Sollwert-Band mit der Ober- und Untergrenze entsprechend den Anforderungen verschieblich ist und daß in den Bereichen außerhalb des Sollwert-Bandes der jeweilige Ist-Wert zum Soll-Wert hin regelbar ist. Dabei kann in Fortführung der Erfindung zweckmäßig eine Abweichung des Gesamtmassenstroms über die obere Grenze des vorgegebenen Sollwert-Bandes hinaus durch Vergrößerung und eine Abweichung des Gesamtmassenstroms unter die untere Grenze des vorgegebenen Sollwert-Bandes durch Verringerung der in den Heizungs- bzw. Kühlmittelvorlauf eingespeisten Wärme- bzw. Kälteleistung eliminiert werden.

Die Eliminierung der Differenz des Ist-Wertes zum Sollwert-Band kann dabei je nach Anwendungsfall stetig kontinuierlich, oder quasi kontinuierlich, oder diskontinuierlich (z. B. durch Ein- und Ausschalten) erfolgen.

Der auf eine Vorrichtung zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle steuerbar ist, mit einer Einrichtung zur Messung des Gesamtmassenstroms des Wärmeträgermediums und einer Regeleinrichtung, durch welche zur Beeinflussung des Gesamtmassenstroms in Abhängigkeit von der Messung desselben die Zu- oder Abfuhr von Wärmeenergie an das bzw. von dem Wärmeträgermedium beeinflußbar ist, gerichtete Erfindungsgedanke kennzeichnet sich durch eine Regeleinrichtung mit einstellbaren Sollwertgebern für je einen eine obere und eine untere Grenze eines Sollwert-Bandes des Gesamtmassenstroms bildenden oberen und unteren Sollwert desselben und einer über eine Messwertleitung mit der Messeinrichtung für den Gesamtmassenstrom verbundenen Vergleichseinrichtung zur Bestimmung der Abweichung des Gesamtmassenstroms über die obere und/oder unter die untere Grenze seines Sollwert-Bandes sowie mit einem über eine Steuerleitung mit einer Einrichtung zur Beeinflussung der in den Heizungs- bzw. Kühlmittelvorlauf eingespeisten Wärme- bzw. Kälteleistung verbundenen Stellbefehlgeber.

In weiterer vorteilhafter Fortbildung der Erfindung kann aber auch insbesondere für Heizungs- bzw. Kühlanlagen mit kontinuierlicher Zuführung der Wärme- bzw. Kälteenergie zum Heizungs- bzw. Kühlmittelvorlauf eine Abweichung des Gesamtmassenstroms über die obere Grenze des vorgegebenen Sollwert-Bandes hinaus durch Vergrößerung der in den Heizungs- bzw. Kühlmittelvorlauf eingespeisten Wärme- bzw. Kälteleistung entsprechend dem Maß dieser Abweichung und eine Abweichung des Gesamtmassenstroms unter die untere Grenze des vorgegebenen Sollwert-Bandes durch Verringerung der in den Heizungs- bzw. Kühlmittelvorlauf eingespeisten Wärme- bzw. Kälteleistung entsprechend dem Maß dieser Abweichung eliminiert werden. Entsprechend kann die Regeleinrichtung einen einerseits über eine Impulsleitung mit der Vergleichseinrichtung und andererseits über eine weitere Impulsleitung mit dem Stellbefehlgeber verbundenen Proportionalregler aufweisen. Es hat sich nämlich überraschend herausgestellt, daß entgegen einem in der Fachwelt bestehenden Vorurteil, daß mit reinem Proportionalregler Heizungsregelungen nicht zweckgerecht zu verwirklichen seien, handelsübliche reine Proportionalregler durchaus verwendbar sind, und zwar aufgrund und in Verbindung mit der erfindungsgemäßen Konzeption eines Sollwert-Bandes, um jedes ungünstige Schwingungsverhalten der Regelvorrichtung nach der Erfindung, das bei dieser ohnehin nicht zu erwarten ist, zuverlässig auszuschalten, indem hierdurch ein Maß für die Stärke der Gegenregelung geboten wird.

Zur Verbesserung der Genauigkeit der Regelung kann in weiterer zweckmäßiger Ausgestaltung der Erfindung gleichermaßen das Gesamtmaß der Abweichung des Gesamtmassenstroms über die obere Grenze des vorgegebenen Sollwert-Bandes hinaus im Verlauf der Zeit ermittelt und eine Abweichung des Gesamtmassenstroms über die obere Grenze dieses Sollwert-Bandes hinaus durch Vergrößerung der in den Heizungs- bzw. Kühlmittelvorlauf eingespeisten Wärme- bzw. Kälteleistung entsprechend diesem Gesamtmaß der Abweichung des Gesamtmassenstroms eliminiert und/oder das Gesamtmaß der Abweichung des Gesamtmassenstroms unter die untere Grenze des vorgegebenen Sollwert-Bandes im Verlauf der Zeit ermittelt und eine Abweichung des Gesamtmassenstroms unter die untere Grenze dieses Sollwert-Bandes durch Verringerung der in den Heizungs- bzw. Kühlmittelvorlauf eingespeisten Wärme- bzw. Kälteleistung entsprechend diesem Gesamtmaß der Abweichung des Gesamtmassenstroms eliminiert werden. Entsprechend kann die Regeleinrichtung einen über Impulsleitungen mit der Vergleichseinrichtung und dem Proportionalregler sowie dem Stellbefehlgeber verbundenen Integralregler mit zeitabhängigem Integrierwerk für die Abweichung des Gesamtmassenstroms über die obere Grenze des Sollwert-Bandes desselben hinaus und/oder zeitabhängigem Integrierwerk für die Abweichung des Gesamtmassenstroms unter die untere Grenze des Sollwert-Bandes desselben aufweisen. Hierdurch werden sämtliche Regelabweichungen des Gesamtmassenstroms von dem die Führungsgröße bildenden Sollwert-Band, die überhaupt aufgetreten sind, über die Zeit integriert und je nach Größe des Integrals Stellbefehle ausgeführt, was über die Zeit eine besonders exakte Einhaltung bzw. besonders genaue Einregulierung in die Sollgröße mit guter Dämpfung bzw. gutem Einschwingverhalten ermöglicht.

Weiterhin sieht eine andere zweckmäßige Fortbildung gemäß einem untergeordneten Erfindungsgedanken gleichermaßen vor, daß das Maß der zeitlichen Änderung einer Abweichung des Gesamtmassenstroms über die obere Grenze des vorgegebenen Sollwert-Bandes hinaus und/oder der zeitlichen Änderung dieses Maßes zeitlicher Änderung der Abweichung des Gesamtmassenstroms ermittelt und diese Abweichung des Gesamtmassenstroms durch Vergrößerung der in den Heizungs- bzw. Kühlmittelvorlauf eingespeisten Wärme- bzw. Kälteleistung entsprechend diesem Maß der zeitlichen Änderung der Abweichung des Gesamtmassenstroms bzw. diesem Maß der zeitlichen Änderung dieses Maßes zeitlicher Änderung der Abweichung des Gesamtmassenstroms eliminiert und/oder das Maß der zeitlichen Änderung einer Abweichung des Gesamtmassenstroms unter die untere Grenze des vorgegebenen Sollwert-Bandes und/oder der zeitlichen Änderung dieses Maßes zeitlicher Änderung der Abweichung des Gesamtmassenstroms ermittelt und diese Abweichung des Gesamtmassenstroms durch Verringerung der in den Heizungs- bzw. Kühlmittelvorlauf eingespeisten Wärme- bzw. Kälteleistung entsprechend diesem Maß der zeitlichen Änderung der Abweichung des Gesamtmassenstroms bzw. diesem Maß der zeitlichen Änderung dieses Maßes zeitlicher Änderung der Abweichung des Gesamtmassenstroms eliminiert wird. Entsprechend kann zweckmäßig die Regeleinrichtung einen über Impulsleitungen mit der Vergleichseinrichtung und dem Proportionalregler und/oder gegebenenfalls dem Integralregler sowie mit dem Stellbefehlgeber verbundenen Differentialregler mit einer Einrichtung zur Bestimmung des Maßes der zeitlichen Änderung einer Abweichung des Gesamtmassenstroms über die obere Grenze des Sollwert-Bandes desselben hinaus und/oder einer Einrichtung zur Bestimmung des Maßes der zeitlichen Änderung einer Abweichung des Gesamtmassenstroms unter die untere Grenze des Sollwert-Bandes desselben und/oder mit einer Einrichtung zur Bestimmung der zeitlichen Änderung des Maßes der zeitlichen Änderung einer Abweichung des Gesamtmassenstroms über die obere Grenze des Sollwert-Bandes desselben hinaus und/oder einer Einrichtung zur Bestimmung der zeitlichen Änderung des Maßes der zeitlichen Änderung einer Abweichung des Gesamtmassenstroms unter die untere Grenze des Sollwert-Bandes desselben aufweisen.

Es hat sich nämlich überraschend herausgestellt, daß bereits eine Differentialregelung, die als Maß die Änderungsgeschwindigkeit des Gesamtmassenstroms benutzt, immer dann von besonderem Vorteil ist, wenn - am Beispiel einer Heizungsanlage dargestellt - Heizkörper abgeschaltet werden oder Heizkörper abgeschaltet sind und noch beispielsweise ein Raum zu beheizen ist, d. h. auf hoher Heizkörpertemperaturspreizung bzw. mit sehr geringem eigenem Massenstromdurchsatz gefahren wird, indem sich höchst einfach und bequem und besonders kostengünstig und dabei doch ausgeprochen zuverlässig eine weitere Verbesserung der Erfindung insoweit erzielen läßt, als auch für solche Betriebsfälle sich der unbefriedigende Zustand ausschalten läßt, daß die Regelung in bezug auf Energieeinsparung zu langsam sein kann, da der Abfall des Massenstroms unter diesen Betriebsverhältnissen sehr steil ist. Entgegen allen Erwartungen hat sich herausgestellt, daß die Regelung gemäß diesem untergeordneten Erfindungsgedanken in Abhängigkeit von der Änderungsgeschwindigkeit des Gesamtmassenstroms besonders schnell und zuverlässig ist. Eine weitere Steigerung der Schnelligkeit und Feinfühligkeit der Regelung nach der Erfindung wird durch die andere Variante dieses untergeordneten Erfindungsgedankens erbracht, gemäß derer in Abhängigkeit von der Änderungsbeschleunigung des Gesamtmassenstroms, d. h. von der zeitlichen Änderung des Maßes der zeitlichen Änderung des Gesamtmassenstroms geregelt wird. Gleiches gilt natürlich auch für Kühlbetrieb.

Gemäß einem anderen untergeordneten Erfindungsgedanken kann in weiterer zweckmäßiger Fortbildung der mit einem Integral-Anteil arbeitenden Regelung nach der Erfindung das Gesamtmaß des Gesamtmassenstroms und das Gesamtmaß des der oberen oder der unteren Grenze des Sollwert-Bandes entsprechenden Gesamtmassenstroms im Verlauf der Zeit ermittelt und als Maß für die Optimierung der Verstärkung und/oder der Nachstellzeit und/oder der Vorhaltzeit der Eliminierung der Abweichung des Gesamtmassenstroms über die obere bzw. unter die untere Grenze seines Sollwert-Bandes das Verhältnis dieser beiden Gesamtmaße oder dessen Reziprokwert gewählt und entsprechend gebildet werden. Hierfür kann mit Vorzug implementierungstechnisch der Integralregler ein zeitabhängiges Integrierwerk für den Gesamtmassenstrom und jeweils ein weiteres zeitabhängiges Integrierwerk für den der als Bezugsgröße für die jeweilige Abweichung des Gesamtmassenstroms dienenden oberen oder unteren Grenze des Sollwert-Bandes desselben entsprechenden Gesamtmassenstrom und die Regeleinrichtung eine jeweils über Impulsleitungen mit beiden Integrierwerken verbundene Einrichtung zur Bildung des Verhältnisses zeitgleicher Ergebnisse beider Integrierwerke oder dessen Reziprokwertes aufweisen, die jeweils über Impulsleitungen mit einer Einrichtung zur Veränderung der Verstärkung des Proportionalreglers und/oder mit einer Einrichtung zur Veränderung der Nachstellzeit des Integralreglers und/oder einer Einrichtung zur Veränderung der Vorhaltzeit des Differentialreglers verbunden ist.

Hierdurch läßt sich in recht einfacher Weise ein Maß für die angestrebte Regelgüte festlegen, indem einfach aus vorhandenen Meßwerten Verhältniswerte gebildet werden, die abgespeichert werden können, um im Bedarfsfall als Maß für die Optimierung der einen oder anderen oder aller Reglerkonstanten herangezogen werden zu können. Mit anderen Worten bedeutet das, daß hierdurch einfach, schnell und bequem und doch ohne wesentlichen Kostenaufwand festgelegt werden kann, um wieviel Prozent der Ist-Wert bezogen auf die obere oder die untere Grenze des Sollwert-Bandes im Mittel abweichen darf.

Die gleichen Vorteile, jedoch mit dem zusätzlichen Vorteil, daß bei der Festlegung des Optimierungsmaßes für die Reglerkonstanten nicht die Absolutwerte des Gesamtmassenstroms, sondern nur die Gesamtmaße der jeweils der oberen bzw. unteren Grenze des Sollwert-Bandes entsprechenden Gesamtmassenströme in Form ihrer Differenz Berücksichtigung finden, so daß die Optimierung zusätzlich zu einer gewissen Feinschärfung auch noch unabhängig davon wird, welchen Wert die Grenzen des Sollwert-Bandes absolut annehmen, ergeben sich dadurch, daß das Gesamtmaß der Abweichung des Gesamtmassenstroms über die obere oder unter die untere Grenze seines vorgegebenen Sollwert-Bandes und das Gesamtmaß des der Differenz von oberer und unterer Grenze des Sollwert-Bandes entsprechenden Gesamtmassenstroms im Verlauf der Zeit ermittelt und beide Gesamtmaße miteinander addiert und als Maß für die Optimierung der Verstärkung und/oder der Nachstellzeit und/oder der Vorhaltzeit der Eliminierung der Abweichung des Gesamtmassenstroms über die obere bzw. unter die untere Grenze seines Sollwert-Bandes das Verhältnis dieser Summe zum Gesamtmaß des der Differenz von oberer und unterer Grenze des Sollwert-Bandes entsprechenden Gesamtmassenstroms oder dessen Reziprokwert gewählt wird. Hierfür kann vorrichtungsseitig zweckmäßig der Integralregler außer einem ersten zeitabhängigen Integrierwerk für die Abweichung des Gesamtmassenstroms über die obere Grenze des Sollwert-Bandes desselben und/oder einem ersten zeitabhängigen Integrierwerk für die Abweichung des Gesamtmassenstroms unter die untere Grenze des Soll-wert-Bandes desselben ein weiteres zeitabhängiges Integrierwerk für den der Differenz von oberer und unterer Grenze dieses Sollwert-Bandes entsprechenden Gesamtmassenstrom sowie eine über Impulsleitungen mit beiden Integrierwerken verbundene Summiereinrichtung zur Bildung der Summe zeitgleicher Ergebnisse beider Integrierwerke und die Regeleinrichtung eine jeweils über Impulsleitungen einerseits mit dieser und andererseits mit zumindest dem zeitabhängigen Integrierwerk für den der Differenz von oberer und unterer Grenze des Sollwert-Bandes entsprechenden Gesamtmassenstrom verbundene Einrichtung zur Bildung des Verhältnisses zeitgleicher Ergebnisse dieses Integrierwerkes und der Summiereinrichtung oder des Reziprokwertes dieses Verhältnisses aufweisen, die jeweils über Impulsleitungen mit einer Einrichtung zur Veränderung der Verstärkung des Proportionalreglers und/oder mit einer Einrichtung zur Veränderung der Nachstellzeit des Integralreglers und/oder einer Einrichtung zur Veränderung der Vorhaltzeit des Differentialreglers verbunden ist.

- 20 -

0195255

In weiterer erfinderischer Fortbildung dieses untergeordneten Erfindungsgedankens kann die Verstärkung und/oder die Nachstellzeit und/oder die Vorhaltzeit der Eliminierung der Abweichung des Gesamtmassenstroms über die obere bzw. unter die untere Grenze seines Sollwert-Bandes verändert werden, wenn das Verhältnis der beiden Gesamtmaße einen vorbestimmten Wert überschreitet. Hierfür kann zweckmäßig die Einrichtung zur Bildung des Verhältnisses zeitgleicher Ergebnisse beider Integrierwerke eine einstellbare Impulssperreinrichtung aufweisen, mittels derer die Impulsleitung(en) zu der bzw. den Einrichtung(en) zur Veränderung der Verstärkung des Proportionalreglers und/oder der Nachstellzeit des Integralreglers und/oder der Vorhaltzeit des Differentialreglers erst bei Vorhandensein eines vorbestimmten Wertes des Verhältnisses zeitgleicher Ergebnisse beider Integrierwerke für Impulsdurchgang freigebbar ist bzw. sind. Dies bedeutet die Vorgabe zulässiger Werte für Verstärkung und/oder Nachstellzeit und/oder Vorhaltzeit der auf Eliminierung der Abweichung des Gesamtmassenstroms von einer vorbestimmten zugeordneten Grenze seines Sollwert-Bandes arbeitenden Regelvorrichtung nach der Erfindung. Dies wiederum erbringt innerhalb der Heizungs- und Kältetechnik erstmals die Möglichkeit einer Art von Selbstlernen der Regelvorrichtung nach der Erfindung, indem sich diese ihre eigenen Regelkonstanten nach vorgebbaren Gütekriterien selbst ermittelt oder optimierend anpaßt. Entsprechend der diesem untergeordneten Erfindungsgedanken zugrundeliegenden untergeordneten weiteren Aufgabenstellung bringt dieser die vorteilhafte Möglichkeit mit sich, daß jeder beliebige Reglertyp für die der Erfindung zugrundeliegende Aufgabe eingesetzt werden und sogar hinsichtlich seiner Regelungskonstanten beliebig, d. h. auch ungünstig, eingestellt werden kann, da gemäß diesem untergeordneten Erfindungsgedanken dafür gesorgt ist, daß er nach einiger Zeit sich selbst auf das zweckmäßigste Arbeitsfeld eingestellt hat, weil er seine Regelungskonstanten gemäß den vorstehend beschriebenen Gütekriterien selbst nachstellt.

Gleiches kann im übrigen durch eine Alternative erreicht werden, gemäß derer die Verstärkung und/oder die Nachstellzeit und/oder die Vorhaltzeit der Eliminierung der Abweichung des Gesamtmassenstroms über die obere bzw. unter die untere Grenze seines Sollwert-Bandes so verändert wird, daß das Verhältnis der beiden Gesamtmaße einen vorbestimmten Wert nicht überschreitet. Hierfür kann zweckmäßig die Einrichtung zur Veränderung der Verstärkung des Proportionalreglers und/oder die Einrichtung zur Veränderung der Nachstellzeit des Integralreglers und/oder die Einrichtung zur Veränderung der Vorhaltzeit des Differentialreglers jeweils eine über eine Impulsleitung mit der Einrichtung zur Bildung des Verhältnisses zeitgleicher Ergebnisse beider Integrierwerke verbundene Einstelleinrichtung aufweisen, mittels derer die zugeordnete Veränderungseinrichtung im Sinne einer Vermeidung des Überschreitens eines vorbestimmten Wertes des Verhältnisses zeitgleicher Ergebnisse beider Integrierwerke nachstellbar ist. Auch diese Variante der Erfindung verwirklicht erstmalig eine Regelung mit Selbstlernen mit den für die vorstehend beschriebene Alternative bereits erläuterten Vorteilen.

In beiden Fällen läßt sich der Selbstlernvorgang der Regelung bezüglich der Anpassung ihrer Regelungskonstanten an die jeweiligen Eigentümlichkeiten der Heizungs- bzw. Kühlanlage und/oder der mit dieser zu temperierenden Räume im Hinblick auf Betriebsparameter und/oder lage- und/oder klimaspezifische oder benutzereigentümliche Eigenheiten dadurch verbessern, daß die obere und/oder die untere Grenze des Sollwert-Bandes des Gesamtmassenstroms bereits herstellerseitig leistungsfähigkeitsbedingt und/oder nutzerbedürfnisbezogen gewählt wird. Dies bedeutet die zweckmäßige Möglichkeit einer werkseitigen Vorwahl von für eine bestimmte Heizungs- bzw. Kühlanlage und/oder die Kombination derselben mit einem bestimmten Typ einer Regelungsvorrichtung nach der Erfindung für zweckmäßig erachteten Werten für Verstärkung und/oder Nachstellzeit und/oder Vorhaltzeit, wobei es dann der in letztbeschriebener Weise ausgebildeten Regelungsvorrichtung nach der Erfindung überlassen bleibt, im Wege des Selbstlernens den Regelvorgang an die genannten Eigentümlichkeiten optimierend anzupassen. Dies bedeutet eine Verbesserung
dieser automatischen Optimierung der Regelungsvorrichtung nach der
Erfindung insoweit, als durch diese hersteller- bzw. werkseitige
Vorgabe einer oder mehrerer Regelungskonstanten die für die Selbstoptimierung der Regelungsvorrichtung erforderliche Zeitspanne besonders kurz gehalten und die damit verbundenen Energieverluste
minimiert werden können.

Es ist ersichtlich, daß durch die erfindungsgemäße Vorgabe eines
Sollwert-Bandes für den Gesamtmassenstrom, innerhalb dessen sich im
Zuge des Betriebes der Heizungs- bzw. Kühlanlage auftretende Abweichungen desselben durchaus bewegen dürfen, ohne gleich Regelungseingriffe auszulösen, im Gegensatz zu der bekannten Regelung vielfältige Vorteile erzielen lassen, bei der stets jede Abweichung des
im Betrieb auftretenden Gesamtmassenstroms von einem einzigen für
diesen vorgesehenen Sollwert ausgeregelt wird.

Der gravierendste Vorteil ist, daß durch die Erfindung erstmalig
eine Möglichkeit gefunden wurde, mit einer einzigen Regelungsvorrichtung sowohl kontinuierlich als auch im Ein-Aus-Betrieb mit
Wärme- bzw. Kälteenergie versorgte Heizungs- bzw. Kühlanlagen betreiben zu können, und zwar dies auch noch ungeachtet der Art des
Wärme- bzw. Kälteerzeugers. Erst durch die erfindungsgemäße Maßnahme
eines Sollwert-Bandes für den Gesamtmassenstrom kann der Notwendigkeit zweier Schaltpunkte für diskontinuierlich arbeitende Anlagen
genüge getan werden. Gleichzeitig ergeben sich aber nicht nur für
solchen diskontinuierlichen Betrieb, sondern auch für kontinuierlich
arbeitende Anlagen weitere bisher von der Fachwelt nicht für erreichbar gehaltene Vorteile.

Außer diesen Vorteilen hinsichtlich der Universalität der Einsetzbarkeit der erfindungsgemäßen Regelung sowohl bezüglich ihres verfahrensmäßigen als auch ihres vorrichtungsmäßigen Aspektes für Einrohr- oder Zweirohr-Heizungen bzw. -Kühlungen mit oder ohne Mehr- Wege-Mischer, der im übrigen seinerseits wieder kontinuierlich oder diskontinuierlich arbeiten kann, bringt die Erfindung ersichtlich auch ökonomische Vorteile insbesondere bezüglich Vereinfachung von Produktion, Lagerhaltung, Distribution, niedrigem Gestehungspreis, Vereinfachung der Montage, Erweiterung des technischen Einsatzfeldes und der Nachrüstbarkeit vorhandener Anlagen mit sich. Es hat sich nämlich überraschend herausgestellt, daß die Erfindung keineswegs nur bezüglich neuerstellter Heizungs- bzw. Kühlanlagen zweckmäßig einsetzbar ist, sondern aufgrund ihrer einfachen vorrichtungsmäßigen Komponenten und deren Verknüpfung miteinander auch bereits bestehende und im Betrieb befindliche Heizungs- bzw. Kühlanlagen höchst einfach, schnell und bequem und dabei doch besonders wirtschaftlich im Sinne der Erfindung nachgerüstet werden können, indem häufig nicht einmal die gesamte etwa vorhandene Regelungsvorrichtung bekannter Art gegen eine Regelungsvorrichtung nach der Erfindung ausgetauscht zu werden braucht, sondern individuell nur eine oder nur einzelne Komponente(n) in geeigneter erfindungsgemäßer Weise zugefügt zu werden braucht bzw. brauchen.

Auch technische Vorteile sind bei Einsatz der Erfindung überraschend zu verzeichnen, indem bereits bei der Neuplanung und Ersterstellung einer Heizungs- oder Kühlanlage dafür Sorge getragen werden kann, daß etwa beabsichtigte Erweiterungen oder aus irgendwelchen Gründen vorgesehene zukünftige Umrüstungen, wie beispielsweise nachträglicher Einbau einer Wärmepumpe oder Kältemaschine zusätzlich zu einem ursprünglich vorgesehenen Wärme- bzw. Kälteerzeuger anderer Art, oder aber die Nachrüstung einer Klimaanlage zusätzlich zu einer vorhandenen Heizungsanlage oder umgekehrt einer Heizungsanlage zusätzlich zu einer vorhandenen Kühlanlage keine arbeits- und schmutzmäßigen Belastungen durch Umrüstungsarbeiten bezüglich Kabelverlegungen etc. mehr mit sich bringen.

Von besonderer Bedeutung sind ferner die durch Einsatz der Erfindung erzielbaren betriebstechnischen Vorteile gegenüber bekannten Regelungen insbesondere im Hinblick auf Energieeinsparungen und Umweltbelastung. Während nämlich bei der bekannten Regelung mit Vorgabe eines konstanten Sollwertes für den Gesamtmassenstrom erfahrungsgemäß stabile lokale Regelung, d. h. stabiles Regelverhalten aller als Regeleinrichtungen für die Raumtemperatur der zu temperierenden Räume wirkenden den betreffenden Heizkörpern bzw. Kühleinrichtungen zugeordneten automatisch arbeitenden Drosseleinrichtungen, deswegen praktisch überhaupt nicht möglich ist, weil die sich einander überlagernden Frequenzen der Regelungseingriffe der einzelnen zur Wirkung kommenden Drosseleinrichtungen bewirken, daß der Gesamtmassenstrom praktisch nie konstant sein kann, vielmehr es zu nicht nur schnell aufeinander folgenden, sondern auch in ihrer Amplitude übergroßen Regelungsschwingungen kommt, wenn dem Regelungssystem ein konstanter Sollwert für den aus den einzelnen lokalen Massenströmen der einzelnen Heizkörper bzw. Kühleinrichtungen resultierenden Gesamtmassenstrom aufgeprägt wird, wodurch bewirkt wird, daß es diesen Änderungen überhaupt nicht nachkommen kann, indem diese Regeleingriffe das System eher stören und aufschaukeln und demgemäß keine brauchbare Stabilität erreichbar ist, so daß eher Energie vergeudet wird als eingespart werden kann, bringt das erfindungsgemäße Konzept eines Sollwert-Bandes für den Gesamtmassenstrom erstmals die Möglichkeit, hier auch bei kontinuierlichem Betrieb Energie einsparen zu können, indem nämlich das gesamte Regelsystem mit Ausnahme der Beobachtung durch Entnahme von Messwerten des Gesamtmassenstroms so lange sich selbst überlassen bleiben kann, wie die aus dem Tätigsein der automatisch wirkenden Drosseleinrichtungen als lokale Regler für die jeweilige Raumtemperatur resultierenden Änderungen des Gesamtmassenstroms des Wärmeträgermediums das erfindungsgemäße Sollwert-Band nicht verlassen,
und erst dann, wenn ein solcher Fall einmal eintreten sollte, ein
Regeleingriff auf nicht etwa Konstanthaltung eines Sollwertes des
Gesamtmassenstroms, sondern auf Rückführung desselben in den durch
sein erfindungsgemäß vorgegebenes Sollwert-Band bestimmten Bereich
herbeigeführt wird.

Noch wesentlich gravierender hinsichtlich mit der Erfindung vergleichsweise erzielbarer Vorteile gestalten sich die Verhältnisse
bei im Ein-Aus-Betrieb arbeitenden Regelsystemen. Es ist ersichtlich, daß hier in ganz besonderem Maße durch die Erfindung die Zahl
der Ein-Aus-Schaltspiele verringert wird, was vorteilhaft dazu
führt, daß die Zahl der Kaltstarts und damit das Maß der Rauchgasverschmutzung bei mit fossilen Brennstoffen betriebenen Wärme- bzw.
Kälteerzeugern nicht unwesentlich verringert und damit eine bessere
Energieausbeute mit entsprechend höherem Wirkungsgrad erzielt werden
kann. Gleiches gilt auch für mit elektrischer Energie betriebene
Wärme- bzw. Kälteerzeuger, bei denen jede Einschaltspitze der elektrischen Energie sich energiewirkungsgradmäßig ungünstig bemerkbar
macht, wenn auch hier eine Umweltverschmutzung durch erhöhte Rauchgasimmissionen nicht in Betracht kommt. In sämtlichen Fällen jedoch
erbringt die Erfindung weiterhin eine Schonung der gesamten
Heizungs- bzw. Kühlanlage, da diese nicht durch einen einzigen Sollwert für den Gesamtmassenstrom, der sich im Sinne der Erfindung
immer als praktisch sinnlos vorgegeben erweisen muß, belastet und
zum ständigen Schalten gebracht wird.

Insgesamt gesehen kann man ungeachtet, ob es sich um eine kontinuierlich gefahrene oder aber eine im Ein-Aus-Betrieb arbeitende Heizungs- bzw. Kühlanlage handelt, mit der Erfindung erstmals eine optimale Anpassung zwischen Energieeinsparung, Umweltschutz und Anlagenschonung verwirklichen. Dabei ist hervorzuheben, daß sich die
vorstehend beschriebenen Vorteile in besonderem Maße bei Kühlanlagen einstellen, weil hier ungünstig gewählte Regelungsarten beispielsweise herkömmlicher Art oder schlecht eingestellte Regelvorrichtungen bereits aus prinzipiellen Gründen gegenüber Heizungsanlagen einen höheren Energieverbrauch und damit einen schlechteren Energiewirtschaftswirkungsgrad zur Folge haben.

Vorteilhaft ist weiterhin, daß die Erfindung mit kostengünstigen und wartungsarmen Umwälzpumpen mit besonders flacher Druck-Fördermengen-Kennlinie, die erfahrungsgemäß eine vergleichsweise extrem hohe Lebensdauererwartung zu haben pflegen, auskommt und diese sogar zu bevorzugen sind, was nicht nur dem Gestehungspreis der gesamten Heizungs- bzw. Kühlanlage, sondern auch den Betriebskosten derselben vorteilhaft zugute kommt. Denn einerseits stellen die Energiekosten für den Betrieb der meist im Dauerlauf arbeitenden Umwälzpumpe einen nicht unwesentlichen Anteil der Gesamtbetriebskosten der Anlage dar und andererseits pflegt der Energieverbrauch einer Umwälzpumpe mit flacher Druck-Fördermengen-Kennlinie erheblich geringer zu sein als der einer Umwälzpumpe vergleichbarer Leistung mit steiler Kennlinie. Überraschend hat sich dabei herausgestellt, daß man solche Umwälzpumpen mit geringer spezifischer Leistung auch bei Heizungs- bzw. Kühlanlagen-Installationen zudem noch mit besonders gutem Erfolg einsetzen kann, bei denen man bei voller Öffnung aller automatisch wirkenden Drosseleinrichtungen einen vergleichsweise hohen Gesamtmassenstrom erreicht und dieser bei Drosselung dieser Raumtemperatur-Regelungseinrichtungen bis auf verschwindend kleine lokale Massendurchsätze an Wärmeträgermedium auch bis auf nahezu dem Verschwindwert entsprechende Werte des jeweiligen Einzelmassendurchsatzes der lokalen Drosseleinrichtungen und/oder auch des Gesamtmassenstroms herunterkommen kann, was eine hervorragende Regelbandbreite mit entsprechender Verbesserung der gesamten Regelungsgüte der Regelungsvorrichtung bedeutet.

Wie vorstehend bereits beschrieben, eröffnet die Erfindung der Verwendung von sowohl P- als auch PI- oder PD- und auch PID-Reglern Einsatzmöglichkeiten mit nicht zu erwartenden vorteilhaften Auswirkungen. Solche Reglertypen sind an sich bekannt, und auch bei der vorstehend erläuterten herkömmlichen Regelung mit konstanter Sollwertvorgabe für den Gesamtmassenstrom wurde bereits ein PI-Regler für eine Heizungsanlage vorgeschlagen, um die Abweichung des Gesamtmassenstroms von einem als Führungsgröße konstant vorgegebenen Durchflußsollwert (Sollwert des Gesamtmassenstroms) auszuregeln. Die durch den Einsatz solcher an sich bekannter Regler in Verbindung mit der mit einer bandmäßigen Sollwertvorgabe für den Gesamtmassenstrom des Wärmeträgermediums arbeitenden Erfindung erzielbaren Vorteile sind vorstehend bereits im einzelnen erläutert. Hervorzuheben ist in diesem Zusammenhang allerdings die erstmalig durch die Erfindung mit ihrer Sollwert-Band-Vorgabe erbrachte Möglichkeit, daß die Regelungsvorrichtung im Sinne eines Selbstlernens eine Anpassung ihrer eigenen Regelungskonstanten in Form der Verstärkung und/oder der Vorhaltzeit und/oder der Nachstellzeit an die individuellen raumspezifischen und/oder lage- und/oder klimaeinflußbedingten und/oder nutzerbezogenen und/oder betriebstechnischen Eigentümlichkeiten der jeweiligen Heizungs- bzw. Kühlanlage selbst vornehmen kann, wobei vorteilhaft noch erstmalig die weitere Möglichkeit der Energiebilanzierung und damit des Einwirkens auf eine Verbesserung des Energiewirtschaftswirkungsgrades hinzu kommt.

Insgesamt gesehen erbringt die Erfindung ersichtlich aus vielfältigen zu einem zweckmäßigen Zusammenspiel kombinierbaren Gründen eine bisher in der Fachwelt für ungangbar gehaltene Möglichkeit der Energieeinsparung und entsprechend wirtschaftlich zu führender Betreibung von Heizungs- bzw. Kühlanlagen. Dabei kommt ferner hinzu, daß eine hersteller- bzw. werkseitige Einstellung der Regelungskonstanten der Regelungsvorrichtung nach der Erfindung als erste sinnvolle Einstellung getätigt werden kann, ohne daß der Betreiber der mit dieser Regelungsvorrichtung nach der Erfindung ausgestatteten Heizungs- bzw. Kühlanlage daran gehindert wäre, jeweils nach eigenem Bedürfnis sein eigenes Sollwert-Band als Führungsgröße zu wählen, wodurch er nicht nur auf lediglich Sparen verwiesen ist, sondern auch ungewöhnlichen Belastungsfällen, wie beispielsweise bei Heizbetrieb einer warmen Nordwand und einer kalten Südwand seines Hauses, wirkungsvoll begegnen kann, da ihm erstmalig eine völlige Unabhängigkeit der Regelung bzw. der mit einer Regelungsvorrichtung nach der Erfindung ausgerüsteten Heizungs- bzw. Kühlanlage von irgendwelchen Randbedingungen zur Verfügung gestellt wird.

Während vorstehend die durch die Erfindung gebotene Möglichkeit einer optimierenden Selbstnachführung der Regelungsgrößen erläutert worden ist, befaßt sich ein anderer untergeordneter Erfindungsgedanke gemäß einer zugrundeliegenden untergeordneten Aufgabe mit der Ermittlung der für eine bestimmte Heizungs- bzw. Kühlanlage aufgrund der Gesamtheit der Einflußgrößen, denen sie unterliegt, optimalen Führungsgröße. Hierfür sieht dieser untergeordnete Erfindungsgedanke vor, daß bei Inbetriebnahme des Verfahrens für Heizbetrieb oder für Kühlbetrieb bei voller Öffnung aller Drosseleinrichtungen der Gesamtmassenstrom als maximal möglicher Gesamtmassenstrom, der als Inbetriebnahmegesamtmassenstrom zu bezeichnen ist, ermittelt und der größere Sollwert des Gesamtmassenstroms entsprechend einem Bruchteil dieses maximal möglichen Gesamtmassenstroms und der kleinere Sollwert des Gesamtmassenstroms entsprechend einem im Vergleich zu diesem Bruchteil kleineren oder höchsten gleichen Bruchteil dieses maximal möglichen Gesamtmassenstroms gewählt wird. Diese Verfahrensweise kann mit Vorzug bei der als "Jungfernfahrt" zu bezeichnenden erstmaligen Inbetriebnahme einer mit der Erfindung ausgerüsteten Heizungs- bzw. Kühlanlage verwirklicht werden und erbringt dann den tatsächlich maximal möglichen Gesamtmassenstrom als die einzige relevante Größe, in der alle auf die Heizungs- bzw. Kühlanlage wirkenden Einflußgrößen enthalten sind, ohne daß diese im einzelnen bestimmt oder gemessen zu werden bräuchten, die aber im wesentlichen abhängig ist von der Anzahl der Heizkörper bzw. Kühleinrichtungen

und damit dem Druckabfall in diesen und im das Wärmeträgermedium führenden Rohrnetz und auch davon, wie stark die Umwälzpumpe ist, d. h. welchen maximalen Massenstrom diese erzeugen kann. Dabei kann im übrigen auf ein Überströmventil zum Abbau zu großer Druckhöhe der Umwälzpumpe verzichtet werden oder, sollte ein solches im Falle der Nachrüstung einer im Betrieb befindlichen Heizungs- bzw. Kühlanlage etwa vorhanden sein, dieses einfach so eingestellt werden, daß bei voller Drosselung aller als Regeleinrichtungen für die lokalen Raumtemperaturen wirkenden Drosseleinrichtungen nur noch eine verschwindende Menge an Wärmeträgermedium überströmt, also der von ihm aufgebaute Druckabfall groß genug ist, um die Durchflußmenge sehr klein zu halten, damit der Regelbereich nicht ungebührlich eingeschränkt wird.

Eine zweckmäßige Ausgestaltung der Erfindung gemäß einem anderen untergeordneten Erfindungsgedanken kennzeichnet sich dadurch, daß bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximaler Gesamtmassenstrom, der auch als Anfahrgesamtmassenstrom zu bezeichnen ist, ermittelt und der größere Sollwert des Gesamtmassenstroms entsprechend einem Bruchteil dieses maximalen Gesamtmassenstroms und der kleinere Sollwert des Gesamtmassenstroms entsprechend einem im Vergleich zu diesem Bruchteil kleineren oder höchsten gleichen Bruchteil dieses maximalen Gesamtmassenstroms gewählt wird. Dies erbringt einen Indikator dafür, daß entweder eine oder mehrere der automatisch wirkenden Drosseleinrichtung(en) defekt ist bzw. sind, indem diese sich aus der Drosselung nicht mehr herausbewegt bzw. -bewegen und somit der maximal mögliche Gesamtmassenstrom (Inbetriebnahmegesamtmassenstrom) nicht mehr erreicht wird, oder daß die Umwälzpumpe z. B. über ein bestimmtes Lagerspiel nicht mehr ihre Nennleistung bringt oder aber diese Umwälzpumpe oder das das Wärmeträgermedium führende Leitungsnetz verkalkt ist und somit übermäßige Strömungswiderstände aufgebaut hat. Dabei eröffnet dieser untergeordnete Erfindungsgedanke die Möglichkeit für eine bequeme und kostengünstige Selektierung der einzelnen Fehlerquellen. Sinkt nämlich der Systemdruck im das Wärmeträgermedium führenden Leitungssystem, der grundsätzlich gemessen zu werden pflegt, und muß Wärmeträgermedium nachgefüllt werden, so liegt eine Leckage in diesem Leitungssystem vor, wobei auch die Umwälzpumpe als solche dazugehört. Muß im Laufe der Zeit der gesunkenen Systemdruck durch Nachfüllen von Wärmeträgermedium auf seinen Ausgangswert gebracht werden, ohne daß dadurch der Differenzdruck über der Umwälzpumpe, der sich im Gesamtmassenstrom ausdrückt, auf seinen früheren Wert gebracht werden kann, so deutet dies auf eine Erhöhung des Strömungswiderstandes im das Wärmeträgermedium führenden Leitungssystem beispielsweise durch Verkalkung oder Defekt der Umwälzpumpe beispielsweise in Form eines Lagerschadens hin. Sinkt der Systemdruck im wärmeträgerführenden Leitungssystem nicht, so kann nur ein Hängen einer oder mehrerer Drosseleinrichtung(en) oder aber auch ein Absinken der Nennleistung der Umwälzpumpe beispielsweise durch Verschleiß derselben vorliegen. Die Selektierung dieser beiden Störfälle erfolgt dadurch, daß das Raumtemperaturverhalten der einzelnen mit automatisch wirkenden Drosseleinrichtungen ausgestatteten Heizkörper- bzw. Kühleinrichtungen beobachtet wird. Wird festgestellt, daß in einem Raum oder mehreren Räumen, der bzw. die zu klimatisieren ist bzw. sind, die vorbestimmte Raumtemperatur nicht erreicht wird, so liegt ein Defekt der betreffenden Drosseleinrichtung vor. Ist dies nicht der Fall, wird aber dennoch ein Absinken des Inbetriebnahmegesamtmassenstroms auf den Anfahrgesamtmassenstrom festgestellt, so kann dies praktisch nur auf einen Defekt der Umwälzpumpe bzw. des Antriebs derselben hinweisen.

Vorrichtungsseitig wird die Erfindung diesen untergeordneten Erfindungsgedanken dadurch gerecht, daß die Regeleinrichtung eine Sollwert-Wahleinrichtung mit einer vorzugsweise über eine Meßwertleitung mit der Meßeinrichtung für den Gesamtmassenstrom verbundenen Detektoreinrichtung zur Ermittlung des Gesamtmassenstroms bei Auftreten der ersten Veränderung desselben im Verlauf der Inbetriebnahme der Vorrichtung für Heizbetrieb oder für Kühlbetrieb bei
voller Öffnung aller Drosseleinrichtungen als maximal möglichen Gesamtmassenstroms (Inbetriebnahmegesamtmassenstroms) und/oder im Verlauf des Heizbetriebs bei Aufheizen nach einer Abkühlung bzw. im
Verlauf des Kühlbetriebs bei Abkühlen nach einer Erwärmung bei
voller Öffnung aller Drosseleinrichtungen als maximalen Gesamtmassenstroms (Anfahrgesamtmassenstroms) und je einer über eine Impulsleitung mit dieser verbundenen einstellbaren Verhältnisgabeeinrichtung als Sollwertbildungseinrichtung für die obere bzw. die
untere Grenze des Sollwert-Bandes des Gesamtmassenstroms sowie jeweils eine über Impulsleitungen einerseits mit der zugeordneten
Sollwertbildungseinrichtung der Sollwert-Wahleinrichtung und
andererseits mit dem zugeordneten Sollwertgeber verbundene Einrichtung zur automatischen Verstellung desselben im Sinne einer
Ersteinstellung bzw. einer Veränderung eines eingestellten Wertes
der zugeordneten oberen bzw. unteren Grenze des Sollwert-Bandes des
Gesamtmassenstroms aufweist.

Hervorzuheben ist in diesem Zusammenhang, daß man dann, wenn man
nach den vorstehend erläuterten Kriterien festgestellt hat, daß es
sich im Zuge eines ermittelten Abfalls des Gesamtmassenstroms von
seinem ursprünglichen Inbetriebnahmewert auf einen geringeren Wert
in Form des sogenannten Anfahrgesamtmassenstroms nur um eine Verkalkung der Anlage handelt, diese durchaus in bisheriger Weise
weiterfahren kann, wobei der festgestellte geringere Anfahrgesamtmassenstrom die Bestimmungsfunktion des ursprünglichen Inbetriebnahmegesamtmassenstroms für die Festlegung der Führungsgröße der
Regelung in Form des erfindungsgemäßen Sollwert-Bandes übernehmen
kann, was den Vorteil erbringt, daß in einem solchen Fall auf einen
Service-Techniker verzichtet werden kann. Hierfür kann gemäß einem
weiteren untergeordneten Erfindungsgedanken bei Inbetriebnahme des
Verfahrens für Heizbetrieb oder für Kühlbetrieb bei voller Öffnung
aller Drosseleinrichtungen der Gesamtmassenstrom als maximal möglicher Gesamtmassenstrom (Inbetriebnahmegesamtmassenstrom) und bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximal möglicher oder maximaler Gesamtmassenstrom (Anfahrgesamtmassenstrom) ermittelt und bei Auftreten einer Abweichung des maximalen Gesamtmassenstroms (Anfahrgesamtmassenstroms) vom maximal möglichen Gesamtmassenstrom (Inbetriebnahmegesamtmassenstrom) das vorgegebene Sollwert-Band des Gesamtmassenstroms in Abhängigkeit vom Verhältnis von maximalem zu maximal möglichem Gesamtmassenstrom verändert werden. Entsprechend kann zweckmäßig die Regeleinrichtung eine Sollwert-Wahleinrichtung mit einer oder je einer vorzugsweise über eine Meßwertleitung mit der Meßeinrichtung für den Gesamtmassenstrom verbundenen Detektoreinrichtung zur Ermittlung des Gesamtmassenstroms bei Auftreten der ersten Veränderung desselben im Verlauf der Inbetriebnahme der Vorrichtung für Heizbetrieb oder für Kühlbetrieb bei voller Öffnung aller Drosseleinrichtungen als maximal möglichen Gesamtmassenstroms (Inbetriebnahmegesamtmassenstroms) und im Verlauf des Heizbetriebs bei Aufheizen nach einer Abkühlung bzw. im Verlauf des Kühlbetriebs bei Abkühlen nach einer Erwärmung bei voller Öffnung aller Drosseleinrichtungen als maximalen Gesamtmassenstroms (Anfahrgesamtmassenstroms) und eine Meßwertspeichereinrichtung für den maximal möglichen Gesamtmassenstrom (Inbetriebnahmegesamtmassenstrom) sowie eine einerseits über eine Impulsleitung mit dieser und andererseits über eine Meßwertleitung mit der Meßeinrichtung für den Gesamtmassenstrom oder über eine Impulsleitung mit der Detektoreinrichtung verbundene Vergleichseinrichtung zur Ermittlung von Abweichungen des maximalen Gesamtmassenstroms (Anfahrgesamtmassenstroms) vom maximal möglichen Gesamtmassenstrom (Inbetriebnahmegesamtmassenstrom) und eine über eine Impulsleitung mit dieser verbundene Verhältnisbildungseinrichtung aufweisen, die über jeweils eine Impulsleitung mit zumindest einer der Sollwert-Bildungseinrichtungen für die obere bzw. untere Grenze des Sollwert-Bandes des Gesamtmassenstroms oder mit der oder zumindest einer der Programmspeichereinrichtung(en) für die Beeinflussung des Sollwert-Bandes des Gesamtmassenstroms oder mit zumindest einer Verstelleinrichtung für diese oder mit zumindest einem Sollwertgeber verbunden und mittels derer die betreffende Sollwert-Bildungseinrichtung bzw. Programmspeichereinrichtung bzw. Verstelleinrichtung bzw. der betreffende Sollwertgeber im Sinne einer Änderung des vorgegebenen Sollwert-Bandes des Gesamtmassenstroms in Abhängigkeit vom Verhältnis von maximalem Gesamtmassenstrom (Anfahrgesamtmassenstrom) zu maximal möglichem Gesamtmassenstrom (Inbetriebnahmegesamtmassenstrom) verstellbar ist. Ersichtlich wird hierdurch ermöglicht, daß eine in erfindungsgemäßer Weise ausgestattete Heizungs- bzw. Kühlanlage auch dann noch mit gleich guter Funktion weiterbetrieben werden kann, wenn sie in der beschriebenen Weise bezüglich ihres Gesamtmassenstroms eine Drift zu bezüglich ihres ursprünglichen Inbetriebnahmegesamtmassenstroms geringeren Werten aufweist.

Im übrigen kann eine solche Drift zweckmäßig auch noch anderweitig ausgenützt werden, indem in weiterer Fortbildung der Erfindung gemäß einem anderen untergeordneten Gedanken derselben bei Inbetriebnahme des Verfahrens für Heizbetrieb oder für Kühlbetrieb bei voller Öffnung aller Drosseleinrichtungen der Gesamtmassenstrom als maximal möglicher Gesamtmassenstrom (Inbetriebnahmegesamtmassenstrom) und bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximaler Gesamtmassenstrom (Anfahrgesamtmassenstrom) ermittelt und bei Auftreten einer vorbestimmten Abweichung des maximalen Gesamtmassenstroms (Anfahrgesamtmassenstroms) vom maximal möglichen Gesamtmassenstrom (Inbetriebnahmegesamtmassenstrom) diese Unregelmäßigkeit optisch und/oder akustisch wahrnehmbar gemacht wird. Hierfür kann zweckmäßig mindestens eine Meldeeinrichtung zur Abgabe einer optisch und/oder akustisch wahrnehmbaren Information vorgesehen sein, wobei die Regeleinrichtung eine Sollwert-Wahleinrichtung mit einer oder je einer vorzugsweise über eine Meßwertleitung mit der Meßeinrichtung für den Gesamtmassenstrom verbundenen Detektoreinrichtung zur Ermittlung des Gesamtmassenstroms bei Auftreten der ersten Veränderung desselben im Verlauf der Inbetriebnahme der Vorrichtung für Heizbetrieb oder für Kühlbetrieb bei voller Öffnung aller Drosseleinrichtungen als maximal möglichen Gesamtmassenstroms (Inbetriebnahmegesamtmassenstroms) und im Verlauf des Heizbetriebs bei Aufheizen nach einer Abkühlung bzw. im Verlauf des Kühlbetriebs bei Abkühlen nach einer Erwärmung bei voller Öffnung aller Drosseleinrichtungen als maximalen Gesamtmassenstroms (Anfahrgesamtmassenstroms) und eine Meßwertspeichereinrichtung für den maximal möglichen Gesamtmassenstrom (Inbetriebnahmegesamtmassenstrom) sowie eine einerseits über eine Impulsleitung mit dieser und andererseits über eine Meßwertleitung mit der Meßeinrichtung für den Gesamtmassenstrom oder über eine Impulsleitung mit der Detektoreinrichtung verbundene Vergleichseinrichtung zur Ermittlung von Abweichungen des maximalen Gesamtmassenstroms (Anfahrgesamtmassenstroms) vom maximal möglichen Gesamtmassenstrom (Inbetriebnahmegesamtmassenstrom) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer dem Über- oder Unterschreiten eines vorbestimmten Wertes einer solchen Abweichung entsprechenden Unregelmäßigkeit aktivierbar ist bzw. sind. Der Vorteil dieses untergeordneten Erfindungsgedankens ist, daß dieser eine entsprechend erfindungsgemäß ausgerüstete Heizungs- bzw. Kühlanlage besonders servicefreundlich macht. Denn es kann auf diese Weise dem Betreiber derselben die Vorhersage gegeben werden, daß er nicht mehr wirtschaftlich fährt, sondern etwas getan werden muß, weil entweder die Umwälzpumpe defekt ist oder eine oder mehrere der lokalen Drosseleinrichtung(en) hängt bzw. hängen, weil bei voller Öffnung aller Drosseleinrichtungen nicht mehr der benötigte Gesamtmassenstrom erreicht wird und dieser Zustand gemeldet wird, was mit herkömmlichen Mitteln weder bei bekannter außentemperatur- bzw. witterungsgeführter Steuerung noch bei bekannter Regelung mit kon-

0195255

stant vorgegebenem Sollwert für den Gesamtmassenstrom erreichbar ist. Dabei kommt diesem untergeordneten Erfindungsgedanken für Kühlbetrieb eine erhöhte Bedeutung zu, weil Energieeinsatz für Kühlung vergleichsweise sehr kostbar ist. Deshalb sollte man dafür sorgen, daß die Meldung bereits bei einem geringen Abstand des maximalen Gesamtmassenstroms (Anfahrgesamtmassenstroms) vom maximal möglichen Gesamtmassenstrom (Inbetriebnahmegesamtmassenstrom), jedenfalls aber bei einem geringeren Abstand dieser Art als bei Heizen veranlaßt wird.

Nachzutragen ist, daß in allen Fällen gemäß einem weiteren untergeordneten Erfindungsgedanken mit abnehmendem Wert der oberen oder unteren Grenze des Sollwert-Bandes die Differenz zwischen diesen beiden Grenzwerten und/oder das Verhältnis derselben zunehmend größer gewählt werden sollte. Hierfür kann in erfinderischer Fortbildung der Regelungsvorrichtung nach der Erfindung die Sollwert-Wahleinrichtung eine über eine Impulsleitung mit der Detektoreinrichtung verbundene Programmspeichereinrichtung mit einer über eine Impulsleitung mit der Sollwert-Bildungseinrichtung für die obere Grenze des Sollwert-Bandes des Gesamtmassenstroms verbundenen Verstelleinrichtung für diese und/oder einer über eine Impulsleitung mit der Sollwertbildungseinrichtung für die untere Grenze des Sollwert-Bandes des Gesamtmassenstroms verbundenen Verstelleinrichtung für diese oder eine Programmspeichereinrichtung für die obere Grenze des Sollwert-Bandes des Gesamtmassenstroms mit über eine Impulsleitung mit der Sollwert-Bildungseinrichtung für diese obere Grenze verbundenen Verstelleinrichtung für diese und/oder eine Programmspeichereinrichtung für die untere Grenze des Sollwert-Bandes des Gesamtmassenstroms mit über eine Impulsleitung mit der Sollwertbildungseinrichtung für diese untere Grenze verbundenen Verstelleinrichtung für diese aufweisen, wobei durch zumindest eine der Verstelleinrichtungen entsprechend einer in der bzw. den Programmspeichereinrichtung(en) gespeicherten Abhängigkeit das in der zugeordneten Sollwertbildungseinrichtung gebildete Verhältnis in dem Sinne veränderbar ist, daß einem kleiner werdenden Wert der oberen oder unteren Grenze des Sollwert-Bandes des Gesamtmassenstroms eine zunehmend größere Differenz zwischen diesen beiden Grenzwerten und/oder ein zunehmend größeres Verhältnis derselben entspricht. Es hat sich nämlich überraschend gezeigt, daß es insbesondere aus Gründen einer Verbesserung der Stabilität der Regelung und in bereits beschriebener Weise damit einhergehender Energieeinsparungen besonders zweckmäßig ist, wenn mit zunehmendem Schließen der lokalen Drosseleinrichtungen und entsprechend abnehmendem Gesamtmassenstrom eine größere Schwankungsbreite für diesen zugelassen wird, also auch die Bandbreite des erfindungsgemäßen Sollwert-Bandes größer vorgegeben wird.

Die Erfindung bietet aber gemäß einer weiteren sie zweckmäßig fortbildenden Ausgestaltung auch noch die bisher in der Fachwelt nicht für realisierbar gehaltene Möglichkeit für die Abgabe einer für den Benutzer einer Heizungs- bzw. Kühlanlage beschriebener Art höchst wertvollen weiteren Information, indem nämlich bei Fehlen einer Abweichung des Gesamtmassenstroms unter die untere Grenze seines Sollwert-Bandes überhaupt und/oder bei Fehlen einer Abweichung des Gesamtmassenstroms unter die untere Grenze seines Sollwert-Bandes innerhalb einer vorgegebenen Zeitspanne diese Unregelmäßigkeit optisch und/oder akustisch wahrnehmbar gemacht wird. Hierfür kann zweckmäßig vorrichtungsseitig mindestens eine Meldeeinrichtung zur Abgabe einer optisch und/oder akustisch wahrnehmbaren Information vorgesehen sein, die über eine Impulsleitung an eine Auslöseeinrichtung, die ihrerseits über eine Impulsleitung mit der Vergleichseinrichtung der Regeleinrichtung zur Bestimmung der Abweichung des Gesamtmassenstroms über die obere und/oder unter die untere Grenze seines Sollwert-Bandes und/oder mit einer Meßwertspeichereinrichtung verbunden ist, die über eine Impulsleitung mit dieser und/oder mit einer über eine Meßwertleitung mit der Meßeinrichtung für den Gesamtmassenstrom verbundenen Zeitsteuereinrichtung zur Durchführung einer Mehrzahl von Messungen des Gesamtmassenstroms durch diese Meßeinrichtung oder mit einer Zeitsteuereinrichtung zur Aufnahme und/oder zum Abruf eines Meßwertes oder einer Mehrzahl von von der Meßeinrichtung gelieferten Meßwerten des Gesamtmassenstroms durch diese Meßwertspeichereinrichtung bzw. von dieser jeweils innerhalb einer vorgegebenen Zeitspanne verbunden ist, angeschlossen und von dieser bei Fehlen einer Abweichung des Gesamtmassenstroms unter die untere Grenze seines Sollwert-Bandes und/oder bei Fehlen einer Abweichung des Gesamtmassenstroms unter die untere Grenze seines Sollwert-Bandes innerhalb einer vorgegebenen Zeitspanne zur Wahrnehmbarmachung dieser Unregelmäßigkeit aktivierbar ist bzw. sind. Hierdurch kann mit einfachen und kostengünstigen und dennoch höchst zuverlässigen Mitteln dem Benutzer einer Heizungs- bzw. Kühlanlage mitgeteilt werden, daß diese mit einem beträchtlichen Verlust an Wärme- bzw. Kälteenergie arbeitet, wie das etwa bei Heizungsbetrieb z. B. dann der Fall sein kann, wenn er sein zu beheizendes Haus oder dergleichen nicht geschlossen hält, sondern beispielsweise durch ein ständig offenes Fenster eines mit einem hohen Raumtemperatur-Sollwert bedienten Raumes Energie vergeudet, damit er entsprechende Maßnahmen treffen kann. Dies ist im übrigen für Kühlbetrieb noch wesentlich wichtiger, weil bei diesem durch Beseitigung einer solchen Kälteenergie-Leckage vergleichsweise wesentlich mehr an Kosten gespart werden kann als im Heizbetrieb. Die gleiche Information tritt aber auch bei einem gegenüber diesem nur mit Energievergeudung verbundenen Fall viel gravierenderen Fall eines echten Defektes in der Heizungs- bzw. Kühlanlage auf, nämlich immer dann, wenn eine oder mehrere der lokalen automatisch wirkenden Drosseleinrichtungen derart defekt sind, daß sie trotz anstehenden Rückführimpulses aus ihrer Offenstellung sich nicht mehr in eine Schließstellung zurückbewegen können. Auch dieser wichtige Störfall läßt sich mit diesem untergeordneten Erfindungsgedanken zuverlässig unverzüglich wahrnehmbar machen.

Weiterhin zeichnet sich die Erfindung gegenüber dem Stand der Technik dadurch aus, daß dem Nutzer derselben durch diese erstmalig die Möglichkeit an die Hand gegeben ist, mit ein und derselben Regelungsvorrichtung nach der Erfindung nach seiner eigenen Wahl und Bestimmung unterschiedliche Betriebsarten zu ihm genehmen Zeiten einstellen zu können, indem für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, eine große Bandbreite des Sollwert-Bandes des Gesamtmassenstroms bei niedriger oberer und/oder unterer Grenze desselben und/oder für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes des Gesamtmassenstroms bei mittlerer oberer und/oder unterer Grenze desselben und/oder für Nachtabsenkungs- bzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, eine vergleichsweise geringe Bandbreite des Sollwert-Bandes des Gesamtmassenstroms bei vergleichsweise hoher oberer und/oder unterer Grenze desselben und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine nur geringfügig über dem Verschwindwert liegende Bandbreite des Sollwert-Bandes des Gesamtmassenstroms bei mit voller Öffnung aller Drosseleinrichtungen bei Inbetriebnahme des Verfahrens als maximal möglicher Gesamtmassenstrom (Inbetriebnahmegesamtmassenstrom) oder bei Aufheizen nach einer Abkühlung als maximal möglicher oder maximaler Gesamtmassenstrom (Anfahrgesamtmassenstrom) gemessenem Gesamtmassenstrom vorgegeben wird. Entsprechend kann vorrichtungstechnisch die Regeleinrichtung eine Speichereinrichtung, in der mindestens zwei, vorzugsweise mehr, bevorzugte Paarungen von Ober- und Untergrenzen des Sollwert-Bandes des Gesamtmassenstroms, wie beispielsweise für Komfort- , Normal- , Spar- , Nachtabsenkungs- oder Frostschutzbetrieb, gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwertbildungseinrichtungen für die obere bzw. untere Grenze des Sollwert-Bandes des Gesamtmassenstroms oder mit der oder zumindest einer der etwa vorhandenen Programmspeichereinrichtung(en) für die Beeinflussung des Sollwert-Bandes des Gesamtmassenstroms oder mit zumindest einer etwa vorhandenen Verstelleinrichtung für diese oder mit zumindest einem Sollwertgeber verbunden ist. Zweckmäßig können dabei in der Speichereinrichtung die bevorzugten Paarungen von Ober- und Untergrenzen des Sollwert-Bandes des Gesamtmassenstroms mit in Richtung zunehmender Massenstromwerte vorzugsweise proportional geringer werdendem Unterschied und/oder Verhältnis von jeweiliger oberer und unterer Grenze des Gesamtmassenstroms gespeichert sein. Durch diese Möglichkeit der Wahl der Bänder wird dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes, das er im übrigen nicht über das gesamte Jahr zu benutzen braucht, sondern nur nach Wunsch bzw. Bedürfnis, dabei aber eine besondere Wirtschaftlichkeit trotz Offenhaltung aller Möglichkeiten für die Aufrechterhaltung praktisch beliebig hoher Raumtemperaturen in einem Teil der zu beheizenden Räume dadurch erreichen zu können, daß er zu Zeiten geringeren Wärmebedarfs ein ökonomischerem Betrieb entsprechendes Sollwert-Band, beispielsweise ein Normal- oder Spar-Band, den Regelungsbetrieb bestimmen läßt, bei dem alle anderen Räume mit vergleichsweise viel niedrigeren Wärmelasten bzw. Raumtemperaturen bedient werden. Entsprechendes gilt natürlich auch für Kühlbetrieb. Dabei liegt die besondere Wirtschaftlichkeit darin, daß nicht immer mit der größten Lastspitze gefahren werden muß, sondern man sich für die Zeiten geringerer Wärme- bzw. Kältelast, wie etwa bei Heizbetrieb beispielsweise jahreszeitlich bedingt im Sommerbetrieb und/oder nutzerbezogen bei Nachtabsenkung, mit einem günstigeren Sollwert-Band des Gesamtmassenstroms des Wärmeträgermediums zufrieden geben kann. Dies ist bei herkömmlichen Regelungsarten nicht möglich. Hier muß für einen bestimmten zeitlich nur begrenzt auftretenden Bedarfsfall für das ganze Jahr oder auch über die gesamte Tageszeit ausreichend Wärme- bzw. Kälteleistung vorgehalten werden, d. h., daß in den Zeiten ohne diesen Bedarfsfall sehr unwirtschaftlich gefahren wird, oder der Betreiber einer solchen Heizungs- bzw. Kühlanlage muß für jeden Bedarfsfall ständig seine Heizkurve umstellen.

Es ist im Rahmen der Erfindung auch möglich, die Bandbreite des Sollwert-Bandes des Gesamtmassenstroms mit ihrem Verschwindwert vorzugeben. Hierbei handelt es sich jedoch um eine spezifische Betriebsart der Erfindung, die nicht mit der bekannten Regelung mit konstant vorgegebenem Sollwert des Gesamtmassenstroms als Führungsgröße zu verwechseln ist. Bei dieser lediglich für kontinuierlichen Betrieb möglichen Regelung nach dem Stande der Technik muß nämlich voller Heizbetrieb aufrecht erhalten werden, was zu einem überlagerten Tätigsein der Drosseleinrichtungen mit den bereits beschriebenen nachteiligen Folgen insbesondere für die Stabilität der Regelung führt. Eine Betriebsart der Erfindung mit praktisch auf ihrem Verschwindwert gehaltener Bandbreite des Gesamtmassenstroms als Führungsgröße hingegen wird als Variante des Heizbetriebs praktisch dort einzusetzen sein, wo im Bereich extrem hohen Gesamtmassenstroms mit nur ganz seltenen Schalteingriffen zu rechnen ist, was einem Frostschutzbetrieb unter Bedingungen entsprechen würde, die keine oder allenfalls höchst seltene Gefahrentemperaturen erwarten lassen, die für das das Wärmeträgermedium führende Leitungssystem, die Heizkörper und die Umwälzpumpe etc. schädlich sein könnten. Schwierigkeiten bezüglich der Regelungstabilität sind in einem solchen Betriebsfall der Erfindung nicht zu erwarten.

Somit erbringt die Erfindung die Möglichkeit, jederzeit wunschgemäß von einer Betriebsart mit Aufrechterhaltung einer bei Heizbetrieb extrem hohen bzw. bei Kühlbetrieb extrem tiefen Temperatur in einem Teilbereich der mit der betreffenden Heizungs- bzw. Kühlanlage zu bedienenden Räume auf eine andere Betriebsart mit bei Heizbetrieb niedrigerer bzw. bei Kühlbetrieb höherer benötigter Raumtemperatur in dem betreffenden Teilbereich der mit der Heizungs- bzw. Kühlanlage zu bedienenden Räume umschalten zu können, was natürlich die vorteilhafte Folge hat, daß bei solcher Betriebsarten-Umschaltung in dieser Richtung die zu verkraftenden Wärmeverluste sowohl durch Wärme- bzw. Kälteableitung als auch durch Wärme- bzw. Kälteabstrahlung (Wärmeeinstrahlung) geringer werden, wobei erfindungsgemäß weder der Zahl solcher Umschaltvorgänge noch der Art der Umschaltung eine Grenze gesetzt ist, indem nämlich diese Umschaltung von einer Betriebsart auf die andere und wieder zurück auch kontinuierlich erfolgen kann.

Es ist ersichtlich, daß im Rahmen der Erfindung als Wärmeerzeuger ein brennstoffbefeuerter oder mit elektrischer Energie gespeister Kessel und/oder ein primärseitig mit Primärwärmeträgermedium beaufschlagter Wärmetauscher, wie beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe, bzw. als Kälteerzeuger eine Elektrokompressionskältemaschine und/oder eine gas- oder dieselmotorisch betriebene Kältemaschine oder Sorptionskältemaschine und als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Einrichtung zur Beeinflussung der Zufuhr der Betriebsenergie zum Wärme- bzw. Kälteerzeuger vorgesehen sein kann. Die durch die Erfindung aufgabengemäß erzielbare Universalität ist offenbar.

In Ausnutzung derselben durch die Erfindung kann gemäß einer erfinderischen Ausgestaltung derselben, bei der die Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger erfolgt, zweckmäßig bei Auftreten einer Abweichung des Gesamtmassenstroms über die obere Grenze seines vorgegebenen Soll- wert-Bandes hinaus die Zufuhr von Betriebsenergie zum Wärme- bzw. Kälteerzeuger aufgenommen und bei Auftreten einer Abweichung des Gesamtmassenstroms unter die untere Grenze seines Sollwert-Bandes die Zufuhr von Betriebsenergie zum Wärme- bzw. Kälteerzeuger beendet werden. Hierfür kann vorrichtungsseitig zweckmäßig vorgesehen sein, daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als Ein-Aus-Befehle zuführbar sind, wobei jeweils bei Ermittlung einer Abweichung des Gesamtmassenstroms über die obere Grenze seines vorgegebenen Sollwert-Bandes hinaus durch einen Ein-Befehl die Zufuhr von Betriebsenergie zum Wärme- bzw. Kälteerzeuger freigebbar und bei Ermittlung einer Abweichung des Gesamtmassenstroms unter die untere Grenze seines vorgegebenen Sollwert-Bandes durch einen Aus-Befehl die Zufuhr von Betriebsenergie zum Wärme- bzw. Kälteerzeuger sperrbar ist.

Eine weitere vorteilhafte Ausbildung und wesentliche erfinderische Ausgestaltung wird dadurch erreicht, daß die Veränderung der dem im Heizungs- bzw. Kühlmittelvorlauf befindlichen Wärmeträgermedium zugeführten Wärme- bzw. Kälteleistung durch ein veränderbares Zeitverhältnis der Ein- zur Ausschaltung der Zufuhr der Betriebsenergie zum Wärme- bzw. Kälteerzeuger erfolgt, zweckmäßig bei Auftreten einer Abweichung des Gesamtmassenstroms über die obere Grenze seines vorgegebenen Sollwert-Bandes hinaus die Zufuhr von Betriebsenergie zum Wärme- bzw. Kälteerzeuger durch Vergrößerung des Zeitverhältnisses der Ein- zur Ausschaltung der Zufuhr von Betriebsenergie zum Wärme- bzw. Kälteerzeuger entsprechend dem Maß der Abweichung erhöht wird und bei Auftreten einer Abweichung des Gesamtmassenstroms unter die untere Grenze seines Sollwert-Bandes die Zufuhr von Betriebsenergie zum Wärme- bzw. Kälteerzeuger durch Verkleinerung des Zeitverhältnisses der Ein- zur Ausschaltung der Zufuhr von Betriebsenergie zum Wärme- bzw. Kälteerzeuger entsprechend dem Maß der Abweichung verringert wird. Hierfür kann vorrichtungsseitig zweckmäßig vorgesehen sein, daß die Regeleinrichtung einen zeitlich getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als veränderbare Zeitverhältnisse der Ein- zur Ausschaltung der Zufuhr von Betriebsenergie zum Wärme- bzw. Kälteerzeuger zuführbar sind, wobei jeweils bei Ermittlung einer Abweichung des Gesamtmassenstroms über die obere Grenze seines vorgegebenen Sollwert-Bandes hinaus die Zufuhr von Betriebsenergie zum Wärme- bzw. Kälteerzeuger durch ein größeres Zeitverhältnis der Ein- zur Ausschaltung der Zufuhr von Betriebsenergie zum Wärme- bzw. Kälteerzeuger entsprechend dem Maß der Abweichung erhöhbar und bei Ermittlung einer Abweichung des Gesamtmassenstroms unter die untere Grenze seines vorgegebenen Sollwert-Bandes die Zufuhr von Betriebsenergie zum Wärme- bzw. Kälteerzeuger durch ein kleineres Zeitverhältnis der Ein- zur Ausschaltung der Zufuhr von Betriebsenergie zum Wärme- bzw. Kälteerzeuger entsprechend dem Maß der Abweichung verringerbar ist

Bei allen diesen mit diskontinuierlicher Zufuhr der Wärme- bzw. Kälteleistung zum Heizungs- bzw. Kühlmittelvorlauf arbeitenden Anlagen, bei denen üblicherweise, jedoch keinesfalls notwendig, mit geringer Wärmeträgermediums-Vorlage gearbeitet wird, beispielsweise indem Kessel mit geringer Wasservorlage oder beispielsweise als Therme oder Geyser bezeichnete Durchlauferhitzer oder aber Wärmepumpen bzw. Kältemaschinen ohne Pufferspeicher als Wärme- bzw. Kälteerzeuger eingesetzt werden, ist die bekannte Regelung mit konstantem Sollwert des Gesamtmassenstroms als Führungsgröße nicht funktionsfähig, wie vorstehend bereits ausführlich erläutert. Herkömmliche Regelungen mit Führung über die Außentemperatur sind bei allen Systemen dieser Art, die eine verhältnismäßig große Spreizung zwischen Vorlauf- und Rücklauftemperatur des Wärmeträgermediums haben, nur schwer zu verwirklichen, weil nach Abschalten die Vorlauftemperatur zur Rücklauftemperatur wird und damit während der Auszeit eine große Differenz zur eingestellten witterungsgeführten Vorlauftemperaturvorgabe auftritt. Hier müßte der Wärme bzw. Kälteerzeuger ständig takten, um diese Temperatur zu halten, es sei denn, man würde künstliche Verzögerungsglieder etc. einsetzen oder eine so große Hysterese vorgeben, daß der Einfluß der Führung durch Außentemperatur bzw. Witterung praktisch ausgeschaltet wäre. Hier könnten weder auf Implementierung in der Regeleinrichtung beruhende Maßnahmen noch ein Referenzraum wirksam Abhilfe schaffen, der gleichfalls eine Zeitdehnung erbringen würde, weil sich der Raum nicht sofort erwärmt oder abkühlt, also selbst eine Zeitspreizeinrichtung darstellt, die einen Zeitpuffer erbringt. Nicht zu übersehen ist ferner auch der sich hier einstellende Nachteil, daß stets ein gewisses Maß an Überversorgung an Energie vorzusehen ist, d. h. der Referenzraum temperaturmäßig um ein gewisses Maß zu hoch eingestellt werden muß, um zu vermeiden, daß die anderen Räume an Energieunterversorgung leiden.

Bei einer Ausführung der Erfindung mit Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger kann es in erfinderischer Fortbildung besonders zweckmäßig sein, wenn bei Auftreten einer Abweichung des Gesamtmassenstroms über die obere Grenze seines vorgegebenen Sollwert-Bandes hinaus die Zufuhr von Betriebsenergie zum Wärme bzw. Kälteerzeuger in Abhängigkeit von dieser Abweichung vergrößert und bei Auftreten einer Abweichung des Gesamtmassenstroms unter die untere Grenze seines vorgegebenen Sollwert-Bandes die Zufuhr von Betriebsenergie zum Wärme- bzw. Kälteerzeuger in Abhängigkeit von dieser Abweichung verringert wird. Entsprechend kann vorrichtungsseitig zweckmäßig vorgesehen sein, daß die Regeleinrichtung einen einen während der Betriebsdauer des Wärme- bzw. Kälteerzeugers ständig vorhandenen modulierten Stellbefehl abgebenden Stellbefehlgeber aufweist, mittels dessen der Einrichtung zur Beeinflussung der Zufuhr der Betriebsenergie zum Wärme- bzw. Kälteerzeuger die Stellbefehle als betragsmäßige Modulationsunterschiede eines während der Betriebsdauer ständig anstehenden Betriebsbefehls zuführbar sind, wobei jeweils bei Ermittlung einer Abweichung des Gesamtmassenstroms über die obere Grenze seines vorgegebenen Soll-wert-Bandes hinaus die Zufuhr von Betriebsenergie zum Wärme- bzw. Kälteerzeuger in Abhängigkeit von dieser Abweichung vergrößerbar und bei Ermittlung einer Abweichung des Gesamtmassenstroms unter die untere Grenze seines vorgegebenen Sollwert-Bandes die Zufuhr von Betriebsenergie zum Wärme- bzw. Kälteerzeuger in Abhängigkeit von dieser Abweichung verringerbar ist.

Während bei herkömmlichen Regelungen mit kontinuierlicher Einspeisung der Wärme- bzw. Kälteleistung in den Heizungs- bzw. Kühlmittelvorlauf der Vorteil der Kontinuität nur so ausgenutzt wird, daß bei diesen Regelungen die Kontinuität lediglich auf äußere Systemgrößen gerichtet ist, wie beispielsweise das Halten einer Vorlauftemperatur als Funktion der Außentemperatur oder einer Referenzraumtemperatur, und damit nicht der wahre Verbrauch des Benutzers, sondern eine an sich systemwidrige physikalische Größe nachgefahren wird, was dazu führt, daß sich praktisch alle automatisch wirkenden Drosseleinrichtungen bei Heizbetrieb in einer Schließstellung bzw. bei Kühlbetrieb in einer Öffnungsstellung befinden, die zu groß bzw. zu gering ist, weil Fremdeinflüsse hier praktisch nicht erfassbar sind, bietet diese erfinderische Fortbildung der Erfindung eine echte innere Bezugsgröße in Form der sich im Betrieb automatisch einstellenden Änderungen des Gesamtmassenstroms, die es erlaubt, die Leistung des Wärme- bzw. Kälteerzeugers exakt auf den im jeweiligen Zeitpunkt bzw. im Verlauf der Betriebszeit jeweils auftretenden Wärme- bzw. Kälteenergiebedarf abzustimmen und die Regelung zudem auch noch besonders feinstufig kontinuierlich diesem tatsächlichen Verbrauch nachfahren zu können.

Eine andere alternative Ausgestaltung der Erfindung befaßt sich mit der Regelung über Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, und sieht in nicht naheliegender Weise vor, daß bei Auftreten einer Abweichung des Gesamtmassenstroms über die obere oder unter die untere Grenze seines vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert wird. Hierfür kann vorrichtungsseitig zweckmäßig als Wärmeerzeuger ein brennstoffbefeuerter oder mit elektrischer Energie gespeister Kessel und/oder ein primärseitig mit Primärwärmeträgermedium beaufschlagter Wärmetauscher, wie beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe bzw. als Kälteerzeuger eine Elektrokompressionskältemaschine oder eine gas- oder dieselmotorisch betriebene Kältemaschine oder Sorptionskältemaschine, und als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Mehrwege-Mischeinrichtung, wie beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs- bzw. Kühlmittelrücklauf kommenden Beimischleitung für Wärmeträgermedium verbindender Drei-Wege-Mischer oder ein den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen sein, wobei die Regeleinrichtung einen einen während der Betriebsdauer der Vorrichtung ständig vorhandenen modulierten Stellbefehl abgebenden Stellbefehlgeber aufweist, mittels dessen dem Antrieb der Mehr-wege-Mischeinrichtung die Stellbefehle als betragsmäßige Modulationsunterschiede eines während der Betriebsdauer der Vorrichtung ständig anstehenden Betriebsbefehls zuführbar sind, wobei jeweils bei Ermittlung einer Abweichung des Gesamtmassenstroms über die obere oder unter die untere Grenze seines vorgegebenen Sollwert-Bandes die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung veränderbar ist.

In weiterer zweckmäßiger Fortbildung dieses untergeordneten Erfindungsgedankens kann der Anteil des vom Wärme- bzw. Kälteerzeuger her in den Heizungs- bzw. Kühlmittelvorlauf eingespeisten Massenstroms am Gesamtmassenstrom bei Auftreten einer Abweichung des Gesamtmassenstroms über die obere Grenze seines vorgegebenen Soll-wert-Bandes hinaus vergrößert und bei Auftreten einer Abweichung des Gesamtmassenstroms unter die untere Grenze seines vorgegebenen Soll-wert-Bandes verringert werden. Hierfür kann vorrichtungsseitig zweckmäßig ein einen modulierten kontinuierlichen Stellbefehl abgebender Stellbefehlgeber vorgesehen sein, mittels dessen der Antrieb der Mehrwege-Mischeinrichtung in dem Sinne betätigbar ist, daß der Anteil des vom Wärme- bzw. Kälteerzeuger her in den Heizungs- bzw. Kühlmittelvorlauf eingespeisten Massenstroms zum Gesamtmassenstrom bei Ermittlung einer Abweichung des Gesamtmassenstroms über die obere Grenze seines vorgegebenen Sollwert-Bandes hinaus vergrößerbar und bei Ermittlung einer Abweichung unter die untere Grenze seines vorgegeben Sollwert-Bandes verringerbar ist.

Abgesehen davon, daß sich bei Nutzung der Erfindung in Verbindung mit Mehrwege-Mischern welcher Ausführung auch immer die gleichen Vorteile ergeben, wie diese bereits im Zusammenhang mit kontinuierlich arbeitenden Systemen beschrieben sind, stellt sich bei dieser Variante der Erfindung zusätzlich noch eine weitere Zahl gern genutzter Vorteile ein. Zwar ist grundsätzlich eine im Ein-Aus-Betrieb arbeitende Heizungs- bzw. Kühlanlage bzw. -vorrichtung im allgemeinen billiger als eine kontinuierlich arbeitende entsprechende Anlage bzw. Vorrichtung, es hat sich jedoch herausgestellt, daß im ersteren Fall auch bei Nutzung der Erfindung ein breiteres Sollwert-Band für den Gesamtmassenstrom zu wählen ist als bei einer kontinuierlich arbeitenden Anlage bzw. Vorrichtung, weil der Ein-Aus-Betrieb prinzipiell immer um ein bestimmtes Maß zu viel Energie abgibt, man also dann, wenn man ein zu schmales Band gewählt hat, zu viele Schaltspiele erhält, was aus vorstehend bereits beschriebenen Gründen unerwünscht ist. Um das zu mindern und zu einem energiesparenderen schmaleren Sollwert-Band für den Gesamtmassenstrom des Wärmeträgermediums zu kommen, nutzt die Erfindung in ihrer mit Mehrwege-Mischern arbeitenden Ausführungsform die Glättungsfunktion eines solchen Mischers aus, indem dessen Sollwert-Band, d. h. das Sollwert-Band für die Verstellung seines Ventilgliedes, schmäler gehalten werden kann. Die sich hierdurch überraschend einstellende günstige Folge ist, daß hierdurch mit geringem Mehraufwand für den Mehrwege-Mischer das diskontinuierlich arbeitende System zu einem quasi-kontinuierlich arbeitenden System mit allen Vorteilen eines kontinuierlich arbeitenden Systems gemacht werden kann. Hierdurch werden ferner auch die Nachteile eines in herkömmlicher Weise mit außentemperaturgeführtem Mischer arbeitenden Systems, bei dem dem Mischer in Abhängigkeit von der Außentemperatur ein Vorlaufsollwert aufgeprägt wird, so daß er zwar diesem kontinuierlich, aber schon kontinuierlich systemwidrig und nicht auf den tatsächlichen Bedarf abgestellt nachfährt, ausgeschaltet, die im übrigen die gleichen sind wie für eine Anlage mit beispielsweise kontinuierlich witterungsgeführtem Brenner.

Abgesehen davon, daß sich bei Nutzung der Erfindung in Verbindung mit Mehrwege-Mischern welcher Ausführung auch immer die gleichen Vorteile ergeben, wie diese bereits im Zusammenhang mit kontinuierlich arbeitenden Systemen beschrieben sind, stellt sich bei dieser Variante der Erfindung zusätzlich noch eine weitere Zahl gern genutzter Vorteile ein. Zwar ist grundsätzlich eine im Ein-Aus-Betrieb arbeitende Heizungs- bzw. Kühlanlage bzw. -vorrichtung im allgemeinen billiger als eine kontinuierlich arbeitende entsprechende Anlage bzw. Vorrichtung, es hat sich jedoch herausgestellt, daß im ersteren Fall auch bei Nutzung der Erfindung ein breiteres Sollwert-Band für den Gesamtmassenstrom zu wählen ist als bei einer kontinuierlich arbeitenden Anlage bzw. Vorrichtung, weil durch Vergrößerung des Zeitverhältnisses des Ein- zum Aus-Betrieb prinzipiell immer um ein bestimmtes Maß zu viel Energie abgibt, man also dann, wenn man ein zu schmales Band gewählt hat, zu viele Schaltspiele erhält, was aus vorstehend bereits beschriebenen Gründen unerwünscht ist. Um das zu mindern und zu einem energiesparenderen schmaleren Sollwert-Band für den Gesamtmassenstrom des Wärmeträgermediums zu kommen, nutzt die Erfindung in ihrer mit Mehrwege-Mischern arbeitenden Ausführungsform die Glättungsfunktion eines solchen Mischers aus, indem dessen Sollwert-Band, d. h. das Sollwert-Band für die Verstellung seines Ventilgliedes, schmäler gehalten werden kann. Die sich hierdurch überraschend einstellende günstige Folge ist, daß hierdurch mit geringem Mehraufwand für den Mehrwege-Mischer das diskontinuierlich arbeitende System zu einem quasi-kontinuierlich arbeitenden System mit allen Vorteilen eines kontinuierlich arbeitenden Systems gemacht werden kann. Hierdurch werden ferner auch die Nachteile eines in herkömmlicher Weise mit außentemperaturgeführtem Mischer arbeitenden Systems, bei dem dem Mischer in Abhängigkeit von der Außentemperatur ein Vorlaufsollwert aufgeprägt wird, so daß er zwar diesem kontinuierlich, aber schon kontinuierlich systemwidrig und nicht auf den tatsächlichen Bedarf abgestellt nachfährt, entsprechend dem Maß der Abweichung verringert wird, die im übrigen die gleichen sind wie für eine Anlage mit beispielsweise kontinuierlich witterungsgeführtem Brenner.

Die Erfindung bietet gemäß einem weiteren untergeordneten Erfindungsgedanken aber auch noch eine andere bisher in der Fachwelt nicht für realisierbar gehaltene Möglichkeit der Verbesserung der Betriebsweise der Regelung im Sinne einer Vereinfachung und Verbilligung bei gleichzeitiger Einsparung technisch hochqualifizierten Inbetriebnahmepersonals mit langjähriger Erfahrung oder der Notwendigkeit zeit- und kostenaufwendiger Einweisungen des Benutzers. In dieser nicht naheliegenden Ausgestaltung schafft die Erfindung gemäß der dieser zugrundeliegenden untergeordneten Teilaufgabe erstmalig die Möglichkeit, der Regelung eine Art von systemimmanenter Intelligenz integrieren zu können. Hierfür sieht dieser untergeordnete Erfindungsgedanke vor, daß über eine vorbestimmte Zeitspanne die Anzahl der im Betrieb auftretenden Abweichungen des Gesamtmassenstroms über die obere und/oder unter die untere Grenze seines Sollwert-Bandes und/oder die Anzahl der im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung gemessen und entsprechend der Abweichung dieser Anzahl von einer vorgegebenen Zahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung das Sollwert-Band des Gesamtmassenstroms verändert wird.

Hierbei handelt es sich um eine Art Selbstlernvorgang, bei dem die Vorrichtung nach der Erfindung selbst die eigene ihr vorgegebene Bandbreite für das Sollwert-Band des Gesamtmassenstroms erfaßt, und zwar dies in Erfüllung einer weiteren zugrundeliegenden untergeordneten Teilaufgabe so, daß immer ein Optimum für Energieeinsparung bei Maximierung des Wartungsintervalls bzw. der Lebensdauer eingestellt wird. Der wichtige Vorteil hiervon ist, daß es für das Erreichen eines optimalen Betriebes bei der Ausgestaltung der Erfindung gemäß diesem untergeordneten Gedanken derselben praktisch nicht darauf ankommt, ob die eine oder beide Grenze(n) des Sollwert-Bandes des Gesamtmassenstroms von vornherein in der Nähe des optimalen Arbeitswertes eingestellt ist bzw. sind, vielmehr auch dann, wenn seitens des Installateurs oder des Betreibers einer mit der Erfindung in dieser Ausgestaltung ausgerüsteten Heizungs- bzw. Kühlanlage ungünstigere Werte für die Führungsgröße in Form des erfindungsgemäßen Sollwert-Bandes für den Gesamtmassenstrom eingestellt worden sein sollten, sich die Vorrichtung nach der Erfindung selbst durch Selbstbeobachtung, d. h. in zeitlicher Folge gewonnene Meßwertnahme und Verarbeitung dieser Meßwerte in geeigneter Weise ihr eigenes Sollwert-Band so verändert, daß es sowohl der eingestellten gewünschten Betriebsweise als auch den herrschenden systemimmanenten und/oder von der Außenumgebung aufgeprägten Einflüssen gerecht wird, wobei bei ungünstiger erstmaliger Wahl der einen oder beider Grenze(n) des Sollwert-Bandes lediglich eine verhältnismäßig geringfügig längere Zeit die Folge ist, bis die Vorrichtung nach der Erfindung in das jeweils optimale Sollwert-Band selbsttätig eingelaufen ist.

Für Fälle, in denen je nach Auslegung der Vorrichtung nach der Erfindung das Selbstlernen über den Gesamtmassenstrom unmittelbar erfolgen soll, kann in weiterer Verbesserung der Vorrichtung nach der Erfindung die Regeleinrichtung eine vorzugsweise über eine Impulsleitung mit der Meßeinrichtung für den Gesamtmassenstrom verbundene Zeitsteuereinrichtung zur Durchführung einer Mehrzahl von Messungen des Gesamtmassenstroms durch die Meßeinrichtung oder zur Aufnahme und/oder zum Abruf eines Meßwertes oder einer Mehrzahl von von der Meßeinrichtung gelieferten Meßwerten des Gesamtmassenstroms während einer vorgegebenen Zeitspanne, eine Vergleichseinrichtung zur Ermittlung der Größe und/oder Richtung einer etwaigen Abweichung dieser Meßwerte über die obere und/oder unter die untere Grenze des vorgegebenen Sollwert-Bandes des Gesamtmassenstroms, eine Zähleinrichtung für die während dieser vorgegebenen Zeitspanne etwa aufgetretenen Abweichungen dieser Meßwerte, eine Programmspeichereinrichtung für eine vorgegebene während dieser vorgegebenen Zeitspanne zulässige Zahl von im Betrieb auftretenden Abweichungen des Gesamtmassenstroms über die obere und/oder unter die untere Grenze seines Sollwert-Bandes und eine Detektoreinrichtung zur Ermittlung einer etwaigen Abweichung der von der Zähleinrichtung ermittelten Anzahl während dieser vorgegebenen Zeitspanne etwa aufgetretener Meßwertabweichungen von der durch die Programmspeichereinrichtung vorgegebenen für diese vorgegebene Zeitspanne zulässigen Zahl von Meßwertabweichungen sowie eine über eine Impulsleitung mit zumindest einem der Sollwertgeber verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Meßwertabweichungen von der zulässigen Zahl derselben aufweisen.

Soll hingegen bei entsprechender Ausgestaltung der Vorrichtung nach der Erfindung das Selbstlernen über die Schaltspiele derselben erfolgen, so kann gemäß einer erfinderischen Variante dieses letztgenannten untergeordneten Erfindungsgedankens mit Vorzug die Regeleinrichtung eine weitere Zähleinrichtung zur Ermittlung der Anzahl der während einer vorgegebenen Zeitspanne im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium mit Zählwerk für diese Veränderungen, eine Programmspeichereinrichtung für eine vorgegebene während dieser vorgegebenen Zeitspanne zulässige Zahl solcher Veränderungen und eine Detektoreinrichtung zur Ermittlung einer etwaigen Abweichung der vom Zählwerk der weiteren Zähleinrichtung ermittelten Anzahl solcher während dieser vorgegebenen Zeitspanne etwa aufgetretener Veränderungen von der durch die Programmspeichereinrichtung vorgegebenen für diese vorgegebene Zeitspanne zulässigen Zahl solcher Veränderungen sowie eine über eine Impulsleitung mit dem Sollwertgeber verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Veränderungen von der zulässigen Zahl derselben aufweisen.

Dabei kann in allen diesen Fällen das erwünschte Selbstlernen gemäß einer erfinderischen Weiterbildung dieses untergeordneten Erfindungsgedankens dadurch erfolgen, daß bei Messung einer gegenüber einer vorgegebenen Zahl von Abweichungen des Gesamtmassenstroms über die obere und/oder unter die untere Grenze seines Sollwert-Bandes und/oder einer gegenüber einer vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung größeren Anzahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes des Gesamtmassenstroms in Richtung einer Vergrößerung der Differenz dieser beiden Grenzen verändert und bei Messung einer gegenüber der vorgegebenen Zahl von Abweichungen des Gesamtmassenstroms über die obere und/oder unter die untere Grenze seines Sollwert-Bandes und/oder einer gegenüber der vorgegebenen Anzahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung geringeren Anzahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes des Gesamtmassenstroms in Richtung einer Verringerung der Differenz dieser beiden Grenzen verändert wird. Die hierfür zweckmäßige Fortbildung der Vorrichtung nach der Erfindung kennzeichnet sich durch einen durch die Einrichtung zur automatischen Veränderung des SollwertBandes bei Ermittlung einer gegenüber einer vorgegebenen Zahl von Abweichungen des Gesamtmassenstroms über die obere und/oder unter die untere Grenze seines Sollwert-Bandes bzw. einer gegenüber einer vorgegebenen Zahl von Veränderungen der Zufuhr von Wärme- bzw. Kälteleistung zum im Heizungs- bzw. Kühlmittelvorlauf befindlichen Wärmeträgermedium größeren Anzahl solcher Abweichungen des Gesamtmassenstroms bzw. solcher Veränderungen dieser Wärme- bzw. Kälteleistungszufuhr im Sinne einer Vergrößerung der Differenz der beiden Grenzen dieses Sollwert-Bandes und bei Ermittlung einer gegenüber einer vorgegebenen Zahl solcher Abweichungen des Gesamtmassenstroms bzw. einer gegenüber einer vorgegebenen Zahl solcher Veränderungen dieser Wärme- bzw. Kälteleistungszufuhr geringeren Anzahl solcher Abweichungen des Gesamtmassenstroms bzw. solcher Veränderungen dieser Wärme- bzw. Kälteleistungszufuhr im Sinne einer Verringerung der Differenz der beiden Grenzen dieses Sollwert-Bandes verstellbaren Sollwertgeber.

Hervorzuheben ist in diesem Zusammenhang, daß sich dieses Selbstlernen der Vorrichtung nach der Erfindung besonders bei Einsatz derselben in Verbindung mit mit elektrischer Energie betriebenen Wärmepumpen oder Kältemaschinen vorteilhaft auswirkt, indem nämlich sich für diese ein besonders schonender Betrieb erreichen läßt und ferner ohne aufwendige Implementierungen den Vorschriften der öffentlichen Energieversorgungsunternehmen bezüglich beispielsweise der zulässigen Zahl von Einschaltvorgängen pro Zeiteinheit, z. B. 3 mal pro Stunde, durch einfaches Einprogrammieren eines entsprechenden Regelalgorithmus genüge getan werden kann.

Weiterhin ist hervorzuheben, daß nicht nur die sich mit dem Optimieren der Regelkonstanten oder die sich mit der Meldung von Unregelmäßigkeiten oder aber auch die sich mit unterschiedlichen Betriebsarten, wie Komfort- , Normal- , Nachtabsenkungs- bzw. Nachterwärmungs- oder Sparbetrieb oder dergleichen befassenden Ausführungsformen der Erfindung, sondern auch die sich mit der Ermittlung der geeigneten Grenzwerte für das die Führungsgröße für die erfindungsgemäße Regelung bildende Sollwert-Band des Gesamtmassenstroms und nicht zuletzt auch die sich mit dem Selbstlernen des von systemimmanenten ebenso wie von von außen her aufgeprägten Einflußgrößen abhängigen Optimierens dieser Führungsgröße befassenden Ausführungsformen der Erfindung aus Gründen insbesondere der Energieeinsparung und wirtschaftlichen Verfahrensführung für Kühlbetrieb bereits prinzipiell wesentlich größere Bedeutung haben als für Heizbetrieb.

Der der Erfindung zugrunde liegenden Teilaufgabe der möglichst weitgehenden Einsparung von Energieverbrauch widmet sich eine andere erstmalig durch die Erfindung mögliche erfinderische Fortbildung, gemäß derer für den Beginn einer Abkühlung und/oder für den Beginn einer Erwärmung ein Sollwert-Band des Gesamtmassenstroms mit einer bei vergleichsweise hoher oberer und/oder unterer Grenze desselben nur geringfügig über dem Verschwindwert liegenden Differenz zwischen dieser oberen und unteren Grenze mit einer zeitlichen Toleranzschwelle vorgegeben wird. Vorrichtungsmäßig kann hierfür zweckmäßig vorgesehen sein, daß die Regeleinrichtung für den Beginn einer Abkühlung und/oder für den Beginn einer Erwärmung auf eine bei vergleichsweise hohem Wert für die obere bzw. die untere Grenze des Sollwert-Bandes des Gesamtmassenstroms nur geringfügig über dem Verschwindwert liegende Differenz zwischen oberer und unterer Grenze dieses Sollwert-Bandes eingestellte Sollwertgeber und eine Zeitgabeeinrichtung aufweist, mittels derer bei Heizbetrieb eine Abkühlung um eine vorbestimmte Zeitspanne beschleunigt und/oder eine Aufheizung um eine vorbestimmte Zeitspanne verzögert bzw. bei Kühlbetrieb eine Erwärmung um eine vorbestimmte Zeitspanne beschleunigt und/oder eine Abkühlung um eine vorbestimmte Zeitspanne verzögert einleitbar ist.

Es ist ersichtlich, daß bei einer Heizungsanlage dann, wenn gemäß der Erfindung von Tagbetrieb, wie immer dieser als Komfort- oder Normal- oder auch Sparbetrieb gewählt sein mag, auf Nachtbetrieb von einem Sollwert-Band größerer Breite auf ein solches sehr geringer Breite bei vergleichsweise sehr großem Wert der oberen und/oder unteren Grenze desselben als Führungsgröße für den Nachtabsenkbetrieb umgeschaltet wird, sich aufgabengemäß eine Energieeinsparung im Nachtabsenkungsbetrieb ergibt. Dieser wird über eine Zeitgabeeinrichtung mit Zeitschaltwerk eingeleitet und beendet. Im Zuge der Einleitung muß der Ist-Wert des Gesamtmassenstroms, der sich ordnungsgemäß innerhalb beider Grenzen seines Sollwert-Bandes oder aber oberhalb der oberen oder auch unterhalb der unteren Grenze desselben befinden mag, auf einen dem Sollwert-Band für Nachtabsenkbetrieb entsprechenden größeren Wert gebracht werden. Wird jetzt durch die Meßeinrichtung für den Ist-Wert des Gesamtmassenstroms festgestellt, daß dieser beispielsweise bereits eine Zeitspanne vor dem programmierten Umschaltzeitpunkt im Steigen begriffen ist, so ist es als erwünscht anzusehen, wenn dieses Steigen auf den dem Nachtabsenkbetrieb entsprechenden Wert bereits jetzt freigegeben und vermieden werden könnte, daß der Wärmeerzeuger noch einmal Wärmeleistung in das das Wärmeträgermedium führende Leitungssystem einschiebt, obgleich aufgrund der individuellen Betriebsverhältnisse zu diesem Zeitpunkt die Regelung eigentlich hierfür zu sorgen hätte. Hier wird gemäß diesem unter geordneten Erfindungsgedanken derart eingegriffen, daß dem vorprogrammierten oder vom Betreiber der Heizungsanlage individuell gewählten Umschaltzeitpunkt eine zeitliche Toleranzschwelle vorgeschaltet wird, so daß solche unnötigen Energiezuführungsmaßnahmen bereits zu Beginn dieser zeitlichen Toleranzschwelle vermieden werden. Gleiches gilt natürlich auch dann, wenn zu dem programmierten oder vom Betreiber der Anlage individuell eingestellten Zeitpunkt, beispielsweise zum Morgen des kommenden Tages, der Gesamtmassenstrom aus seinem Sollwert-Band für Nachtabsenkbetrieb wieder in einen vorprogrammierten oder auch seitens des Betreibers der Anlage individuell eingestellten Tagesbetrieb mit entsprechendem Sollwert-Band als Führungsgröße zu überführen ist. Hier kann es nämlich von Vorteil sein, wenn der Aufheizzeitpunkt aufgrund einer gemäß diesem untergordneten Erfindungsgedanken eingesetzten zeitlichen Toleranzschwelle gegenüber dem programmierten bzw. der Vorrichtung nach der Erfindung betreiberseitig vorgegebenen Zeitpunkt nachverlegt wird. Auch in solchen Fällen ergeben sich wertvolle Energieeinsparungen, denn es wird zufolge der Ist-Wert-Überwachung des Gesamtmassenstroms durch die Erfindung der im Nachtabsenkbetrieb arbeitenden Heizungsanlage auch nach dem vorprogrammierten bzw. betreiberseitig eingestellten Zeitpunkt des Rückkehrens auf Tagbetrieb dann noch die Möglichkeit belassen, für die diesem Zeitpunkt nachgeschaltete zeitliche Toleranzschwelle unter Einfluß der Regelung für Nachtabsenkbetrieb zu verbleiben, wenn sich der Ist-Wert des Gesamtmassenstroms innerhalb des Sollwert-Bandes für Nachtabsenkbetrieb in Richtung der unteren Grenze, d. h. in Richtung auf Zufuhr höherer Wärmeleistung, bewegt, um dann innerhalb der für diesen Umschaltvorgang vorgesehenen zeitlichen Toleranzschwelle oder nach Ablauf derselben zwangsweise auf Tagesbetrieb umgeschaltet zu werden, was nunmehr die Zufuhr einer entsprechend größeren Wärmeleistung zum das Wärmeträgermedium führenden Leitungssystem bedeutet.

Ähnlich, nur mit erheblich größerem Energiespareffekt, kann dieser untergeordnete Erfindungsgedanke für Kühlbetrieb nutzbar gemacht werden. Während aber bei Heizbetrieb eine Abkühlung um eine vorbestimmte Zeitspanne beschleunigt (Umschaltung auf Nachtabsenkbetrieb) und/oder eine Aufheizung um eine vorbestimmte Zeitspanne verzögert (Rückumschaltung auf Tagesbetrieb) erfolgt, wird bei Kühlbetrieb eine Erwärmung um eine vorbestimmte Zeitspanne beschleunigt (Umschaltung auf Nachtbetrieb) und/oder eine Abkühlung um eine vorbestimmte Zeitspanne verzögert eingeleitet (Rückumschaltung auf Tagesbetrieb). In sämtlichen Fällen jedoch wird gemäß diesem untergeordneten Erfindungsgedanken in Abhängigkeit vom jeweiligen Regelungsverhalten der betreffenden Heizungs- bzw. Kühlanlage so Einfluß auf den vorprogrammierten bzw. voreingestellten Umschaltzeitpunkt von Tagesbetrieb auf Nachtabsenkbetrieb und/oder umgekehrt genommen, daß Energieverluste an Wärme- bzw. Kälteenergie in jedem Falle auf ein Minimum gebracht werden. Auch insoweit liegt bei einer Ausführung der Erfindung gemäß diesem untergeordneten Gedanken derselben eine Art Selbstlernfunktion vor.

Und schließlich befaßt sich ein wiederum anderer untergeordneter Erfindungsgedanke gleichfalls mit einer untergeordneten Teilaufgabe zur der Erfindung zugrunde liegenden Gesamtaufgabe, indem nämlich ohne besondere Zusatzinvestitionen und ferner auch ohne arbeits- und schmutzintensiven Montageaufwand dem Betreiber einer Heizungs- bzw. Kühlanlage als Verbraucher eine Betriebskostenanzeige an die Hand gegeben werden können soll. Hierfür sieht die Erfindung vor, daß kontinuierlich oder in vorbestimmten Zeitabständen die Temperatur des Wärmeträgermediums am Eintritt in den Heizungs- bzw. Kühlmittelvorlauf (Vorlauftemperatur) und am Eintritt in den Wärme- bzw. Kälteerzeuger (Rücklauftemperatur) gemessen und die Differenz dieser beiden Meßwerte gebildet und gewünschtenfalls optisch und/oder akustisch wahrnehmbar gemacht wird. Hierfür können vorrichtungsseitig jeweils über Meßwertleitungen mit der Regeleinrichtung verbundene Einrichtungen zur kontinuierlichen oder in vorbestimmten Zeitabständen erfolgenden Messung der Temperatur des Wärmeträgermediums am Eintritt in den Heizungs- bzw. Kühlmittelvorlauf (Vorlauftemperatur) und am Eintritt in den Wärme- bzw. Kälteerzeuger (Rücklauftemperatur) vorgesehen sein, wobei die Regeleinrichtung eine Vergleichseinrichtung zur Bestimmung der Differenz dieser beiden Temperaturen und vorzugsweise auch eine Einrichtung zur optischen und/oder akustischen Wahrnehmbarmachung dieser beiden Temperaturen und/oder ihrer Differenz aufweist. In weiterer zweckmäßiger Fortbildung dieses untergeordneten Erfindungsgedankens kann kontinuierlich oder in vorbestimmten Zeitabständen aus dem Meßwert des Gesamtmassenstroms und dem ermittelten Differenzwert von Vorlauf- und Rücklauftemperatur des Wärmeträgermediums ein Meßwert der in den Heizungs- bzw. Kühlmittelvorlauf eingespeisten Wärme- bzw. Kälteleistung gebildet und dieser gewünschtenfalls optisch und/oder akustisch wahrnehmbar gemacht werden. Hierfür kann zweckmäßig die Regeleinrichtung eine Multipliziereinrichtung zur kontinuierlichen oder in vorbestimmten Zeitabständen erfolgenden Bildung der Produkte aus kontinuierlich oder in vorbestimmten Zeitabständen gewonnenen Meßwerten des Gesamtmassenstroms und der Differenz der zeitgleich ermittelten Meßwerte von Vorlauf- und Rücklauftemperatur des Wärmeträgermediums und vorzugsweise auch eine über eine Impulsleitung mit dieser Multipliziereinrichtung verbundene Einrichtung zur optischen und/oder akustischen Anzeige des einem Meßwert der in den Heizungs- bzw. Kühlmittelvorlauf eingespeisten Wärme- bzw. Kälteleistung entsprechenden Ergebnisses der Multipliziereinrichtung aufweisen.

Es ist ersichtlich, daß hierdurch mit höchst einfachen und kostengünstigen Mitteln der Verbraucher automatisch über seinen Wärme- bzw. Kälteverbrauch informiert werden kann. Dies führt dazu, daß der Verbraucher jederzeit sein Energiebewußtsein kontrollieren und ändern kann, weil ihm ständig vor Augen geführt wird, wieviel Energie insbesondere aufgrund seiner eigenen selbstgewählten Einstellung einer Betriebsart verbraucht wird. Die Wahrnehmbarmachung kann dabei so vorgenommen werden, daß durch geeignete Wahl entsprechender Anzeigeeinrichtungen der Verbrauch in kW/h und/oder in Währungs- /Zeiteinheit, beispielsweise DM pro Stunde, Tag, Monat oder Jahr, angezeigt wird. Dem Betreiber der Anlage wird insbesondere über die Möglichkeit, Komfort- , Normal- und Sparbetrieb wählen zu können, vermittelt, daß Komfort "eben seinen Preis hat".

Im übrigen hat es sich als höchst nützlich herausgestellt, wenn in weiterer zweckmäßiger Fortbildung der Erfindung die Regeleinrichtung in zwei miteinander verbundene Funktionsgruppen gegliedert ist, deren eine die Einrichtungen für diejenigen Funktionen umfaßt, die während der Heiz- bzw. Kühlperiode in der Regel nicht oder nur selten verändert werden, und vorzugsweise in der Nähe des Wärme- bzw. Kälteerzeugers und/oder eines etwaigen Drei- oder Vier-Wege-Mischers angeordnet ist, während die andere die Einrichtungen für die vom Benutzer einstellbaren Funktionen umfaßt und als Raumschaltstation in bequemer Nähe des Benutzers angeordnet ist. Die sich hieraus ergebenden Vorteile insbesondere bezüglich der speziellen Benutzerfreundlichkeit durch äußerste Bequemlichkeit der Handhabung der Erfindung bzw. der mit dieser ausgerüsteten Heizungs- bzw. Kühlanlage liegen auf der Hand.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. erstellen und betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetrieber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzustellen, Klimazonen zu berücksichtigen und dergleichen. Im übrigen ist darauf zu verweisen, daß,
wenn vorstehend oder nachfolgend von Kesseln als Wärmeerzeugern gesprochen wird, dieser Begriff auch als gas- oder ölbefeuerte Durchlauferhitzer, sogenannte Thermen oder Geyser, arbeitende Geräte mitumfaßt, indem diese sich von den gemeinhin als Kessel bezeichneten
Geräten grundsätzlich nur dadurch unterscheiden, daß sie im allgemeinen mit geringerer Vorlage an Wärmeträgermedium arbeiten und entsprechend eine kleinere Wärmespeicherkapazität aufweisen. Weiterhin
umfaßt hier und im folgenden der Begriff "Heizkörper" ganz allgemein
jede beliebige Art von Heizungseinrichtung, die mit Wärmeträgermedium gespeist wird, und zwar dies ungeachtet ihrer speziellen Ausbildung beispielsweise als Radiator oder Konvektor oder als Mischform beider jeweils mit oder ohne Gebläse für Verbesserung der
Wärmeabgabe. Generell gesagt ist der benutzte Begriff "Heizkörper"
vom Heizungssystem her gesehen als dessen bzw. einer von dessen
Wärmeenergieverbraucher(n) zu verstehen, wobei es auf die spezielle
Ausgestaltung der Wärmeabgabe ebensowenig ankommt wie auf den Einsatz einer solchen als "Heizkörper" bezeichneten Heizeinrichtung im
Wohn- oder Gewerbe- oder Industriebereich beispielsweise auch als
Industriehallen-Luftheizgerät.

In allen vorstehenden Betrachtungen wurde keine Bedeutung auf die
Lage der unteren Grenze des Gesamtmassenstroms gelegt, sondern vielmehr davon ausgegangen, daß bei völligem Schließen aller automatischen Drosselorgane der Heizkörper- bzw. Kühleinrichtungen der
Gesamtmassenstrom bis auf den Verschwindwert hin zurückgehen kann.
An dieser Stelle soll betont werden, daß es durchaus auch sinnvoll
sein kann, neben dem maximalen und/oder dem maximal möglichen
Gesamtmassenstrom auch einen Massenstrom zu ermitteln, der für spezielle Heizungs- bzw. Kühlanlagen der kleinstmögliche (minimale)
Gesamtmassenstrom bei vollem Schließen aller Drosselorgane der Heizkörper bzw. Kühleinrichtungen ist, der jedoch bei bestimmten
Heizungs- bzw. Kühlsystemen, beispielsweise bei Einstrang-Heizungen oder Zweistrang-Heizungen mit Bypass-Charakteristik oder z.B. solchen mit Thermostatventilen mit Restdurchlaufmenge, durchaus vom Verschwindwert des Gesamtmassenstroms verschieden sein kann. Dieser minimale Wert des Gesamtmassenstroms kann dazu benutzt werden, von vornherein eine Korrektur des für die lagemäßige Wahl des Sollwert-Bandes nutzbaren Raumes im Sinne einer Stauchung dieses Sollwert-Bandes vorzugeben oder aber ein etwa vorgegebenes Programm eines solchen Sollwert-Bandes bzw. mehrerer solcher Sollwert-Bänder, wie beispielsweise im Fall vorprogrammierter Möglichkeiten für Einstellung unterschiedlicher Betriebsarten, nachträglich auf spezielle Eigenheiten der Heizungs- bzw. Kühlanlage optimierend abstimmen zu können.

Insgesamt gesehen liegt der Vorteil eines solchen Vorgehens nach der Erfindung darin, daß man sich mit höchst einfachen und wirtschaftlichen Mitteln auf jede Heizungs- bzw. Kühlanlage optimal adaptieren und damit sogar solche Heizungs- bzw. Kühlanlagen bedienen kann, bei denen sich die Änderung des Gesamtmassenstroms nach Regelvorgängen über die automatisch wirkenden Drosseleinrichtungen an den Heizkörpern bzw. Kühleinrichtungen weniger signifikant bemerkbar macht. Hierdurch lassen sich auch solche Systeme im Sinne der Erfindung fahren, die sonst wegen der Notwendigkeit kleinster Regelbereiche unter Umständen hätten ausgeschlossen sein können.

Im übrigen ist darauf zu verweisen, daß alle beschriebenen Ausführungen der Erfindung, soweit sich diese auf ein Sollwert-Band des Gesamtmassenstroms stützt, auch in Termen eines Sollwert-Bandes der Druckdifferenz über der Umwälzpumpe, das heißt zwischen deren Saug- und deren Druckstutzen, ausgedrückt werden können, mit anderen Worten für die erfindungsgemäße Regelung - ohne daß dies vorstehend oder im folgenden besonders hervorgehoben zu werden bräuchte - statt eines Sollwert-Bandes des Gesamtmassenstroms ein Sollwert-Band des effektiven Förderdruckes der Umwälzpumpe, nämlich des Druckunterschiedes zwischen ihrem Saug- und ihrem Druckstutzen, verwandt werden kann. Es besteht nämlich eine durch die Kennlinie der Umwälzpumpe des Heizungs- bzw. Kühlmittelkreislaufes gegebene Beziehung zwischen Gesamtmassenstrom des Wärmeträgermediums und effektivem Arbeitsdruck der Umwälzpumpe, gemäß derer für geringeren Gesamtmassenstrom der Arbeitsdruck stets größer und für größeren Gesamtmassenstrom der Arbeitsdruck stets geringer ist. Sollte man also im speziellen Einsatzfall der Erfindung mit einem wegen eines verhältnismäßig stark eingeschränkten Sollwert-Bandes des Gesamtmassenstroms für ungünstig erachteten Regelbereich arbeiten müssen, wie das bei einer verhältnismäßig steilen Arbeitsdruck-Gesamtmassenstrom-Kennlinie der Umwälzpumpe der Fall sein kann, so empfiehlt es sich im Rahmen der Erfindung, ganz einfach auf ein diesem Regelbereich entsprechendes Sollwert-Band des Arbeitsdruckes der Umwälzpumpe auszuweichen, da dieser Arbeitsdruck der Umwälzpumpe die gleiche Aussagekraft für die erfindungsgemäße Regelung besitzt wie der Gesamtmassenstrom, dabei aber der Arbeitsdruck im dem betreffenden eingeschränkten Bereich des Gesamtmassenstroms entsprechenden Bereich eine größere Spreizung und damit einen günstigeren Regelbereich bietet.

Die Kenntnis des Zusammenhanges zwischen dem Massenstrom und dem Druckabfall dieser Förderkennlinie der Umwälzpumpe kann überdies auch noch den weiteren Vorteil mit sich bringen, daß für den Fall, daß in einer Anlage außer einem Massen- oder Volumenstrommesser auch noch ein Differenzdruckmessgerät in geeigneter Weise angeschlossen ist, eine Ausfallsicherung gegeben ist, die bei Ausfall des Massenstrommessers in Form des Differenzdruckmessgerätes und umgekehrt bei Ausfall des Differenzdruckmessgerätes in Form des Massenstrommessers in Funktion treten kann. In diesem Fall können über die Kennlinien den Differenzdrücken sogar auch Verbraucherleistungen in Form von rechnerisch ermittelten Produkten von Messwerten des Massenstroms und zeitgleich zugeordneten Messwerten der Differenz von Vorlauf- und Rücklauftemperatur des Wärmeträgermediums zugeordnet werden.

Im folgenden wird die Erfindung anhand einiger bevorzugter Ausführungsbeispiele, die in den Zeichnungen lediglich schematisch dargestellt sind, rein beispielsweise näher erläutert. Dabei zeigen:

Fig. 1 eine schematische Darstellung einer die Erfindung verkörpernden Heizungsanlage in Einstrang-Bauweise mit in zwei Funktionsgruppen gegliederter Regeleinrichtung,

Fig. 2 in der Darstellung gemäß Fig. 1 entsprechender Darstellung eine andere Ausführungsform der Erfindung in Form einer Heizungsanlage in Zweistrang-Bauweise mit einem Vier-Wege-Mischer als Mehrwege-Mischeinrichtung und einer nicht aufgegliederten Regeleinrichtung,

Fig.3 einen Ausschnitt aus der der Ausführungsform gemäß Fig. 2 entsprechenden Ausführung der Erfindung, bei der jedoch ein Drei-Wege-Mischer als Mehrwege-Mischeinrichtung eingesetzt ist, und

Fig. 4 eine dimensionslos gezeichnete schematische Darstellung einer die Abhängigkeit von effektivem Förderdruck einer Umwälzpumpe vom Gesamtmassenstrom wiedergebenden Kennlinie einer Umwälzpumpe.

Gleiche Bezugszeichen bezeichnen dabei jeweils gleiche Einzelheiten der Ausführungsbeispiele.

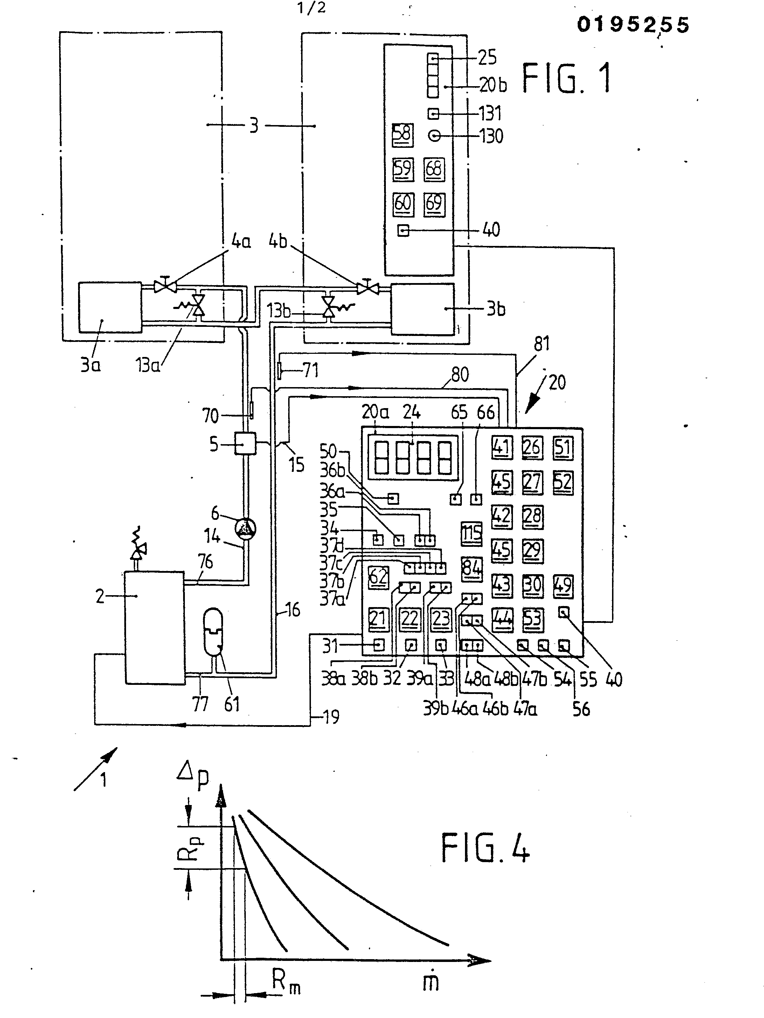

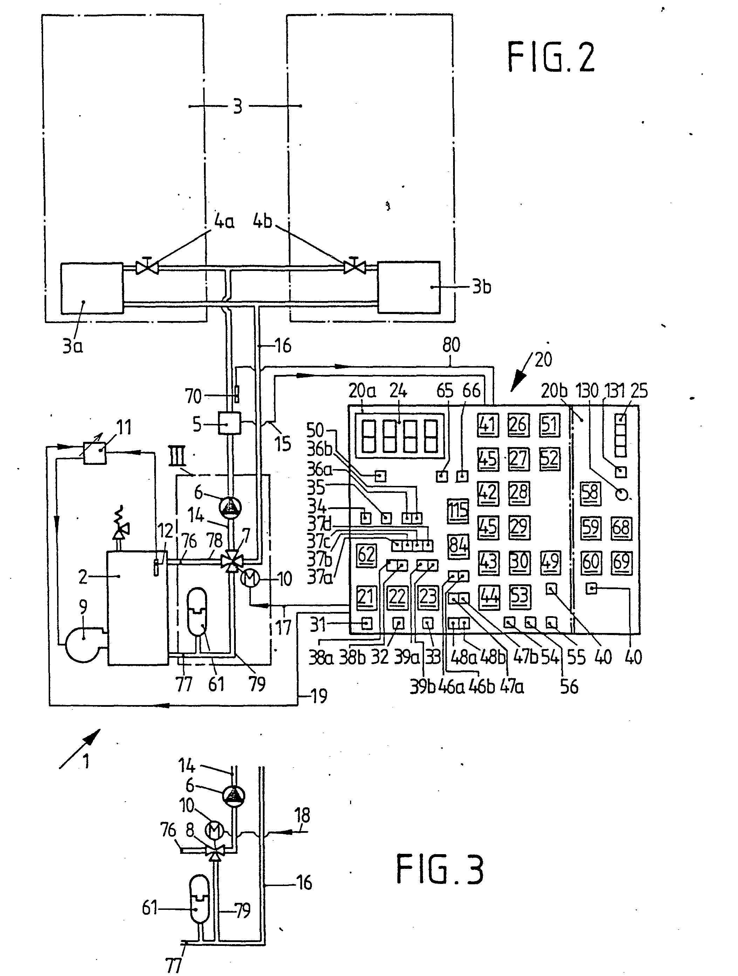

Die als Ganzes mit 1 bezeichnete Heizungsvorrichtung nach der Erfindung weist beim Ausführungsbeispiel gemäß Fig. 1 einen Wärmeerzeuger 2 auf, der als Wärmepumpe in Kompressions- oder Sorptionsbauweise mit einem sekundärseitig in das das Wärmeträgermedium führende Rohrleitungssystem eingeschalteten Wärmetauscher oder als vom Wärmeträgermedium durch- oder umspülter Wärmetauscher eines Rauchgaskühlers oder aber als sekundärseitig das Wärmeträgermedium führender und primärseitig mit Primärwärmeträgermedium beaufschlagter Wärmetauscher einer Fernwärme-Übergabestation ausgebildet sein kann. Statt der dargestellten Ausführung könnte auch ein elektrisch beheizter oder aber ein brennstoffbefeuerter Heizkessel eingesetzt sein, wie letzterer in Fig. 2 rein beispielsweise dargestellt ist. Die Darstellung des Wärmeerzeugers in Fig. 1 soll demgemäß nur beispielhaft eine von vielen möglichen Ausführungsformen eines Wärmeerzeugers symbolisieren.

Der Wärmeerzeuger 2 ist mit seinem Wärmeträgermediumsausgang 76 an die Vorlaufleitung 14 des das Wärmeträgermedium führenden Leitungssystems angeschlossen, das seinerseits - wie aus Fig. 1 ersichtlich - als Einstrang-System ausgebildet ist, indem nämlich der Heizungsvorlauf 14, in den eine Umwälzpumpe 6 beliebiger Ausführung bzw. Bauweise eingeschaltet ist, über eine automatische Drosseleinrichtung 4a zu einem Heizkörper 3a eines von mehreren, im dargestellten Ausführungsbeispiel zwei Räumen, führt, von dem dann eine Weiterführungsleitung zu einer weiteren automatischen Drosseleinrichtung 4b eines einem anderen Raum des als Ganzes mit 3 bezeichneten, mehrere Räume aufweisenden Wärmeverbrauchers zugeordneten weiteren Heizkörpers 3b führt. Dieser letzte Heizkörper der in Einstrang-Bauweise ausgeführten Heizungsvorrichtung 1 ist über eine Heizungsrücklaufleitung 16 an den Wärmeträgermediumseingang 77 des Wärmeerzeugers 2 angeschlossen. Die Zuläufe und Abläufe zu bzw. von den einzelnen Heizkörpern 3a bzw. 3b sind jeweils durch eine Überströmleitung kurzgeschlossen, in welche jeweils ein druckeinstellbares Überströmventil 13a bzw. 13b eingeschaltet ist. Am Wärmeträgermediumsrücklauf 16 ist im Bereich des Wärmeträgermediumseinganges 77 des Wärmeerzeugers 2 ein Ausdehnungsgefäß 61 für das Wärmeträgermedium angeschlossen.

In dem Wärmeträgermediumsvorlauf 14 ist vorzugsweise stromabwärts von der Umwälzpumpe 6 eine Messeinrichtung 5 für den Gesamtmassenstrom angeordnet, die über eine Messwertleitung 15 mit einer als Ganzes mit 20 bezeichneten Regeleinrichtung in Verbindung steht. Diese Regeleinrichtung wiederum steht über eine Steuerleitung 19 mit dem nicht im einzelnen dargestellten und auch nicht näher bezeichneten Stellglied des Wärmeerzeugers 2 in Verbindung, das je nach Ausbildung desselben das Brennstoffregulierungsventil eines Brenners bei flammenbefeuertem Kessel oder das Gas- bzw. ölregulierungsventil für die Zuführung von Treibstoff zum Dieselmotor oder Vergaser eines verbrennungsmotorbetriebenen Kompressors einer Kompressionswärmepumpe oder aber das Drosselventil der heißes Primärwärmeträgermedium führenden Primärleitung eines Wärmetauschers einer Fernwärme-Übergabestation oder eine Rauchgas-By-pass-Klappe eines als Rauchgaskühler eingesetzten Wärmetauschers oder dergleichen sein kann.

Die zugehörige Regeleinrichtung 20, die beim Ausführungsbeispiel gemäß Fig. 1 aus zwei Funktionsgruppen 20a und 20b besteht, wird im folgenden im Zusammenhang mit dem Ausführungsbeispiel gemäß Fig. 2 näher erläutert.

Der Aufbau der wiederum als Ganzes mit 1 bezeichneten Heizungsvorrichtung nach der Erfindung gemäß Fig. 2 ist im wesentlichen der gleiche wie der gemäß Fig. 1. Auch hier ist der Wärmeerzeuger mit 2 bezeichnet, jedoch als brennerbetriebener Kessel dargestellt, dessen Brenner 9 als Einrichtung zur Beeinflussung der Betriebsenergie für den Wärmeerzeuger 2 über eine herkömmliche Regeleinrichtung mit einer Messeinrichtung 12 für die Temperatur des Wärmeträgermediums im Wärmeerzeuger 2 (Kesselthermometer) und einer Einrichtung 11 zur Beeinflussung der Zufuhr von Betriebsenergie zum Wärmeerzeuger 2 derart gefahren werden kann, daß die Temperatur des Wärmeträgermediums, beipielsweise des Kesselwassers, im Wärmeerzeuger einen vorgegebenen Wert nicht übersteigt. Dargestellt ist ferner, daß der Wärmeträgermediumsausgang 76 des Wärmeerzeugers 2 über eine Beimischleitung 78 an den einen Eingangsstutzen eines Vier-Wege-Mischers 7 und der Wärmeträgermediumseingang 77 des Wärmeerzeugers 2, an den im übrigen in der gleichen Weise, wie im Zusammenhang mit dem Ausführungsbeispiel gemäß Fig. 1 bereits erläutert, ein Ausdehnungsgefäß 61 für Wärmeträgermedium angeschlossen ist, an den einen Ausgangsstutzen des Vier-Wege-Mischers 7 über eine Rückführleitung 79 angeschlossen ist. Der andere Ausgangsstutzen des Vier-Wege-Mischers 7 ist über die Wärmeträgermediums-Vorlauf-Leitung 14 mit einer Leitungsverzweigung verbunden, die so viele Wärmeträgermediums-Abgänge aufweist, wie zu bedienende Heizkörper der Heizungsvorrichtung 1 vorhanden sind, es sei denn, es würden mehrere Leitungsverzweigungen hintereinandergeschaltet angeordnet werden, was in Einzelfällen zu bevorzugen sein kann, beispielsweise wenn die Zahl der Heizkörper besonders groß ist.

An die genannte Leitungsverzweigung, die vom Heizungsvorlauf 14 angespeist wird, sind im in Fig. 2 dargestellten Ausführungsbeispiel zwei Heizkörper 3a bzw. 3b jeweils über eine vorgeschaltete automatisch wirkende Drosseleinrichtung 4a bzw. 4b angeschlossen, wobei auch hier der hier allerdings nur aus zwei Heizkörpern 3a, 3b bestehende Wärmeverbraucher als Ganzes mit 3 bezeichnet ist. Die beiden Heizkörper 3a, 3b (und bei mehr vorhandenen Heizkörpern auch diese) sind mit ihren Wärmeträgermediums-Ausgängen jeweils mit einer weiteren zwar dargestellten, jedoch nicht näher bezeichneten Leitungsverzweigung verbunden, von der das Wärmeträgermedium über die mit dieser in Verbindung stehende Rücklaufleitung 16 zum Vier-Wege-Mischer 7 zurückströmt, indem der Heizungsrücklauf 16 an den anderen Eingangsstutzen des Vier-Wege-Mischers 7 angeschlossen ist.

Es ist ersichtlich, daß auf diese Weise eine Heizungsanlage in Zweistrang-Bauweise gebildet ist, wobei diese außerdem auch noch eine Mehrwege-Mischeinrichtung in Form eines Vier-Wege-Mischers 7 aufweist. Diesem ist im Heizungsvorlauf 14 eine Umwälzpumpe 6 nachgeschaltet, vorzugsweise stromabwärts von der eine Messeinrichtung 5 für den Gesamtmassenstrom angeordnet ist. Diese ist in der gleichen Weise, wie in Verbindung mit dem Ausführungsbeispiel gemäß Fig. 1 beschrieben, über eine Messwertleitung 15 an eine als Ganzes mit 20 bezeichnete Regeleinrichtung angeschlossen. Diese weist einen Stellbefehlgeber 62 auf, der über eine Steuerleitung 17 mit dem Antrieb 10 der Mehrwege-Mischeinrichtung 7 verbunden ist.

In Fig. 3 ist dargestellt, daß die beim Ausführungsbeispiel gemäß Fig. 2 in Form eines Vier-Wege-Mischers 7 ausgebildete Mehrwege-Mischeinrichtung auch als Drei-Wege-Mischer 8 ausgeführt sein kann, wenn die Rohrleitungsführung für das Wärmeträgermedium entsprechend getroffen ist. Ohne daß in Fig. 3 der Wärmeerzeuger dargestellt wäre, was nichts anderes besagen soll, als daß dieser in beliebiger Weise ausgebildet sein kann, beispielsweise nach Art des Wärmeerzeugers gemäß Fig. 1 oder nach Art des Wärmeerzeugers gemäß Fig. 2, die vorstehend bereits beschrieben sind, ist der Wärmeträgermediums-Ausgang 76 desselben an den einen Strömungseingang des Drei-Wege-Mischers 8 angeschlossen, während an seinen Strömungsausgang der Heizungsvorlauf 14 angeschlossen ist, dessen weitere Leitungsführung die gleiche ist, wie im Zusammenhang mit dem Ausführungsbeispiel gemäß Fig. 2 bereits beschrieben. Der Heizungsrücklauf 16 ist an den Wärmeträgermediums-Eingang 77 des nicht dargestellten Wärmeerzeugers 2 angeschlossen, der seinerseits in bereits beschriebener Weise mit einem Ausdehnungsgefäß 61 für das Wärmeträgermedium in Verbindung steht. Strömungsaufwärts vom Ausdehnungsgefäß 61 ist der Heizungsrücklauf 16 über eine hier als Beimischleitung dienende Leitung 79 an den zweiten Eingang des Drei-Wege-Mischers 8 angeschlossen. In den Heizungsvorlauf 14 ist in bereits im Zusammenhang mit den Ausführungsbeispielen gemäß Fig. 1 und 2 beschriebener Weise eine Umwälzpumpe 6 eingeschaltet. Der Antrieb 10 der hier als Drei-Wege-Mischer 8 ausgebildeten Mehrwege-Mischeinrichtung ist über eine hier mit 18 bezeichnete Steuerleitung mit dem Stellbefehlgeber 62 der Regeleinrichtung 20 verbunden.

Die erfindungsgemäße Regelungseinrichtung 20 weist einzelne Aggregate bzw. Einrichtungen auf, deren impulsleitungsmäßige Verknüpfung vorstehend bereits erläutert worden ist und sich im übrigen aus den Ansprüchen und deren Erläuterung ergibt. Aus diesem Grunde werden die einzelnen Einrichtungen im folgenden lediglich hinsichtlich ihres Aufgabengebietes bzw. Einsatzzweckes beschrieben, da ihre Ausgestaltung dem Fachmann im einzelnen geläufig ist.

Der kontinuierlich gewonnene Messwert oder die in vorgegebenen Zeitabständen nacheinander gewonnenen Messwerte des Gesamtmassenstroms werden von der Messeinrichtung 5 über die Messwertleitung 15 je nach der vorgesehenen Konzeption ihrer Weiterverarbeitung entweder einer Vergleichseinrichtung 27 zur Bestimmung der Größe und/oder Richtung der Abweichung des Gesamtmassenstroms von einer Grenze seines Sollwert-Bandes oder aber einer Messwertspeichereinrichtung 26 zugeführt. Das Vergleichsnormal für die Vergleichseinrichtung 27 wird in Form eines der oberen Grenze eines Sollwert-Bandes des Gesamtmassenstroms entsprechenden Impulses von einem einstellbaren Sollwertgeber 41 und in Form eines der unteren Grenze dieses Sollwert-Bandes entsprechenden Impulses von einem weiteren einstellbaren Sollwertgeber 42 geliefert.

Dargestellt ist ferner, daß die Regeleinrichtung 20 einen Proportionalregler 21 mit einer Einrichtung 31 zur Veränderung seiner Verstärkung, einen Integralregler 22 mit einer Einrichtung 32 zur Veränderung seiner Nachstellzeit und einen Differentialregler 23 mit einer Einrichtung 33 zur Veränderung der Vorhaltzeit desselben aufweisen kann. Dem Integralregler 22 ist dabei ein zeitabhängiges Integrierwerk 36a für die Abweichung des Gesamtmassenstroms über die obere Grenze seines Sollwert-Bandes hinaus und ein zeitabhängiges Integrierwerk 36b für die Abweichung des Gesamtmassenstroms unter die untere Grenze seines Sollwert-Bandes zugeordnet. Um die Verstärkung und/oder die Nachstellzeit und/oder die Vorhaltzeit der Regeleinrichtung 20 optimieren zu können, je nachdem wie diese mit Proportional- und/oder Integral- und/oder Differentialregler ausgestattet ist, kann ferner ein zeitabhängiges Integrierwerk 37a bzw. 37b für den Gesamtmassenstrom und jeweils ein weiteres zeitabhängiges Integrierwerk 37c für den der als Bezugsgröße für die jeweilige Abweichung des Gesamtmassenstroms dienenden oberen oder unteren Grenze des Sollwert-Bandes desselben entsprechenden Gesamtmassenstrom und eine mit beiden Integrierwerken verbundene Einrichtung 34 zur Bildung des Verhältnisses zeitgleicher Ergebnisse beider Integrierwerke oder dessen Reziprokwertes vorgesehen sein. Soll die Verstärkung und/oder die Nachstellzeit und/oder die Vorhaltzeit der Eliminierung der Abweichung des Gesamtmassenstroms über die obere bzw. unter die untere Grenze seines Sollwert-Bandes verändert werden, wenn das Verhältnis der beiden Gesamtmaße bzw. zeitlichen Integralwerte einen vorbestimmten Wert überschreitet, so weist für diesen Zweck die Regeleinrichtung 20 ferner ein weiteres zeitabhängiges Integrierwerk 37d für den der Differenz von oberer und unterer Grenze des Sollwert-Bandes des Gesamtmassenstroms entsprechenden Gesamtmassenstrom sowie eine über Impulsleitungen mit beiden Integrierwerken 36a bzw. 36b, 37d verbundene Summiereinrichtung 84 zur Bildung der Summe zeitgleicher Ergebnisse beider Integrierwerke auf, wobei weiterhin eine Einrichtung 35 zur Bildung des Verhältnisses zeitgleicher Ergebnisse des Integrierwerkes 37d und der Summiereinrichtung 84 oder des Reziprokwertes dieses Verhältnisses vorgesehen ist. Für den Fall, daß die Verstärkung und/oder die Nachstellzeit und/oder die Vorhaltzeit der Eliminierung der Abweichung des Gesamtmassenstroms über die obere bzw. unter die untere Grenze seines Sollwert-Bandes so verändert werden können soll, daß das Verhältnis der beiden Gesamtmaße bzw. Integralwerte einen vorbestimmten Wert nicht überschreitet, weist die Einrichtung 35 zur Bildung des Verhältnisses zeitgleicher Ergebnisse beider Integrierwerke 37a bzw. 37b und 37c oder 36a bzw. 36b und 37d eine einstellbare Impulssperreinrichtung 65 auf, mittels derer die Impulsleitung bzw. Impulsleitungen zu der bzw den Einrichtung(en) 31 bzw. 32 bzw. 33 zur Veränderung der Verstärkung des Proportionalreglers 21 bzw. der Nachstellzeit des Integralreglers 22 bzw. der Vorhaltzeit des Differentialreglers 23 erst bei Vorhandensein eines vorbestimmten Wertes des Verhältnisses zeitgleicher Ergebnisse beider Integrierwerke 37a bzw. 37b und 37c oder 36a bzw. 36b und 37d für Impulsdurchgang freigebbar ist bzw. sind.

Dem Differentialregler 23 zugeordnet weist die Regeleinrichtung 20 ferner eine Einrichtung 38a zur Bestimmung des Maßes der zeitlichen Änderung einer Abweichung des Gesamtmassenstroms über die obere Grenze seines vorgegebenen Sollwert-Bandes hinaus und eine Einrichtung 38b zur Bestimmung des Maßes der zeitlichen Änderung einer Abweichung des Gesamtmassenstroms unter die untere Grenze seines vorgegebenen Sollwert-Bandes sowie bevorzugt auch eine Einrichtung 39a zur Bestimmung der zeitlichen Änderung des Maßes der zeitlichen Änderung einer Abweichung des Gesamtmassenstroms über die obere Grenze dieses Sollwert-Bandes hinaus sowie eine Einrichtung 39b zur Bestimmung der zeitlichen Änderung des Maßes der zeitlichen Änderung einer Abweichung des Gesamtmassenstroms unter die untere Grenze dieses Sollwert-Bandes auf. Die Einrichtungen 39a und 39b sind somit Einrichtungen zur Ermittlung der Änderungsbeschleunigung der betreffenden Abweichung des Gesamtmassenstroms von der einen bzw. anderen Grenze seines Sollwert-Bandes, während die Einrichtungen 38a und 38b jeweils Einrichtungen zur Bestimmung der Änderungsgeschwindigkeit dieser Abweichungen sind.

Wie dargestellt, kann ferner zweckmäßig eine Einstelleinrichtung 66 für die Einrichtung 31 zur Veränderung der Verstärkung des Proportionalreglers 21 und die Einrichtung 32 zur Veränderung der Nachstellzeit des Integralreglers 22 und die Einrichtung 33 zur Veränderung der Vorhaltzeit des Differentialreglers 23 oder jeweils eine Einstelleinrichtung 66 für jede der genannten Veränderungseinrichtungen, soweit vorhanden, vorgesehen sein, durch welche die jeweils zugeordnete(n) Veränderungseinrichtung(en) 31 bzw. 32 bzw. 33 im Sinne einer Vermeidung des Überschreitens eines vorbestimmten Wertes des Verhältnisses zeitgleicher Ergebnisse beider Integrierwerke 37a bzw. 37b und 37c oder 36a bzw. 36b und 37d nachstellbar ist bzw. sind.

Weiterhin kann die Regeleinrichtung 20 eine Sollwert-Wahleinrichtung 43 mit einer Detektoreinrichtung 29 zur Ermittlung des Gesamtmassenstroms bei Auftreten der ersten Veränderung desselben im Verlauf der Inbetriebnahme der Vorrichtung 1 bei voller Öffnung aller Drosseleinrichtungen 4a bzw. 4b als des maximal möglichen Gesamtmassenstroms, der als Inbetriebnahmegesamtmassenstrom bezeichnet wird, und/oder im Verlauf des Heizbetriebes bei Aufheizen nach einer Abkühlung bei voller Öffnung aller Drosseleinrichtungen 4a bzw. 4b als maximalen Gesamtmassenstroms, der als Anfahrgesamtmassenstrom bezeichnet wird, und je einer einstellbaren Verhältnisgabeeinrichtung 46a, 46b als Sollwert-Bildungseinrichtung für die obere bzw. untere Grenze des Sollwert-Bandes des Gesamtmassenstroms sowie jeweils eine mit dem zugeordneten Sollwertgeber 41 bzw. 42 verbundene Einrichtung 45 zur automatischen Verstellung desselben im Sinne einer Ersteinstellung bzw. einer Veränderung eines eingestellten Wertes der zugeordneten oberen bzw. unteren Grenze des Sollwert-Bandes des Gesamtmassenstroms aufweisen. Dargestellt ist, daß dem Sollwertgeber 41 ebenso wie dem Sollwertgeber 42 jeweils eine eigene automatische Verstelleinrichtung 45 zugeordnet ist.

Weiterhin kann die Sollwert-Wahleinrichtung 43, wie dargestellt, eine Programmspeichereinrichtung 47a, 47b aufweisen, die eine Verstelleinrichtung 48a für die Sollwert-Bildungseinrichtung 46a für die obere Grenze des Sollwert-Bandes des Gesamtmassenstroms und/oder eine Verstelleinrichtung 48b zur Verstellung der Sollwert-Bildungseinrichtung 46b für die untere Grenze dieses Sollwert-Bandes aufweist. Andererseits kann aber auch eine Programmspeichereinrichtung 47a für die obere Grenze des Sollwert-Bandes und eine eigene Programmspeichereinrichtung 47b für die untere Grenze dieses Sollwert-Bandes vorgesehen sein. In beiden Ausführungsfällen ist durch zumindest eine der Verstelleinrichtungen 48a bzw. 48b entsprechend einer in der bzw. den Programmspeichereinrichtung(en) 47a, 47b bzw. 47a bzw. 47b gespeicherten Abhängigkeit das in der zugeordneten Sollwert-Bildungseinrichtung 46a, 46b bzw. 46a bzw. 46b gebildete Verhältnis in dem Sinne veränderbar, daß einem abnehmenden Wert der oberen oder unteren Grenze des Sollwert-Bandes des Gesamtmassenstroms eine zunehmend größere Differenz zwischen diesen beiden Grenzwerten und/oder ein zunehmend größeres Verhältnis derselben entspricht.

Ferner kann die Regeleinrichtung 20 eine Messwertspeichereinrichtung 26 für den als Inbetriebnahmegesamtmassenstrom bezeichneten maximal möglichen Gesamtmassenstrom sowie eine Vergleichseinrichtung 115 zur Ermittlung von Abweichungen des maximalen Gesamtmassenstroms (Anfahrgesamtmassenstroms) vom maximal möglichen Gesamtmassenstrom (Inbetriebnahmegesamtmassenstrom) und eine zugeordnete Verhältnisbildungseinrichtung 28 aufweisen, mittels derer die bzw. eine oder beide der Sollwertbildungseinrichtung(en) 46a, 46b bzw. 46a bzw. 46b bzw. die bzw. eine oder beide der Programmspeichereinrichtung(en) 47a, 47b bzw. 47a bzw. 47b bzw. die bzw. eine oder beide Verstelleinrichtung(en) 48a bzw. 48b bzw. der eine oder beide Sollwertgeber 41 bzw. 42 im Sinne einer Änderung des vorgegebenen Sollwert-Bandes des Gesamtmassenstroms in Abhängigkeit vom Verhältnis von maximalem Gesamtmassenstrom (Anfahrgesamtmassenstrom) zu maximal möglichem Gesamtmassenstrom (Inbetriebnahmegesamtmassenstrom) verstellbar ist.

Weiterhin ist mindestens eine Meldeeinrichtung 59 zur Abgabe einer optisch und/oder akustisch wahrnehmbaren Information vorgesehen, die über eine Grenzdetektoreinrichtung 30, mit der sie über jeweils eine Impulsleitung in Verbindung steht bzw. stehen, immer dann aktivierbar ist bzw. sind, wenn die Grenzdetektoreinrichtung 30 eine Abweichung der ihr von der Vergleichseinrichtung 115 übermittelten Abweichung des maximalen Gesamtmassenstroms (Anfahrgesamtmassenstroms) vom maximal möglichen Gesamtmassenstrom (Inbetriebnahmegesamtmassenstrom) ermittelt, die einen vorbestimmten Wert einer solchen Abweichung über- oder unterschreitet.

Um auch extreme Wärmeverluste an irgendeiner Stelle des Gesamtwärmeverbrauchers 3 ermitteln und melden zu können, die so extreme Leistungsverluste bedingen, daß Abweichungen des Gesamtmassenstroms unter die untere Grenze seines Sollwert-Bandes entweder überhaupt nicht oder zumindest doch während einer vorgegebenen Zeitspanne nicht auftreten, wie das beispielsweise bei offenstehendem Fenster in einer besonderen Kälteperiode der Fall sein kann, wodurch der betreffende Raum stark auskühlt und das System es nicht mehr schafft, den Gesamtmassenstrom so zu verringern, daß die untere Grenze seines Sollwert-Bandes unterschritten wird, kann zweckmäßig weiterhin eine Meldeeinrichtung 60 zur Abgabe einer optisch und/oder akustisch wahrnehmbaren Information, die über eine Impulsleitung an eine Auslöseeinrichtung 40 angeschlossen ist, die ihrerseits mit der Vergleichseinrichtung 27 der Regeleinrichtung 20 zur Bestimmung der Abweichung des Gesamtmassenstroms über die obere und/oder unter die untere Grenze seines Sollwert-Bandes und/oder mit einer Messwertspeichereinrichtung 26 verbunden ist, und eine Zeitsteuereinrichtung 51 zur Durchführung einer Mehrzahl von Messungen des Gesamtmassenstroms durch die Messeinrichtung 5 oder eine Zeitsteuereinrichtung 52 zur Aufnahme und/oder zum Abruf eines Messwertes oder einer Mehrzahl von von der Messeinrichtung 5 gelieferten Messwerten des Gesamtmassenstroms durch die Messwertspeichereinrichtung 26 bzw. von dieser jeweils innerhalb einer vorgegebenen Zeitspanne vorgesehen sein, wobei diese Meldeeinrichtung(en) 60 durch die Auslöseeinrichtung 40 immer dann aktivierbar ist bzw. sind, wenn zumindest nach einer vorgegebenen Zeitspanne keine Abweichung des Gesamtmassenstroms unter die untere Grenze seines Sollwert-Bandes zu verzeichnen ist.

Um erfindungsgemäß die unterschiedlichen Betriebsarten im Sinne von Komfort- , Normal- , Spar- , Nachtabsenkungs- oder Frostschutzbetrieb fahren zu können, weist die Regeleinrichtung 20 ferner eine Speichereinrichtung 24 auf, in der beim dargestellten Ausführungsbeispiel vier bevorzugte Paarungen von Ober- und Untergrenzen des Sollwert-Bandes des Gesamtmassenstroms gespeichert sind, nämlich für Komfort- , Normal- , Spar- bzw. Nachtabsenkungsbetrieb und letztlich auch für Frostschutzbetrieb. Dieser Speichereinrichtung 24, die im übrigen hinsichtlich ihrer den Ober- und Untergrenzen des Sollwert-Bandes des Gesamtmassenstroms für die einzelnen Betriebsarten entsprechenden gespeicherten Wertepaarungen mit Vorzug einstellbar ausgeführt ist, so daß diese Wertepaarungen entweder vom Herstellerwerk oder aber vom installierenden Heizungsbauer oder aber auch vom Benutzer nach Wunsch eingestellt werden können, ist eine Umschalteinrichtung 25 zugeordnet, mittels derer der Benutzer der Heizungsvorrichtung 1 nunmehr je nach Wunsch bzw. Bedarf die Funktion der Regeleinrichtung 20 so umschalten kann, daß sie statt der einen Betriebsart, beispielsweise Komfortbetrieb, einer anderen gewählten Betriebsart, beispielsweise Spar- bzw. Nachtabsenkungsbetrieb, gerecht wird. Diese Umschaltung kann im übrigen auch zeitgesteuert automatisch erfolgen. Hierfür kann ein Zeitschaltwerk 131 vorgesehen sein, das in geeigneter Weise über Impulsleitungen mit der Speichereinrichtung 24 und/oder der Umschalteinrichtung 25 für diese verbunden ist.

Dargestellt ist auch, daß die Regeleinrichtung eine Zähleinrichtung 54 für die während einer vorgegebenen Zeitspanne, während derer von der Zeitsteuereinrichtung 51 gesteuert eine Mehrzahl von Messungen des Gesamtmassenstroms durch die Messeinrichtung 5 durchgeführt und/oder ein Messwert oder eine Mehrzahl von von der Messeinrichtung 5 gelieferten Messwerten des Gesamtmassenstroms aufgenommen oder abgerufen wird, etwa aufgetretenen Abweichungen dieser Messwerte über die obere und/oder unter die untere Grenze des vorgegebenen Sollwert-Bandes des Gesamtmassenstroms und eine Programmspeichereinrichtung 53 für eine vorgegebene während dieser vorgegebenen Zeitspanne zulässige Zahl von im Betrieb auftretenden Abweichungen des Gesamtmassenstroms über die obere und/oder unter die untere Grenze seines Sollwert-Bandes sowie weiterhin eine mit zumindest einem der Sollwertgeber 41 bzw. 42 in Wirkverbindung stehende Einrichtung 44 zur automatischen Veränderung des Sollwert-Bandes bzw. zumindest einer seiner Grenzen in Abhängigkeit von dieser durch die Detektoreinrichtung 29 ermittelten Abweichung der Anzahl aufgetretener Messwertabweichungen von der zulässigen Zahl derselben aufweist. Eine weitere Zähleinrichtung 55 dient der Ermittlung der Zahl der während einer vorgegebenen Zeitspanne im Betrieb auftretenden Veränderungen in Form von Aufnahmen und/oder Beendigungen der Zufuhr von Wärme- bzw. Kälteleistung zum im Heizungsvorlauf 14 befindlichen Wärmeträgermedium und weist ein Zählwerk 56 für diese Veränderungen auf. Auf diese Weise kann auch über die Abweichung der gemessenen Anzahl solcher während einer vorgegebenen Zeitspanne im Betrieb aufgetretener Veränderungen von einer vorgegebenen während dieser vorgegebenen Zeitspanne zulässigen Zahl derselben im Sinne eines Selbstlernvorganges automatisch das Sollwert-Band bzw. zumindest eine seiner Grenzen nachführend verändert werden.

Weiterhin kann zweckmäßig die Regeleinrichtung 20 eine vorzugsweise einstellbare Zeitgabeeinrichtung 58 aufweisen, mittels derer im Sinne der Schaffung einer Toleranzschwelle bei Heizbetrieb eine Abkühlung des Wärmeträgermediums um eine vorbestimmte Zeitspanne beschleunigt und/oder eine Aufheizung des Wärmeträgermediums um eine vorbestimmte Zeitspanne verzögert eingeleitet wird.

Es ist ersichtlich, daß bei der Ausführungsform der Erfindung gemäß Fig. 1 aufgrund von durch die Messeinrichtung 5 für den Gesamtmassenstrom ermittelten Messwerten desselben über die Regeleinrichtung 20 überwacht wird, ob diese Messwerte die obere Grenze des über die einstellbaren Sollwertegeber 41 und 42 eingestellten Sollwert-Bandes des Gesamtmassenstroms überschreiten oder aber die untere Grenze dieses Sollwert-Bandes unterschreiten. In beiden Fällen wird durch die Regeleinrichtung 20 die betreffende Abweichung des Gesamtmassenstroms von der betreffenden Grenze seines Sollwert-Bandes ausgeregelt, indem über den Stellbefehlgeber 62 die in den Heizungsvorlauf 14 eingespeiste Wärmeleistung bei Ausscheren des Gesamtmassenstroms aus seinem Sollwert-Band über die eine oder die andere Grenze desselben heraus so beeinflußt wird, daß der Gesamtmassenstrom wieder in den Bereich zwischen den beiden Grenzen seines Sollwert-Bandes zurückgeführt wird. Insoweit unterscheidet sich die Erfindung wesentlich vom Stande der Technik, als bei ihr nämlich nicht etwa ein Gesamtmassenstrom auf Konstanz geregelt wird, sondern eine Abweichung des Gesamtmassenstroms über eine obere vorgegebene Grenze eines Sollwert-Bandes hinweg oder unter eine untere Grenze desselben auf ihren Verschwindwert ausgeregelt wird, während beliebige Abweichungen von beiden Grenzen des Sollwert-Bandes des Gesamtmassenstroms von der Regelung toleriert werden, sofern sich dieser wertmäßig nur innerhalb dieses vorgegebenen Sollwert-Bandes bewegt, wobei auch Schwankungen des Gesamtmassenstroms beliebiger Größe erfindungsgemäß ohne Einfluß auf die Regelung bleiben, sofern sie nicht zu einem Überschreiten der oberen Grenze des vorgegebenen Sollwert-Bandes oder einem Unterschreiten der unteren Grenze desselben führen. Die Vorteile dieser Regelung nach der Erfindung sind eingangs bereits detailliert erläutert worden.

Die Art, wie diese Ausregelung solcher durch Überschreiten der oberen Grenze des Sollwert-Bandes oder Unterschreiten der unteren Grenze desselben bedingten Abweichungen bewerkstelligt wird, hängt von der Art der Heizungsvorrichtung 1 im allgemeinen und der Ausgestaltung der Zuspeisung der Wärmeleistung zum Heizungsvorlauf 14 im besonderen ab. Bei der Ausführungsform der Erfindung gemäß Fig. 1 ist, wie vorstehend bereits erläutert, ein Regelungszugriff vom Stellbefehlgeber 62 der Regeleinrichtung 20 her auf eine nicht näher dargestellte und auch nicht bezeichnete Einrichtung zur Beeinflussung der Zufuhr von Betriebsenergie zum Wärmeerzeuger 2 als Stellglied vorgesehen. Dieses kann als kontinuierlich verstellbare oder aber im Ein-Aus-Betrieb arbeitende Einrichtung beliebiger bekannter Art ausgebildet sein. In jedem Fall erfolgt bei der Ausführungsform der Erfindung gemäß Fig. 1 die Beeinflussung der dem Heizungsvorlauf 14 zugeführten Wärmeleistung über Einwirkung auf die Zufuhr von Betriebsenergie zum Wärmeerzeuger 2. Ist dieser für kontinuierliche Zuführung von Betriebsenergie während der Betriebsdauer ausgelegt, so erfolgt die Einwirkung auf die dem Heizungsvorlauf 14 zugeführte Wärmeleistung durch Vergrößerung der Zufuhr der Betriebsenergie zum Wärmeerzeuger 2 dann, wenn die Regeleinrichtung 20 ein Überschreiten der oberen Grenze des Sollwert-Bandes des Gesamtmassenstroms ermittelt hat, und durch Verringerung der Zufuhr von Betriebsenergie zum Wärmeerzeuger 2 dann, wenn ein Unterschreiten der unteren Grenze des Sollwert-Bandes des Gesamtmassenstroms vorliegt. Handelt es sich hingegen um einen Wärmeerzeuger 2 mit diskontinuierlicher Zuführung seiner Betriebsenergie, dann erfolgt erfindungsgemäß die Einflußnahme auf diese so, daß immer dann, wenn ein Überschreiten der oberen Grenze des Sollwert-Bandes des Gesamtmassenstroms vorliegt, die Zufuhr von Betriebsenergie zum Wärmeerzeuger 2 aufgenommen und dann, wenn die Regeleinrichtung 20 ein Unterschreiten der unteren Grenze des Sollwert-Bandes des Gesamtmassenstroms ermittelt, die Zufuhr von Betriebsenergie zum Wärmeerzeuger 2 unterbrochen bzw. abgeschaltet wird.

Eine andere Betriebsart sieht vor, daß für eine Wärme- 2 bzw. Kältequelle mit diskontinuierlicher Zufuhr seiner Betriebsenergie bei Überschreiten der oberen Grenze des Sollwert-Bandes das Zeitverhältnis der Ein- zur Ausschaltung der Zufuhr von Betriebsenergie zur Wärme- 2 bzw. Kältequelle entsprechend dem Maß der Abweichung erhöht wird und bei Unterschreiten der unteren Grenze selbiges Zeitverhältnis entsprechend dem Maß der Abweichung verringert wird. Bei dieser Betriebsart wird also nicht bei Überschreiten des Sollwert-Bandes jeweils die Betriebsenergie-Zufuhr veranlaßt oder unterbunden, sondern anstelle dessen das Zeitverhältnis der Ein- zur Ausschaltung der Zufuhr von Betriebsenergie zur Wärme- 2 bzw. Kältequelle bei Bandüber- oder Unterschreitung verändert.

Die Ausführungsform der Erfindung gemäß Fig. 2 und ebenso auch eine dieser dann, wenn in dieser der strich-punktiert umrandete Bereich III durch die Rohrleitungs- , Mehrwege-Mischeinrichtungs- und Umwälzpumpen-Anordnung gemäß Fig. 3 ersetzt wird, entsprechende Ausführungsform unterscheiden sich von der gemäß Fig. 1 abgesehen von der lediglich beispielhaft dargestellten Anwendung in Verbindung mit einer Zweistrang-Anlage nur darin, daß die Einflußnahme auf die Zuführung der Wärmeleistung zum Heizungsvorlauf 14 hier nicht durch irgendwie geartete Änderung der Zufuhr der Betriebsenergie zum Wärmeerzeuger 2 erfolgt, sondern durch Zugriff auf die hier jeweils vorgesehene Mehrwege-Mischeinrichtung in Form des Vier-Wege-Mischers 7 gemäß Fig. 2 oder des Drei-Wege-Mischers 8 gemäß Fig. 3. Die hier dargestellte Ausführung eines über einen gas- oder ölbefeuerten Brenner 9 mit Betriebsenergie versorgten Heizkessels als Wärmeerzeuger 2, der über die Messeinrichtung 12 für die Temperatur des Wärmeträgermediums im Kessel (Kesselthermometer) und die Einrichtung 11 zur Beeinflussung der Zufuhr von Betriebsenergie zum Brenner, die beispielsweise ein Regulierventil für das als Primärenergie dienende Gas oder Öl umfassen kann, auf eine vorbestimmte Temperatur des Wärmeträgermediums im Kessel (dargestellt durch den Einstellpfeil an der Einrichtung 11) geregelt werden kann, kann ihrerseits für kontinuierliche oder diskontinuierliche Zuführung der Betriebsenergie ausgelegt sein, je nach dem, wie der Brenner 9 ausgebildet ist. Dessen ungeachtet ist bei den Ausführungen der Erfindung gemäß Fig. 2 und Fig. 3 jedoch die Beeinflussung der dem Heizungsvorlauf 14 zugespeisten Wärmeleistung über die jeweilige Mehrwege-Mischeinrichtung 7 bzw. 8 derart vorgesehen, daß durch diese das Verhältnis des in den Heizungsvorlauf 14 eingespeisten heißen Massenstroms des Wärmeträgermediums zum Gesamtmassenstrom und/oder die Stellung des dieses Verhältnis bestimmenden Organs der Mehrwege-Mischeinrichtung 7 bzw. 8 verändert wird, indem vom Stellbefehlgeber 62 der Regeleinrichtung 20 über die jeweilige Steuerleitung 17 bzw. 18 der Verstellantrieb 10 für die betreffende Mehrwege-Mischeinrichtung 7 bzw. 8 entsprechend betätigt wird. Diese Betätigung erfolgt dabei erfindungsgemäß so, daß immer dann, wenn der ermittelte Massenstrom zu einer Abweichung über die obere Grenze seines Sollwert-Bandes führt, das Verhältnis von dem Heizungsvorlauf 14 zugespeistem Massenstrom zum Gesamtmassenstrom vergrößert und dann, wenn ein Unterschreiten der unteren Grenze des Sollwert-Bandes des Gesamtmassenstroms vorliegt, dieses Verhältnis von dem Heizungsvorlauf 14 zugespeistem Massenstrom zum Gesamtmassenstrom verringert wird.

Für die Möglichkeiten der größenmäßigen Änderung dieses Verhältnisses bzw. der zugeordneten Stellung des dieses bestimmenden Organs der betreffenden Mehrwege-Mischeinrichtung 7 bzw. 8 sind vorstehend bereits detaillierte Angaben ebenso gemacht wie für das Maß der Beeinflussung der Zuführung der Betriebsenergie zum Wärmeerzeuger 2 ungeachtet dessen, ob diese kontinuierlich oder diskontinuierlich erfolgt.

Es ist ersichtlich, daß eine Ausführung eines Wärmeerzeugers 2 als brennerbefeuerter Heizkessel auch in Fig. 1 zur Anwendung kommen kann, ebenso wie gleichermaßen eine Ausführung eines Wärmeerzeugers 2, wie diese in Verbindung mit Fig. 1 beschrieben ist, bei der Vorrichtung 1 gemäß Fig. 2 Verwendung finden kann. Gleichermaßen sind auch die Ausführungen gemäß Fig. 2 und Fig. 3 in Verbindung mit Einstrang-Anlagen gemäß Fig. 1 im Rahmen der Erfindung mit allen Vorteilen derselben verwendbar. Die dargestellten Ausführungen sollen nur beispielhaft Möglichkeiten aufzeigen, die wichtigsten Varianten der Erfindung zu verwirklichen, ohne dabei erschöpfend alle Möglichkeiten von Kombinationen von Wärmeerzeuger-Ausführungen, Arten der Veränderung der dem Heizungsvorlauf 14 zuzuspeisenden Wärmeleistung und/oder Ausführungen der Regeleinrichtung insbesondere bezüglich deren Vervollkommnung im Hinblick auf die Vielzahl der nach der Erfindung möglichen Selbstlernvorgänge bildlich darzustellen. Aus dem gleichen Grunde ist auch auf die Darstellung der impulsleitungsmäßigen Verknüpfung der einzelnen Aggregate bzw. Einrichtungen der Regeleinrichtung 20 verzichtet worden, weil diese bereits einleitend und in den betreffenden Ansprüchen detailliert erläutert sind und im Bedarfsfall der Fachmann andersartige impulsleitungsmäßige Verknüpfungen in Kenntnis der beschriebenen Verknüpfungen ohne erfinderisches Zutun einfach ermitteln kann.

Während in Fig. 2 gleichfalls lediglich beispielhaft eine Regeleinrichtung 20 dargestellt ist, die nicht in Funktionsgruppen aufgeteilt ist, obgleich diese mit 20a und 20b als solche bezeichnet sind, ist in Fig. 1 schematisch dargestellt, was damit gemeint ist, wenn gemäß einem beschriebenen Erfindungsgedanken die Regeleinrichtung 20 in eine in der Nähe des Wärmeerzeugers 2 angeordnete Funktionsgruppe 20a und eine in bequemer Zugriffsnähe des Benutzers angeordnete Funktionsgruppe 20b gegliedert ist. Dabei umfaßt die Funktionsgruppe 20a die Einrichtungen für diejenigen Funktionen, die während der Heizperiode in der Regel nicht verändert werden, während die in bequemer Nähe des Benutzers angeordnete Funktionsgruppe 20b die Einrichtungen für die vom Benutzer einstellbaren Funktionen umfaßt und vorzugsweise als Raumschaltstation ausgebildet ist.

In Fig. 2 ist im übrigen auch noch eine mit der Regeleinrichtung 20 über eine Messwertleitung 80 verbundene Einrichtung 70 zur Messung der Temperatur des Wärmeträgermediums am Eintritt in den Heizungsvorlauf 14 bzw. im Heizungsvorlauf 14 selbst vorgesehen. Dies hat den Zweck, die über den Temperaturfühler 70 gemessene Vorlauftemperatur mittels entsprechender datenlogischer Be- bzw. Verarbeitung in der Regeleinrichtung 20 beispielsweise als Temperaturbegrenzung für die Vorlauftemperatur der Anlage benutzen zu können, indem über eine Steuerleitung 19 von der Regeleinrichtung 20 ein entsprechender Informationsimpuls auf die Einrichtung 11 zur Beeinflussung der Zufuhr von Betriebsenergie zum Wärmeerzeuger 2 gegeben wird, so daß unabhängig von dem eingestellten Sollwert für die Wärmeträgermediumstemperatur (z. B. Kesselwassertemperatur) im Wärmeerzeuger 2 für die Regelung derselben der in Fig. 2 dargestellte Brenner 9 bzw. eine beliebige andere Einrichtung zur Zuführung von Betriebsenergie zum Wärmeerzeuger 2 so gefahren wird, daß ein vorgegebener Grenzwert für die Vorlauftemperatur nicht überschritten werden kann. Dabei ist diese in Fig. 2 dargestellte Ausführung weder von der Art der Ausgestaltung bzw. der Funktionsweise des Wärmeerzeugers 2 noch der Beeinflussung der Zufuhr von Wärmeleistung zum Heizungsvorlauf 14 noch der Ausführung der Heizungsvorrichtung als Einstrang- oder Zweistrang-System noch der Regeleinrichtung bezüglich deren mehr oder weniger weitgehender Vervollkommung im Hinblick auf Selbstlernvermögen abhängig:

In Fig. 1 wiederum ist dargestellt, daß nicht nur die Vorlauftemperatur über die entsprechende Messeinrichtung 70, sondern auch die Rücklauftemperatur über eine am Wärmeträgermediumsrücklauf 16 angeordnete Messeinrichtung 71 kontinuierlich oder in vorbestimmten Zeitabständen ermittelt und der bzw. die entsprechende(n) Messwert(e) über die Messwertleitung 81 der Regeleinrichtung 20 zugeführt und über diese vorteilhaft weiterverarbeitet werden kann bzw. können. Diese beiden Messwerte von Vorlauf- und Rücklauftemperatur bieten nämlich dann, wenn - wie in der Regeleinrichtung 20 gemäß Fig. 2 bzw. deren Funktionsgruppe 20a gemäß Fig. 1 dargestellt - eine Vergleichseinrichtung 49 zur Bestimmung der Differenz von Vorlauf- und Rücklauftemperatur des Wärmeträgermediums und eine Multipliziereinrichtung vorgesehen ist, die ihrerseits kontinuierlich oder in vorgegebenen Zeitabständen Multiplikationsergebnisse des Messwertes des Gesamtmassenstroms und der kontinuierlich und damit auch zeitgleich bestimmten Differenz von Vorlauf- und Rücklauftemperatur des Wärmeträgermediums oder aber eine Folge von Multiplikationsergebnissen aus zeitgleich gewonnenen Messwerten des Gesamtmassenstroms und der Differenz auch ihrerseits entsprechend zeitgleich gewonnener Messwerte von Vorlauf- und Rücklauftemperatur des Wärmeträgermediums erbringt, die Möglichkeit für eine weiter Vervollkommnung der Betriebsweise der Erfindung. Diese Ergebnisse der Multiplikationsoperationen der Multipliziereinrichtung 50 stellen nämlich ein Abbild der in den Heizungsvorlauf 14 eingespeisten Wärmeleistung dar, die auch als Verbraucherleistung zu bezeichnen ist. Um dem Benutzer der Anlage nach der Erfindung den tatsächlich getätigten Wärmeenergieverbrauch bzw. die effektive Verbraucherleistung wahrnehmbar zu machen, kann eine Einrichtung 69 zur optischen und/oder akustischen Wahrnehmbarmachung des Wertes dieser Verbraucherleistung oder aber auch nur eines einen vorbestimmten Betrag derselben überschreitenden Wertes derselben vorgesehen sein. In manchen Fällen kann es alternativ oder zusätzlich hierzu zweckmäßig sein, wenn dem Benutzer der Anlage die Differenz zwischen Vorlauf- und Rücklauftemperatur des Wärmeträgermediums betragsmäßig wahrnehmbar gemacht wird. Hierfür kann eine entsprechende Einrichtung 68 zur optischen und/oder akustischen Wahrnehmbarmachung vorgesehen sein.

Im übrigen ist im Verband der Regeleinrichtung 20 sowohl in Fig. 1 als auch in Fig. 2 jeweils eine Einschalteinrichtung 130 dargestellt, mittels derer entweder die gesamte Heizungsvorrichtung 1 oder aber nur deren Regeleinrichtung 20 vom Benutzer derselben funktionsmäßig in Betrieb genommen werden bzw. als ganze wieder ausgeschaltet werden kann.

Im vorstehenden ist die Erfindung zwar an dem Beispiel einer Heizungsvorrichtung beschrieben worden, jedoch gelten die Erläuterungen zu dieser auch für eine Kühlvorrichtung entsprechend. Es kann hierzu auf die detaillierten Darlegungen in Verbindung mit den jeweiligen Ansprüchen verwiesen werden. Die in den Zeichnungen dargestellten Ausführungsbeispiele gelten unverändert auch für eine solche Kühlvorrichtung 1, nur ist dann mit der Bezugsziffer 2 ein Kälteerzeuger gemeint, der in im Zusammenhang mit der beschriebenen Heizungsvorrichtung erläuterter Weise über den Kühlmittelvorlauf 14 an die Kühleinrichtungen 3a, 3b angeschlossen ist, von denen das Wärmeträgermedium über den Kühlmittelrücklauf 16 zurück zum Kälteerzeuger
2 gelangt. Dieser kann beispielsweise als gas- oder dieselmotorisch
betriebene Kompressionskältemaschine oder aber als gas- oder ölbefeuerte Sorptionskältemaschine oder aber auch als Übergabewärmetauscher ausgebildet sein, dessen Sekundärseite vom Wärmeträgermedium durchströmt wird, während seine Primärseite mit Kältemittel
eines an diese angeschlossenen Kältemittelkreislaufes gespeist wird.
Alle übrigen Einzelheiten der in den Zeichnungen dargestellten Ausführungsbeispiele bedürfen keiner zusätzlichen Erläuterungen, sofern
man berücksichtigt, daß sich Unterschiede in der Betriebsweise im
Vergleich zu Heizbetrieb ergeben können. Lediglich als Beispiel
hierfür sei der Betrieb mit Toleranzschwelle genannt, für den bei
einer Kühleinrichtung die Zeitgabeeinrichtung 58 der Regeleinrichtung 20 bzw. 20a, 20b so ausgebildet ist, daß mittels ihrer bei
Kühlbetrieb eine Erwärmung um eine vorbestimmte Zeitspanne beschleunigt und/oder eine Abkühlung um eine vorbestimmte Zeitspanne
verzögert einleitbar ist. Im übrigen sind die Entsprechungen der
einzelnen Verfahrensschritte ebenso wie der diese betreffenden vorrichtungsseitigen Ausgestaltungen zwischen Heizbetrieb und Kühlbetrieb den Ansprüchen bzw. deren Erläuterung im vorstehenden zu
entnehmen. Insbesondere sind dort auch die überragenden Vorteile der
Erfindung im Zusammenhang mit dem Kühlen im Vergleich zum Heizen
ausführlich dargelegt.

In Fig. 4 ist die sowohl für Heizbetrieb als auch für Kühlbetrieb
gleichermaßen gültige Möglichkeit des Ausweichens von einem für ungünstig erachteten Regelbereich beispielsweise des Gesamtmassenstroms auf den gemäß der Arbeitsdruck-Massenstrom-Kennlinie der Umwälzpumpe entsprechend günstigeren zugeordneten Regelbereich des Arbeitsdruckes der Umwälzpumpe verdeutlicht. In Fig. 4 sind nämlich
drei Pumpenkennlinien für drei unterschiedliche Umwälzpumpen
schematisch mit ihrem Arbeitsdruck Delta p über dem Massenstrom m,
der dem im gesamten System fließenden Gesamtmassenstrom entspricht,
aufgetragen. Es ist dargestellt, daß für die Umwälzpumpe mit der steilsten Kennlinie im Bereich geringen Massenstroms, also beispielsweise bei Überversorgung des Gesamtwärmeverbrauchers 3 mit Wärmeenergie, der Regelbereich $R_m$ für den Massenstrom m sehr klein wird. Für den Fall, daß ein solcher enger Regelbereich als zu wenig feinfühlig oder aus anderen Gründen ungeeignet oder auch nur unerwünscht erachtet werden sollte, braucht einfach nur der zugeordnete Regelbereich $R_p$ benutzt zu werden, der - wie dargestellt - entsprechend der Steilheit der Pumpenkennlinie in diesem Bereich besonders breit auseinandergezogen ist.

Das bedeutet, daß von der Verfahrensseite der Erfindung her statt des Gesamtmassenstroms der Druckabfall über der Umwälzpumpe 6 zu messen ist, was mit einfachen und kostengünstigen Mitteln zu bewerkstelligen ist, wobei auch hier die Messung kontinuierlich oder als Folge von in vorgegebenen Zeitabständen vorgenommenen Messungen erfolgen kann, und daß dann diese(r) Druckmesswert(e) über die zugeordnete Messwertleitung der Regeleinrichtung 20 bzw. 20a, 20b zugeführt und dort entsprechend aufbereitet und zur Regelung weiterverarbeitet wird, indem vorrichtungsseitig die Regeleinrichtung so ausgebildet ist, daß sie statt mit einem Sollwert-Band des Gesamtmassenstroms nunmehr mit einem Sollwert-Band des Arbeitsdruckes der Umwälzpumpe, das heißt des Druckabfalls über derselben, arbeitet. Zweckmäßig kann die Regeleinrichtung 20 so ausgebildet sein, daß sie sowohl Regelung über ein Sollwert-Band des Gesamtmassenstroms als auch über ein Sollwert-Band des Arbeitsdruckes der Umwälzpumpe gestattet. Hierfür kann entweder ein zusätzliches Paar von einstellbaren Sollwertgebern mit den zugeordneten Folgeeinrichtungen vorgesehen sein, oder aber mit Vorzug eine einfache Umschalteinrichtung, die mit einer Bereichs-Vergleichseinrichtung und gegebenenfalls einer Verhältnisbildungseinrichtung zur Ermittlung des Verhältnisses zwischen Regelbereich $R_m$ des Gesamtmassenstroms und Regelbereich $R_p$ des Arbeitsdruckes der Umwälzpumpe zusammenwirkt. Solche Umschalteinrichtungen für Bereichsumschaltung sind dem Fachmann bekannt und beispielsweise im Messgerätebau üblich. Auf diese Weise könnte mit der gleichen Regeleinrichtung 20 bzw. 20a, 20b, vorausgesetzt sie wäre mit einer solchen Bereichsumschalteinrichtung ausgerüstet, sowohl mittels eines Sollwert-Bandes des Gesamtmassenstroms oder aber - falls dies günstiger erscheinen sollte - mittels eines Sollwert-Bandes des Arbeitsdruckes der Umwälzpumpe, geregelt werden oder umgekehrt.

Aus Fig. 4 ist weiterhin ersichtlich, daß sich die Umwälzpumpe mit der flachsten Kennlinie nicht nur im Bereich hohen Gesamtmassenstroms, das heißt beispielsweise bei besonders geringer Heizleistungsabnahme durch den Gesamtwärmeverbraucher, als besonders günstig erweist, sondern auch über ihrem gesamten Kennlinienbereich. Dies ist neben den eingangs bereits beschriebenen Gründen ein weiterer Grund, warum Umwälzpumpen mit flacher Druck-Massenstrom-Charakteristik zu bevorzugen sind.

Insgesamt gesehen ist hervorzuheben, daß die Erfindung, obgleich sie lediglich im Zusammenhang mit der Messung des Gesamtmassenstroms und der Nutzung eines Sollwert-Bandes des Gesamtmassenstroms erläutert und in den Ansprüchen definiert ist, doch auch die Messung des Druckabfalls über der Umwälzpumpe und die Regelung einer Heizungs- bzw. Kühlvorrichtung bzw. -anlage über ein Sollwert-Band dieses Druckabfalls mitumfaßt, indem die Ansprüche für die Verwendung dieses Druckabfalls über der Umwälzpumpe (des Arbeitsdruckes derselben) entsprechend so zu lesen sind, daß immer geringer Gesamtmassenstrom hohen Arbeitsdruck der Umwälzpumpe und großer Gesamtmassenstrom niedrigen Arbeitsdruck der Umwälzpumpe bedeutet.

Obgleich die Erfindung vorstehend lediglich anhand einiger bevorzugter Ausführungsbeispiele nur beispielhaft erläutert worden ist, ist sie nicht auf diese beschränkt, vielmehr stehen dem Fachmann vielfältige Möglichkeiten offen, sie an die konstruktiven, fertigungstechnischen oder materialmäßigen Gegebenheiten im Herstellerwerk und/oder an die jeweiligen Forderungen des einzelnen Einsatzfalls sowohl planungsmäßiger als auch montagetechnischer Art durch andere Kombination ihrer Merkmale oder deren Austausch gegen gleichwirkende Mittel anzupassen, ohne dadurch den Rahmen der Erfindung zu verlassen.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. zu betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzustellen, Klimazonen zu berücksichtigen und dergleichen. Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer arbeitende Geräte, sogenannte Thermen oder Geyser, mitumfaßt, indem diese sich von den gemeinhin als Kessel bezeichneten Geräten grundsätzlich nur dadurch unterscheiden, daß sie mit praktisch keiner oder allenfalls äußerst geringer Vorlage an Wärmeträgermedium arbeiten und entsprechend praktisch keine bzw. keine nennenswerte Wärmespeicherkapazität aufweisen.

COHAUSZ & FLORACK

0195255

PATENTANWALTSBÜRO

SCHUMANNSTR. 97  D-4000 DÜSSELDORF 1

Telefon: (02 11) 68 33 46          Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

45255EP
17.02.1986

- 89 -

A N S P R Ü C H E

1. Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und der von den Thermostatventilen beeinflußte Gesamtmassenstrom gemessen und entsprechend die Wärme- oder Kältequelle gesteuert wird, dadurch gekennzeichnet, daß für den Gesamtmassenstrom ein Sollwert-Band angelegt ist, innerhalb dessen die zulässigen Werte des Gesamtmassenstroms liegen, daß das gesamte Sollwert-Band mit der Ober- und Untergrenze entsprechend den Anforderungen verschieblich ist, und daß in den Bereichen außerhalb des Sollwert-Bandes der jeweilige Istwert zum Sollwert hin regelbar ist.

0195255

2. Verfahren nach Anspruch 1, <u>dadurch gekennzeichnet, daß</u> eine Abweichung des Gesamtmassenstroms über die obere Grenze des vorgegebenen Sollwert-Bandes hinaus durch Vergrößerung und eine Abweichung des Gesamtmassenstroms unter die untere Grenze des vorgegebenen Sollwert-Bandes durch Verringerung der in den Heizungs- bzw. Kühlmittelvorlauf eingespeisten Wärme- bzw. Kälteleistung eliminiert wird.

3. Verfahren nach Anspruch 1 oder 2, <u>dadurch gekennzeichnet, daß</u> eine Abweichung des Gesamtmassenstroms über die obere Grenze des vorgegebenen Sollwert-Bandes hinaus durch Vergrößerung der in den Heizungs- bzw. Kühlmittelvorlauf eingespeisten Wärme- bzw. Kälteleistung entsprechend dem Maß dieser Abweichung und eine Abweichung des Gesamtmassenstroms unter die untere Grenze des vorgegebenen Sollwert-Bandes durch Verringerung der in den Heizungs- bzw. Kühlmittelvorlauf eingespeisten Wärme- bzw. Kälteleistung entsprechend dem Maß dieser Abweichung eliminiert wird.

4. Verfahren nach Anspruch 3, <u>dadurch gekennzeichnet, daß</u> das Gesamtmaß der Abweichung des Gesamtmassenstroms über die obere Grenze des vorgegebenen Sollwert-Bandes hinaus im Verlauf der Zeit ermittelt und eine Abweichung des Gesamtmassenstroms über die obere Grenze dieses Sollwert-Bandes hinaus durch Vergrößerung der in den Heizungs- bzw. Kühlmittelvorlauf eingespeisten Wärme- bzw. Kälteleistung entsprechend diesem Gesamtmaß der Abweichung des Gesamtmassenstroms eliminiert und/oder das Gesamtmaß der Abweichung des Gesamtmassenstroms unter die untere Grenze des vorgegebenen Sollwert-Bandes im Verlauf der Zeit ermittelt und eine Abweichung des Gesamtmassenstroms unter die untere Grenze dieses Sollwertbandes durch Verringerung der in den Heizungs- bzw. Kühlmittelvorlauf eingespeisten Wärme- bzw. Kälteleistung entsprechend diesem Gesamtmaß der Abweichung des Gesamtmassenstroms eliminiert wird.

5. Verfahren nach Anspruch 3 oder 4, dadurch gekennzeichnet, daß das Maß der zeitlichen Änderung einer Abweichung des Gesamtmassenstroms über die obere Grenze des vorgegebenen Soll-wert-Bandes hinaus und/oder der zeitlichen Änderung dieses Maßes zeitlicher Änderung der Abweichung des Gesamtmassenstroms ermittelt und diese Abweichung des Gesamtmassenstroms durch Vergrößerung der in den Heizungs- bzw. Kühlmittelvorlauf eingespeisten Wärme- bzw. Kälteleistung entsprechend diesem Maß der zeitlichen Änderung der Abweichung des Gesamtmassenstroms bzw. diesem Maß der zeitlichen Änderung dieses Maßes zeitlicher Änderung der Abweichung des Gesamtmassenstroms eliminiert und/oder das Maß der zeitlichen Änderung einer Abweichung des Gesamtmassenstroms unter die untere Grenze des vorgegebenen Soll-wert-Bandes und/oder der zeitlichen Änderung dieses Maßes zeitlicher Änderung der Abweichung des Gesamtmassenstroms ermittelt und diese Abweichung des Gesamtmassenstroms durch Verringerung der in den Heizungs- bzw. Kühlmittelvorlauf eingespeisten Wärme- bzw. Kälteleistung entsprechend diesem Maß der zeitlichen Änderung der Abweichung des Gesamtmassenstroms bzw. diesem Maß der zeitlichen Änderung dieses Maßes zeitlicher Änderung der Abweichung des Gesamtmassenstroms eliminiert wird.

6. Verfahren nach Anspruch 4 oder 5, dadurch gekennzeichnet, daß das Gesamtmaß des Gesamtmassenstroms und das Gesamtmaß des der oberen oder der unteren Grenze des Sollwert-Bandes entsprechenden Gesamtmassenstroms im Verlauf der Zeit ermittelt und als Maß für die Optimierung der Verstärkung und/oder der Nachstellzeit und/oder der Vorhaltzeit der Eliminierung der Abweichung des Gesamtmassenstroms über die obere bzw. unter die untere Grenze seines Sollwert-Bandes das Verhältnis dieser beiden Gesamtmaße oder dessen Reziprokwert gewählt wird.

7. Verfahren nach einem der Ansprüche 4 bis 6, dadurch gekennzeichnet, daß das Gesamtmaß der Abweichung des Gesamtmassenstroms über die obere oder unter die untere Grenze seines vorgegebenen Sollwert-Bandes und das Gesamtmaß des der Differenz von oberer und unterer Grenze des Sollwert-Bandes entsprechenden Gesamtmassenstroms im Verlauf der Zeit ermittelt und beide Gesamtmaße miteinander addiert und als Maß für die Optimierung der Verstärkung und/oder der Nachstellzeit und/oder der Vorhaltzeit der Eliminierung der Abweichung des Gesamtmassenstroms über die obere bzw. unter die untere Grenze seines Sollwert-Bandes das Verhältnis dieser Summe zum Gesamtmaß des der Differenz von oberer und unterer Grenze des Sollwert-Bandes entsprechenden Gesamtmassenstroms oder dessen Reziprokwert gewählt wird.

8. Verfahren nach Anspruch 6 oder 7, dadurch gekennzeichnet, daß die Verstärkung und/oder die Nachstellzeit und/oder die Vorhaltzeit der Eliminierung der Abweichung des Gesamtmassenstroms über die obere bzw. unter die untere Grenze seines Sollwert-Bandes verändert wird, wenn das Verhältnis der beiden Gesamtmaße einen vorbestimmten Wert überschreitet.

9. Verfahren nach Anspruch 6 oder 7, dadurch gekennzeichnet, daß die Verstärkung und/oder die Nachstellzeit und/oder die Vorhaltzeit der Eliminierung der Abweichung des Gesamtmassenstroms über die obere bzw. unter die untere Grenze seines Sollwert-Bandes so verändert wird, daß das Verhältnis der beiden Gesamtmaße einen vorbestimmten Wert nicht überschreitet.

10. Verfahren nach einem der vorhergehenden Ansprüche, dadurch gekennzeichnet, daß die obere und/oder die untere Grenze des Sollwert-Bandes des Gesamtmassenstroms herstellerseitig leistungsfähigkeitsbedingt und/oder nutzerbedürfnisbezogen gewählt wird.

11. Verfahren nach einem der vorhergehenden Ansprüche, dadurch gekennzeichnet, daß bei Inbetriebnahme des Verfahrens für Heizbetrieb oder für Kühlbetrieb bei voller Öffnung aller Drosseleinrichtungen der Gesamtmassenstrom als maximal möglicher Gesamtmassenstrom (Inbetriebnahmegesamtmassenstrom) ermittelt und der größere Sollwert des Gesamtmassenstroms entsprechend einem Bruchteil dieses maximal möglichen Gesamtmassenstroms und der kleinere Sollwert des Gesamtmassenstroms entsprechend einem im Vergleich zu diesem Bruchteil kleineren oder höchstens gleichen Bruchteil dieses maximal möglichen Gesamtmassenstroms gewählt wird.

12. Verfahren nach einem der vorhergehenden Ansprüche, dadurch gekennzeichnet, daß bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximaler Gesamtmassenstrom (Anfahrgesamtmassenstrom) ermittelt und der größere Sollwert des Gesamtmassenstroms entsprechend einem Bruchteil dieses maximalen Gesamtmassenstroms und der kleinere Sollwert des Gesamtmassenstroms entsprechend einem im Vergleich zu diesem Bruchteil kleineren oder höchstens gleichen Bruchteil dieses maximalen Gesamtmassenstroms gewählt wird.

13. Verfahren nach einem der vorhergehenden Ansprüche, dadurch gekennzeichnet, daß mit abnehmendem Wert der oberen oder unteren Grenze des Sollwert-Bandes die Differenz zwischen diesen beiden Grenzwerten und/oder das Verhälnis derselben zunehmend größer gewählt wird.

14. Verfahren nach einem der vorhergehenden Ansprüche, dadurch gekennzeichnet, daß bei Inbetriebnahme des Verfahrens für Heizbetrieb oder für Kühlbetrieb bei voller Öffnung aller Drosseleinrichtungen der Gesamtmasstenstrom als maximal möglicher Gesamtmassenstrom (Inbetriebnahmegesamtmassenstrom) und bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximal möglicher oder maximaler Gesamtmassenstrom (Anfahrgesamtmassenstrom) ermittelt und bei Auftreten einer Abweichung des maximalen Gesamtmassenstroms (Anfahrgesamtmassenstroms) vom maximal möglichen Gesamtmassenstrom (Inbetriebnahmegesamtmassenstrom) das vorgegebene Sollwert-Band des Gesamtmassenstroms in Abhängigkeit vom Verhältnis von maximalem zu maximal möglichem Gesamtmassenstrom verändert wird.

15. Verfahren nach einem der vorhergehenden Ansprüche, dadurch gekennzeichnet, daß bei Inbetriebnahme des Verfahrens für Heizbetrieb oder für Kühlbetrieb bei voller Öffnung aller Drosseleinrichtungen der Gesamtmassenstrom als maximal möglicher Gesamtmassenstrom (Inbetriebnahmegesamtmassenstrom) und bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximaler Gesamtmassenstrom (Anfahrgesamtmassenstrom) ermittelt und bei Auftreten einer vorbestimmten Abweichung des maximalen Gesamtmassenstroms (Anfahrgesamtmassenstroms) vom maximal möglichen Gesamtmassenstrom (Inbetriebnahmegesamtmassenstrom) diese Unregelmäßigkeit optisch und/oder akustisch wahrnehmbar gemacht wird.

16. Verfahren nach einem der vorhergehenden Ansprüche, dadurch gekennzeichnet, daß bei Fehlen einer Abweichung des Gesamtmassenstroms unter die untere Grenze seines Sollwert-Bandes und/oder bei Fehlen einer Abweichung des Gesamtmassenstroms unter die untere Grenze seines Sollwert-Bandes innerhalb einer vorgegebenen Zeitspanne diese Unregelmäßigkeit optisch und/oder akustisch wahrnehmbar gemacht wird.

17. Verfahren nach einem der vorhergehenden Ansprüche, dadurch gekennzeichnet, daß für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, eine große Bandbreite des Sollwert-Bandes des Gesamtmassenstroms bei niedriger oberer und/oder unterer Grenze desselben vorgegeben wird.

18. Verfahren nach einem der vorhergehenden Ansprüche, dadurch gekennzeichnet, daß für Normalbetrieb, bei dem für alle zu temperierenden Räume eine etwa gleiche Raumtemperatur von für gutes Behaglichkeitsgefühl ausreichender Höhe aufrechtzuerhalten ist, eine mittlere Bandbreite des Sollwert-Bandes des Gesamtmassenstroms bei mittlerer oberer und/oder unterer Grenze desselben vorgegeben wird.

19. Verfahren nach einem der vorhergehenden Ansprüche, dadurch gekennzeichnet, daß für Nachtabsenkungs- bzw. Sparbetrieb, bei dem für alle zu klimatisierenden Räume eine etwa gleiche Raumtemperatur von für Aufenthalt von Menschen, Tieren oder Gütern noch ausreichender Höhe aufrechtzuerhalten ist, eine vergleichsweise geringe Bandbreite des Sollwert-Bandes des Gesamtmassenstroms bei vergleichsweise hoher oberer und/oder unterer Grenze desselben vorgegeben wird.

20. Verfahren nach einem der vorhergehenden Ansprüche für Beheizung von Räumen, dadurch gekennzeichnet, daß für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, eine nur geringfügig über dem Verschwindwert liegende Bandbreite des Sollwert-Bandes des Gesamtmassenstroms bei mit voller Öffnung aller Drosseleinrichtungen bei Inbetriebnahme des Verfahrens als maximal möglicher Gesamtmassenstrom (Inbetriebnahmegesamtmassenstrom) oder bei Aufheizen nach einer Abkühlung als maximal möglicher oder maximaler Gesamt- massenstrom (Anfahrgesamtmassenstrom) gemessenem Gesamtmassen- strom vorgegeben wird.

21. Verfahren nach einem der vorhergehenden Ansprüche, dadurch gekennzeichnet, daß die Bandbreite des Sollwert-Bandes des Gesamtmassenstroms mit ihrem Verschwindwert vorgegeben wird.

22. Verfahren nach einem der vorhergehenden Ansprüche, bei dem die Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung des Gesamtmassenstroms über die obere Grenze seines vorgegebenen Sollwert-Bandes hinaus die Zufuhr von Betriebsenergie zum Wärme- bzw. Kälteerzeuger aufgenommen und bei Auftreten einer Abweichung des Gesamtmassenstroms unter die untere Grenze seines Sollwert-Bandes die Zufuhr von Betriebsenergie zum Wärme- bzw. Kälteerzeuger beendet wird.

23. Verfahren nach einem der vorhergehenden Ansprüche, bei dem die Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung des Gesamtmassenstroms über eine der beiden Grenzen seines vorgegebenen Sollwert-Bandes hinaus das Zeit-Verhältnis der Ein- zur Ausschaltung der Zufuhr von Betriebsenergie zum Wärme- bzw. Kälteerzeuger entsprechend dem Maß der Abweichung des Gesamtmassenstroms über eine der beiden Grenzen seines vorgegebenen Sollwert-Bandes hinaus verändert wird.

24. Verfahren nach Anspruch 23, dadurch gekennzeichnet, daß bei Überschreiten der oberen Grenze des vorgegebenen Sollwert-Bandes des Gesamtmassenstromes das Zeitverhältnis der Einschaltung zur Ausschaltung der Zufuhr von Betriebsenergie zum Wärme- bzw. Kälteerzeuger entsprechend dem Maß der Abweichung des Gesamtmassenstromes erhöht wird und bei Unterschreiten der unteren Grenze des vorgegebenen Sollwert-Bandes des Gesamtmassenstromes das Zeitverhältnis der Ein- zur Ausschaltung der Zufuhr von Betriebsenergie zum Wärme- bzw. Kälteerzeuger entsprechend dem Maß der Abweichung des Gesamtmassenstromes verringert wird.

25. Verfahren nach einem der Ansprüche 1 bis 23, bei dem die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, dadurch gekennzeichnet, daß bei Auftreten einer Abweichung des Gesamtmassenstroms über die obere Grenze seines vorgegebenen Sollwert-Bandes hinaus die Zufuhr von Betriebsenergie zum Wärme- bzw. Kälteerzeuger in Abhängigkeit von dieser Abweichung vergrößert und bei Auftreten einer Abweichung des Gesamtmassenstroms unter die untere Grenze seines vorgegebenen Sollwert-Bandes die Zufuhr von Betriebsenergie zum Wärme- bzw. Kälteerzeuger in Abhängigkeit von dieser Abweichung verringert wird.

26. Verfahren nach einem der vorhergehenden Ansprüche, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, dadurch gekennzeichnet, daß bei Auftreten einer Abweichung des Gesamtmassenstroms über die obere oder unter die untere Grenze seines vorgegebenen Sollwert-Bandes die Zufuhr von Wärme- bzw.Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert wird.

27. Verfahren nach Anspruch 26, dadurch gekennzeichnet, daß der Anteil des vom Wärme- bzw. Kälteerzeuger her in den Heizungs- bzw. Kühlmittelvorlauf eingespeisten Massenstroms am Gesamtmassenstrom bei Auftreten einer Abweichung des Gesamtmassenstroms über die obere Grenze seines vorgegebenen Sollwert-Bandes hinaus vergrößert und bei Auftreten einer Abweichung des Gesamtmassenstroms unter die untere Grenze seines vorgegebenen Sollwert-Bandes verringert wird.

28. Verfahren nach einem der vorhergehenden Ansprüche, dadurch gekennzeichnet, daß über eine vorbestimmte Zeitspanne die Anzahl der im Betrieb auftretenden Abweichungen des Gesamtmassenstroms über die obere und/oder unter die untere Grenze seines Soll-wert-Bandes und/oder die Anzahl der im Betrieb auftretenden Veränderungen in Form von Aufnahmen und/oder Beendigungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung gemessen und entsprechend der Abweichung dieser Anzahl von einer vorgegebenen Zahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung das Sollwert-Band des Gesamtmassenstroms verändert wird.

29. Verfahren nach Anspruch 28, dadurch gekennzeichnet, daß bei Messung einer gegenüber einer vorgegebenen Zahl von Abweichungen des Gesamtmassenstroms über die obere und/oder unter die untere Grenze seines Sollwert-Bandes und/oder einer gegenüber einer vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung größeren Anzahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes des Gesamtmassenstroms in Richtung einer Vergrößerung der Differenz dieser beiden Grenzen verändert und bei Messung einer gegenüber der vorgegebenen Zahl von Abweichungen des Gesamtmassenstroms über die obere und/oder unter die untere Grenze seines Sollwert-Bandes und/oder einer gegenüber der vorgegebenen Zahl von Veränderungen der Zufuhr von Wärme- bzw. Kälteleistung zum im Heizungs- bzw. Kühlmittelvorlauf befindlichen Wärmeträgermedium und/oder von Änderungen der Stellung des das Verhältnis des vom Wärme- bzw. Kälteerzeuger her in den Heizungs- bzw. Kühlmittelvorlauf eingespeisten Massenstroms zum Gesamtmassenstrom des Wärmeträgermediums bestimmenden Organs einer Mehrwege-Mischeinrichtung geringeren Anzahl solcher Abweichungen des Gesamtmassenstroms bzw. Veränderungen dieser Wärme- bzw. Kälteleistungszufuhr bzw. Änderungen der Stellung dieses Organs der Mehrwege-Mischeinrichtung die obere und/oder die untere Grenze des Sollwert-Bandes des Gesamtmassenstroms in Richtung einer Verringerung der Differenz dieser beiden Grenzen verändert wird.

30. Verfahren nach einem der Ansprüche 21 bis 29, dadurch gekennzeichnet, daß für den Beginn einer Abkühlung und/oder für den Beginn einer Erwärmung ein Sollwert-Band des Gesamtmassenstroms mit einer bei vergleichsweise hoher oberer und/oder unterer Grenze desselben nur geringfügig über dem Verschwindwert liegenden Differenz zwischen dieser oberen und unteren Grenze mit einer zeitlichen Toleranzschwelle vorgegeben wird.

31. Verfahren nach einem der vorhergehenden Ansprüche, dadurch gekennzeichnet, daß kontinuierlich oder in vorbestimmten Zeitabständen die Temperatur des Wärmeträgermediums am Eintritt in den Heizungs- bzw. Kühlmittelvorlauf (Vorlauftemperatur) und am Eintritt in den Wärme- bzw. Kälteerzeuger (Rücklauftemperatur) gemessen und die Differenz dieser beiden Messwerte gebildet und gewünschtenfalls optisch und/oder akustisch wahrnehmbar gemacht wird.

32. Verfahren nach Anspruch 31, <u>dadurch gekennzeichnet, daß</u> kontinuierlich oder in vorbestimmten Zeitabständen aus dem Messwert des Gesamtmassenstroms und dem ermittelten Differenzwert von Vorlauf- und Rücklauftemperatur des Wärmeträgermediums ein Messwert der in den Heizungs- bzw. Kühlmittelvorlauf eingespeisten Wärme- bzw. Kälteleistung gebildet und dieser gewünschtenfalls optisch und/oder akustisch wahrnehmbar gemacht wird.

FIG. 1

FIG. 4

0195255

FIG.2

FIG.3